# EUROPEAN PATENT APPLICATION

(11) **EP 1 437 885 A1**
(43) Date of publication of application: **14.07.2004**
(21) Application number: 02767929.9
(22) Date of filing: 10.09.2002
(51) Int. Cl.: H04N 5/225, H04N 5/765, H04N 5/91

(54) **DIGITAL CAMERA SYSTEM, IMAGE STORAGE APPARATUS, AND DIGITAL CAMERA**

(30) Priority: 10.09.2001 JP 2001273621; 14.09.2001 JP 2001279042; 21.12.2001 JP 2001389066; 26.02.2002 JP 2002049499; 19.03.2002 JP 2002075661; 17.04.2002 JP 2002114341
(71) Applicant: Nikon Technologies, Inc., Tokyo 142-0043 (JP); Nikon Technologies, Inc., Shinagawa-ku, Tokyo 142-0043 (JP)
(72) Inventor: TANAKA, Masahide, C/O NIKON CORPORATION, Tokyo 100-8331 (JP); OHMURA, Akira, C/O NIKON TECHNOLOGIES INC., Tokyo 142-0043 (JP); OHTA, Tadashi, C/O NIKON TECHNOLOGIES INC., Tokyo 142-0043 (JP)
(74) Representative: Walaski, Jan Filip
(86) International application number: PCT/JP2002/009210
(87) International publication number: WO 2003/024094

(57) **Abstract**

A digital camera system includes: a digital camera 1 that wirelessly transmits raw data from an image capturing unit 11 and information of the image capturing unit 11; and a server center 2 that receives them via Internet and executes interpolation, white balance adjustment, edge emphasis, subsampling and compression with them. The digital camera 1 generates thumbnail images or small size reproduction images by subsampling the identical raw data and stores them in relation to the raw data which have been transmitted. The digital camera 1 is constituted as a portable telephone integrated digital camera, and the transmission of image and the storage and the display of post-subsampling data are achieved by utilizing the standard functions of the portable telephone.

## Description

### TECHNICAL FIELD

The present invention relates to a technology for transmitting a digital image generated with a digital camera to an outside recipient, a technology for storing the digital image externally and a technology for reproducing the digital image.

### BACKGROUND ART

### - Related Art 1 -

As the number of pixels created in digital cameras has become increasingly large in recent years, greater storage capacity must be assured to store images generated with such digitalcameras. This has lead to greater storage medium costs incurred by the user. While significant progress has been made in the area of the image compression technology adopted to ensure the required storage capacity, the cost of applying the technology in digital cameras has been high. At the same time, the cost of applying the image processing technology to which much research effort has been directed in pursuit of better quality images, too, is high.

Yet another factor that is keeping the production cost of digital cameras at a high level is the circuit mounting technology through which the functions listed above are packaged into compact digital camera units.

The concept of transmitting a captured image to an external server and enabling storage of a new image after verifying that the captured image has been transmitted successfully so as to overcome the limits on storage capacity has been proposed in various forms to date, as well. However, there are still numerous technical challenges, suchasreducing the volume of the data to be transmitted, that need to be met before the technology can be effectively adopted in practical application.

### - Related Art 2 -

In addition, the concept of utilizing the lens performance in a silver halide camera with more versatility by removing the back of the silver halide camera and mounting a digital camera back in its place has been proposed. More specifically, the digital camera back is mounted so as to position an image sensor at the focal plane of the photographic optical system in the silver halide camera or so as to position an image sensor at a secondary focal plane at a reduction image reforming optical system provided rearward relative to the focal plane of the photographic optical system. However, the digital camera back, which only differs structurally from the actual digital camera in that it does not include the photographic lens is not much less expensive. At the same time, the use of such a digital camera back is limited to special cases in which a user wishes to utilize a high-grade single lens reflex camera body and the performance of its set of interchangeable lenses, for instance.

### - Related Art 3 -

Many technological approaches have been proposed with regard to digital cameras and the management of image information obtained through photographing operations performed on a digital camera.

The image information management method proposed to date, in particular, include image information management by a dedicated image storage apparatus, image information management achieved with a management software program by taking the image information into a personal computer and image information management entrusted to an external server by transmitting the image information to the server. However, if the user fails to input image information to the means for management from the digital camera, the image information is likely to become lost instead of being taken under the management of the means for management. In addition, while each storage medium taken out of the digital camera may be stored in a well-organized manner, there is still the risk of the user becoming confused as to exactly where the individual images are stored as the number of storage media increases.

Japanese Laid Open Patent Publication No. 2000-125237 discloses the digital camera described below. Namely, in the digital camera, image data are stored in a memory in correspondence to a specific password. Through this system, the issue of confidentiality protection, i.e., that a party other than the photographer can freely output and reproduce image data stored in the digital camera, is addressed simply by requiring the password.

The applicant of the present invention proposed the following digital camera in Japanese Patent Application No. 2000-255699. VGA image data corresponding to the display resolution at the digital camera are prepared based upon the original image data, and the original image data and the VGA image data are both recorded into a memory card. When displaying a reproduced image with the image data, the VGA image is first displayed at the display device and the original image data are read into the buffer memory while the display of the VGA image is up.

### - Related Art 4 -

Various digital cameras and digital image reproducing apparatuses have been proposed to date.

For instance, the applicant of the present invention proposed the following digital camera in Japanese Patent Application No. 2000-255699. VGA image data corresponding to the display resolution at the digital camera are prepared based upon the original image data, and the original image data and the VGA image data are both recorded into a memory card. When displaying a reproduced image with the image data, the VGA image is first displayed at the display device and the original image data are read into the buffer memory while the display of the VGA image is up.

Furthermore, a so-called electronic zoom has increased the zoom range in digital cameras. With regard to the electronic zoom, Japanese Laid Open Patent Publication No. H 4-373270, Japanese Laid Open Patent Publication No. 2001-45364, Japanese Laid Open Patent Publication No. 2001-111880 and the like have proposed measures to be taken to prevent the resolution from being lowered when an image enlarged through the electronic zoom is displayed.

### DISCLOSURE OF THE INVENTION

A first object of the present invention is to provide a high-performance digital camera at low cost by addressing the problems of related art 1 discussed above.

In order to achieve the first object described above, the present invention provides a digital camera system that wirelessly transmits digital image signals in a temporary storage unit for storing in memory digital image signals provided by an image capturing unit in a digital camera without compressing the digital image signals, and compresses received digital image signals and stores in memory the compressed digital image signals in an image storage apparatus that receives the digital image signals.

By assigning the image compression function normally fulfilled on the digital camera side in the related art to the image storage apparatus side in this manner, the structure of the digital camera side can be simplified to achieve a cost reduction. In addition, since any improvement in the image compression technology can be handled as a functional improvement on the image storage apparatus side, the cost of equipping the digital camera with the improved function does not arise and, at the same time, the improved function can be simply provided as a function of a high speed, high performance computer on the image storage apparatus side, free of any restrictions that would otherwise be imposed when equipping the digital camera with the function. In addition, the function of the digital camera can be upgraded without any hardware modification simply by improving the function on the image storage apparatus side. When an image is transmitted in an uncompressed state, the volume of the data that are transmitted is significant. However, with the great improvement achieved in the digital data communication speed in recent years, even an uncompressed image can now be transmitted at a practically viable speed.

To describe the features characterizing the invention in detail, the image storage apparatus in the digital camera system receives the digital image signal through the Internet. In addition, if the digital image signals transmitted from the digital camera to the image storage apparatus are raw data output from the image capturing unit, most of the image processing function, including the generation of digital image signals corresponding to individual colors by interpolating the raw data, can be fulfilled on the image storage apparatus side. It is to be noted that since information that is inherent to the specific digital camera, such as the filter arrangement at the image capturing unit, is required for the interpolation processing, this information should be transmitted from the digital camera to the image storage apparatus in such a case.

Another specific feature characterizing the present invention is that the image storage apparatus is also assigned to execute white balance adjustment, edge (outline) emphasis, image subsampling and the like. The color balance, the extent of edge emphasis to be achieved, the image size and the like may be specified to the image storage apparatus side executing the processing through an operation performed on the digital camera side.

Yet another specific feature of the present invention is that the digital camera includes a subsampling unit that subsamples digital image signals identical to those stored in the temporary storage unit and that post-subsampling digital image signals having undergone the subsampling process are stored in relation to the digital signal stored at the temporary storage unit. The post-subsampling digital image signals only need to achieve a very small image size, just large enough to be displayed a display unit of the digital camera. Thus, numerous captured images can be reproduced and displayed without having to provide a large-capacity storage medium at the digital camera. Since the post-subsampling digital images each retain a correlation to the actual high-definition image having been transmitted to the image storage apparatus, instructions including a print instruction can be issued from the digital camera side. In addition, if a post-subsampling digital image is deleted at the digital camera, the delete information is transmitted to the image storage apparatus to ensure that the corresponding image is deleted at the image storage apparatus. As a result, the ease of use of having high-definition images stored in memory within the digital camera can be achieved without actually storing the images in the camera.

The present invention is also characterized in that the image storage apparatus stores in memory the received digital image signals in an uncompressed state in correspondence to the compressed image signals so as to provide the uncompressed signals as needed and to convert the signals to image data achieving the correct image size and compression rate for printing. In addition, post-subsampling data with a small image size can be stored in memory in correspondence to the compressed image signals.

The digital camera according to the present invention can be constituted as a portable telephone integrated digital camera in an ideal manner. In such an application, the transmission of image signals to the image storage apparatus, the storage and the display of post-subsampling data with a small image size can be achieved by utilizing the standard functions of the portable telephone, and thus, a portable telephone integrated digital camera having a large number of pixels can be realized simply by adding an image capturing unit having a large number of pixels and a temporary storage unit to the portable telephone.

By providing a forced activation unit that forcibly starts up an image capturing operation and a transmission operation in the portable telephone integrated digital camera, it becomes possible to obtain a photograph of a thief or the like as evidence and thus, the digital camera can be used as a means for theft prevention, since the culprit is most likely to be facing the lens to operate the portable telephone. Such forced activation may be effected by calling the portable telephone integrated digital camera from elsewhere. Alternatively, the forced activation function may be set by calling the portable telephone integrated digital camera from the outside so that the forced activation automatically occurs when the culprit operates a given key such as a dial key.

When the digital camera is constituted as a portable telephone integrated digital camera, priority should be given to the telephone function for emergency, and accordingly, if the mode is switched to a regular telephone mode during a digital image signal transmission, the transmission should be halted.

The digital camera according to the present invention achieved as a collapsible portable telephone integrated digital camera can be folded by setting back-to-back a first body at which an image capturing lens is disposed and a second body at which a vertical display unit capable of displaying an image captured through the image capturing lens and characters is disposed. The orientations of the display unit to function as a viewfinder and the photographic lens are the same as those in a regular digital camera in the folded state. It is to be noted that when the digital camera is folded by settingthefirstandsecondbodiesback-to-back, the character display at the display unit can be rotated by 90° to achieve a horizontal display.

A second object of the present invention is to make it possible to obtain and store in memory a high-quality digital image at low cost by addressing the problems of related art 2 discussed above.

In order to achieve the second object described above, a digital camera back according to the present invention, comprising a temporary storage unit in which digital image signals output from an image sensor that detects a subject image formed through a photographic lens of a silver halide camera are temporarily stored, a wireless transmission control unit that enables a wireless transmission of the digital image signals in the temporary storage unit to a specific image storage apparatus without compressing the digital image signals and a signal exchange unit that engages in an exchange of digital signals with the silver halide camera, is mounted in place of the back of the silver halide camera. By mounting the digital camera back at the silver halide camera, the lens performance needed to form an image is achieved on the silver halide camera side and image processing such as compression is assigned to the image storage apparatus side. As a result, the camera back can be achieved with a simple structure that only includes the image sensor and its peripheral devices and ultimately, the cost of converting the silver halide camera to a digital camera by adding the camera back is reduced.

The structure of the digital camera back can be further simplified by transferring digital signals to a portable telephone and wirelessly transmitting the digital signals to the specific image storage apparatus with the function of the portable telephone instead of providing a wireless communication unit at the digital camera back itself. It is to be noted that a short-range radio wave communication device or an infrared communication device should be utilized to wirelessly transfer the digital signals to the portable telephone. However, the cost can be minimized by transferring the signals through a cable. In addition, it is desirable to transmit the digital signals to the image storage apparatus via the Internet.

The present invention is further characterized in that raw data output from the image sensor are directly transmitted to the image storage apparatus that is assigned to execute processing for creating color data such as R, G and B data through interpolation as well. By adopting this feature, it is possible to provide the digital camera back with the simplest possible structure. It is to be noted that in order to enable the image storage apparatus to execute image processing for various types of digital camera backs, information inherent to each digital camera back required for the raw data interpolation, e.g., the filter arrangement at the image sensor, should be transmitted to the image storage apparatus together with the raw data.

The present invention is further characterized in that color balance information for a digital image is set through a digital camera back operation and that the color balance information having been set is wirelessly transmitted to the image storage apparatus together with the digital image signal. Likewise, edge emphasis level information, image size information, compression rate information and the like set for the digital image at the digital camera back, too, should be wirelessly transmitted to the image storage apparatus as necessary, together with the digital image signals. In this case, as long as the digital camera back includes a setting unit, all the processing executed based upon the settings can be executed at the image storage apparatus.

Another feature that characterizes the present invention is that information related to the color temperature of the subject obtained via a colorimetric unit or the like provided at the silver halide camera is received and the information thus received is wirelessly transmitted to the image storage apparatus together with the digital image signals. This feature allows the image storage apparatus to obtain information needed to execute accurate white balance adjustment.

Image files created in digital cameras are standardized for universal compatibility. In order to enable the image storage apparatus to create such universal image files, the present invention is characterized in that information needed to create universal image files is wirelessly transmitted together with the digital image signals to the image storage apparatus.

Another feature characterizing the present invention is that digital image signals having been processed at the image storage apparatus can be received for image reproduction through an operation executed at the digital camera back. The digital image signals received at the digital camera back achieve a smaller image size compared to the original digital image signal having been transmitted to the image storage apparatus and thus, are more suited for display at the digital camera back.

The digital camera back according to the present invention is further characterized in that it includes a subsampling unit that subsamples digital image signals identical to those stored in the temporary storage unit and a post-subsampling data storage unit that stores in memory post-subsampling digital image signals having undergone the subsampling process in relation to the digital signals stored in the temporary storage unit. This feature makes it possible to hold the image having been captured for reproduction and display in a small image size at the digital camera back. In addition, correct instructions such as a receive instruction, a delete instruction and a print instruction can be issued for the high-quality image signals having been transmitted.

Some of the features described above constitute characteristics of the present invention that can be effectively adopted as features of a full digital camera as well as features of a digital camera back. The structure assumed on the image storage apparatus side where data having been transmitted are received also constitutes a feature of the present invention.

A third object of the present invention is to provide a high-performance digital camera with no restrictions imposed with regard to the circuit mounting technology and the like, by addressing the problems of related art 1 discussed above.

In order to achieve the third object described above, the present invention provides a digital camera system achieved by combining a digital camera or a digital camera back with an image storage apparatus. The digital camera or the digital camera back according to the present invention includes a storage unit in which raw data provided by an image capturing unit are stored, and the raw data stored in the storage unit are output to the image storage apparatus through wireless communication or via a digital signal transmission unit constituted of a wire cable or the like. Alternatively, the storage unit may be a detachable storage medium which, after it is taken out of the digital camera or the digital camera back, is loaded into the image storage apparatus. The raw data input to the image storage apparatus as described above are then converted to digital image signals through interpolation executed at the image storage apparatus, and the digital image signals are compressed at a compression unit and are stored at a storage unit.

In the structure described above, functions normally achieved in the circuits within the digital camera, such as raw data interpolation and compression, are entrusted to and controlled at the image storage apparatus side. As a result, the digital camera can be provided without having to take into consideration circuit design requirements, circuit mounting requirements, miniaturization requirements and cost reduction requirements that would need to be taken into account if those functions were to be realized in the digital camera. In addition, since the raw data cannot be converted to a visual image without undergoing processing executed by utilizing these functions at the image storage apparatus, it is ensured that the image is stored at the image storage apparatus without fail and thus it never goes missing.

A specific feature of the present invention is that the image storage apparatus includes a plurality of interpolation units. This means that the image storage apparatus is already equipped with interpolation units with different interpolating functions needed to support the image capturing devices at individual "cameras". The image storage apparatus then selects the matching interpolation unit for a specific digital camera from the plurality of interpolation units and executes interpolation by identifying the digital camera or by using information on the digital camera input thereto. With the information needed to execute interpolation input together with the raw data from each digital camera, the image storage apparatus is enabled to support a plurality of cameras.

Yet another specific feature of the present invention is that the image storage apparatus includes a white balance adjustment unit, an edge emphasis unit, an image subsampling unit and the like. While the functions of these units, too, are normally achieved in the circuits within the digital camera, they are entrusted to and controlled at the image storage apparatus according to the present invention.

A specific feature characterizing the image storage apparatus according to the present invention is that an input unit to which the raw data from the image capturing unit of the digital camera are input is constituted as a loading unit at which a storage medium having the raw data stored therein is loaded.

A further specific feature of the image storage apparatus according to the present invention is that it includes a display unit at which an image constituted of digital image signals is displayed and an instruction unit through which an instruction is issued as to whether or not the digital image signals on display are to be stored. At the storage unit, digital image signals having been specified by the instruction unit are compressed and stored. In this case, the image can be stored whenever necessary after the image is checked on a large screen of the image storage apparatus.

Another specific feature of the image storage apparatus according to the present invention is that when the image storage apparatus includes a plurality of interpolation units, the storage unit stores the image signals regardless of which interpolation unit is selected to execute the interpolation. Thus, the image storage apparatus is enabled to store and manage image data uniformly even though the image data are input from various digital cameras.

The present invention is characterized in that the functions of the image storage apparatuses are provided in a program which realizes the functions on a computer or in a storage medium having such a program stored therein. By adopting the present invention in this mode, the digital camera system can be provided as a product comprising a "camera" having an optical system, an image sensor and hardware constituting a large-capacity memory, and computer software. The product offers benefits to the user in that the functions can be upgraded simply as the computer software is upgraded without the user having to replace the "camera".

The digital camera according to the present invention has a specific feature in that information needed to interpolate raw data and information needed to create a universal image file are input to together with the raw data to the image storage apparatus. This feature enables the image storage apparatus to execute correct interpolation and create a universal image file in an appropriate manner.

Another specific feature of the digital camera according to the present invention is that the area of the storage unit at the digital camera, which corresponds to the raw data having been output from an output unit, is cleared as an available storage area. With this feature, a sufficient storage capacity is assured for subsequent photographing operations.

The digital camera back according to the present invention, comprising an image sensor that detects a subject image formed at a photographic lens of a silver halide camera, a storage unit that stores in memory raw data output from the image sensor in a volume corresponding to a plurality of images, an output unit that outputs the raw data to a specific image storage apparatus from the storage unit and a signal exchange unit that engages in a digital signal exchange with the silver halide camera, is mounted in place of the back of the silver halide camera.

Another digital camera back according to the present invention, comprising an image sensor that detects a subject image formed at a photographic lens of a silver halide camera, a loading unit at which a detachable storage medium is loaded, a storage control unit that implements control to store raw data output from the image sensor into the storage medium via the loading unit and a signal exchange unit that engages in a digital signal exchange with the silver halide camera, is mounted in place of the back of the silver halide camera.

The advantages of the present invention explained earlier are realized when the invention is adopted in a digital camera back assuming either of the structures described above.

A specific feature characterizing in the digital camera back according to the present invention is that information related to the color temperature of the subject from the silver halide camera, which is communicated via the signal exchange unit, is output together with the raw data. Alternatively, the information may be stored in a detachable storage medium and input to the image storage apparatus. In either case, the image storage apparatus is enabled to execute image processing with an even higher level of effectiveness.

Another digital camera achieved in the present invention comprises an encryption unit that encrypts image data provided from an image capturing unit and an output unit that outputs the encrypted image data together with an identification signal to be used to identify the digital camera. The image storage apparatus utilized in conjunction with this digital camera comprises an input unit to which the encrypted image is input, a decryption unit that decrypts the input image by using a matching algorithm based upon information input thereto and a storage unit that stores the decrypted image. In a system achieved by using the digital camera and the image storage apparatus described above, an image can be transferred from the digital camera to the image storage apparatus while assuring a high level of security.

A fourth object of the present invention is to solve problems related to the management of image information constituting an image photographed with a digital camera and to improve the image photographing performance and the image reproduction performance in the digital camera, by addressing the problems of related art 3 discussed earlier.

In order to achieve the fourth object described above, the present invention provides a digital camera comprising a storage control unit that implements control to store first image data which are based upon an output from an image capturing unit into a detachable storage medium, an internal storage unit in which second image data for display are stored based upon the output from the image capturing unit and a reproduction control unit that implements control to reproduce the second image data stored in the internal storage unit at an image display unit. The internal storage unit holds second image data corresponding to the first image data stored in the detachable storage medium even after it has been taken out of the digital camera.

The structure described above makes it possible to reproduce image data at the digital camera even after the corresponding first image data have been taken out of the digital camera and thus to manage image information in such a manner that at least unsliced image information of an image photographed with the digital camera can be reproduced at the digital camera.

A specific feature characterizing the present invention is that the image capturing unit outputs image information with an information volume exceeding the display capability of the image display unit. The first image data have an information volume exceeding the display capability of the image display unit, whereas the information volume of the second image data corresponds to the display capability of the image display unit. Thus, it is possible to output an image with an information volume large enough for use to the outside. In addition, an image with a sufficient information volume for reproduction at the digital camera can be held within the digital camera. The size of the display unit at the digital camera is bound to be limited in a compact digital camera. By limiting the information volume of the second image data so as to correspond to the display capability of the image display unit, numerous images can be held in the internal storage unit. Even smoother management of the first image data and the second image data can be achieved by individually storing thumbnail image data in both the detachable storage medium and the internal storage unit in correspondence to the first image data and when the second image data respectively.

Another specific feature characterizing the present invention is that the first image data are raw data output from the image capturing unit. when the first image data are constituted of raw data, the digital camera does not need to be equipped with processing functions for interpolating and compressing the first image data which are to be exclusively utilized outside the digital camera, and thus, the structure of the digital camera can be simplified without compromising in any way whatsoever the functions required of a digital camera. Outputting raw data as the first image data to the outside is equally advantageous when transmitting, either through wired communication or wireless communication, the image data to the outside as well as when using a detachable storage medium having the image data stored therein by removing the storage medium from the digital camera as described earlier.

As another feature of the present invention, a digital camera that includes a display data creation unit that creates display data to be used for display at an image display unit in correspondence to all image data output to the outside, a storage unit that stores in memory the display data and a reproduction control unit that implements control to reproduce the display data stored in the storage unit at the image display unit is provided. The storage unit in the digital camera holds the display data corresponding to all the image data output to the outside.

By adopting the feature described above, any image can be reproduced at least at the display unit of the digital camera as long as the image has been photographed with the digital camera, and therefore, the digital camera itself is allowed to function as an open database.

Another feature characterizing the present invention is that identification information used to identify a specific detachable storage medium in which image data are stored is stored in the internal storage unit and that the identification information is held even after the detachable storage medium is taken out of the digital camera. This feature facilitates, a search of the detachable storage medium taken out of the digital camera after storing therein the image data.

More specifically, a digital camera comprising a storage control unit that implements control to store first image data which are based upon an output from an image capturing unit into a detachable storage medium, an internal storage unit in which second image data for display at an image display unit are stored based upon the output from the image capturing unit and a reproduction control unit that implements control to reproduce the second image data stored in the internal storage unit at the image display unit is provided. In this digital camera, information used to identify the detachable storage medium having stored therein the first image data corresponding to the second image data is stored in memory in the internal storage unit in relation to the second image data. As a result, the detachable storagemediumhaving stored therein the first image corresponding to a given set of second image data reproduced at the digital camera can be ascertained with ease and the search for the detachable storage medium having been taken out of the digital camera can be conducted with greater ease.

As another feature characterizing the present invention, an image reproduction apparatus comprising a reproduction control unit that implements control to reproduce at an image display unit image data stored in a detachable storage medium loaded at a loading unit thereof and an internal storage unit in which information on the image data used for reproduction and identification information used to identify the detachable storage medium having stored therein the image data are stored in relation to each other, is provided. The internal storage unit holds the information on the image data used for reproduction and the identification information even after the detachable storage medium is removed from the loading unit. Such an image reproduction apparatus may be realized as part of a digital camera. In this case, once the detachable storage medium is loaded and an image therein is reproduced at the image reproduction apparatus, the detachable storage medium having stored therein the image data can be searched with ease even after it is taken out of the reproduction device.

As another feature characterizing the present invention, a digital camera that includes a display data creation unit that creates display data for display at an image display unit in correspondence to image data output to the outside, a storage unit in which the display data are stored and a reproduction control unit that determines whether a reproduction of the display data stored in the storage unit is to be allowed or disallowed at the image display unit is provided. More specifically, condition information is stored in memory in correspondence to individual sets of display data, and the reproduction control unit enables reproduction of display data matching specific condition information.

As yet another feature of the present invention, a digital camera comprising a storage control unit that implements control to store first image data which are based upon an output from an image capturing unit into a detachable storage medium, an internal storage unit in which second image data for display at an image display unit are stored based upon the output from the image capturing unit and a reproduction control unit that enables reproduction of second image data at the image display unit if image data corresponding to the second image data are present in a currently loaded detachable storage medium, is provided.

When the feature described above is adopted, the display of display data matching a specific condition such as a password is enabled or the reproduction of display data is enabled if the detachable storage medium having stored therein the corresponding image data is loaded into the digital camera for reproduction. Accordingly, even though the display data corresponding to the image data having been output to the outside are retained in the digital camera, the security of the display data is assured.

As another feature characterizing the present invention, a digital camera comprising a storage control unit that implements control to store raw data provided by an image capturing unit into a detachable storage medium, an internal storage unit in which display data for display at an image display unit are stored based upon an output from the image capturing unit, a reproduction control unit that implements control to reproduce the display data stored in the internal storage unit at the image display unit and a judging unit that judges whether or not raw data corresponding to the display data having been reproduced are present, is provided. More specifically, the results of the judgment made by the judging unit are displayed in relation to reproduction of the display image. As a result, the user can be warned that image data are still stored in the detachable storage medium as raw data without having undergone "development" processing such as interpolation/compression and thus prompted to "develop" the image data.

As a further feature characterizing the present invention, an image reproduction apparatus comprising a display data creation unit that creates display data for display at an image display unit based upon raw data which are provided from an image capturing unit of a digital camera and are stored in a detachable storage medium and a reproduction control unit that implements control to reproduce the display data at the image display unit, is provided. In the image reproduction apparatus, identification information used to identify display data having been created and identification information used to identify a detachable storage medium having stored therein the corresponding raw data may be stored in relation to each other. It is to be noted that such an image reproduction apparatus may be realized as part of a digital camera. In this application, even when a detachable storage medium having stored therein image data that have not undergone the "development" processing such as interpolation/compression and thus are still in a raw data state, is loaded, the image data can be reproduced by the image reproduction apparatus.

A fifth object of the present invention is to provide a high-performance digital camera without any restrictions imposed with regard to the circuit mounting technology that must be adopted in the digital camera or any restrictions with regard to an outside recipient to which image data are to be output, by addressing the problems of related art 1 discussed earlier.

In order to achieve the fifth object, the present invention provides a digital camera that outputs a processing program to be used to process raw data together with the raw data provided from an image capturing unit. The output raw data are processed externally by using the output processing program. In the structure described above, functions normally achieved in the circuits within the digital camera, such as raw data interpolation and compression, are entrusted to and controlled at the external apparatus. As a result, the digital camera can be achieved without having to take into consideration circuit design requirements, circuit mounting requirements, miniaturization requirements and cost reduction requirements that would need to be taken into account if those functions were to be realized in the digital camera. In addition, since the program needed to execute the processing is also output, the raw data can be output to any external recipient. It is to be noted that once the processing program is output to a given recipient, the processing program does not need to be output to the same recipient again.

The present invention also provides a digital camera comprising a loading unit at which a detachable storage medium is loaded and a storage control unit that implements control to store raw data provided from an image capturing unit and a processing program to be used to process the raw data into the storage medium via the loading unit. The digital camera allows the raw data and the raw data processing program to be transferred to an outside apparatus simply by loading and unloading the storage medium.

The present invention further provides a digital camera having a file creation unit that creates a file containing both raw data provided by an image capturing unit and a processing program to be used to process the raw data. Since each set of raw data generated in this digital camera is coupled with the corresponding processing program, raw data can be processed in units of individual files regardless of the forms in which the raw data files are transferred and also regardless of which recipient the raw data files are transferred to.

Specific examples of the processing program according to the present invention include an interpolation program in conformance to which raw data are intercalated to generate digital image signals, a decompression program used to decompress data having undergone a lossless compression process and a digital image file creation program.

As another feature characterizing the present invention, a digital image file generation apparatus comprising an input unit to which image data and image management information are input from a digital camera, a file creation unit that creates a digital data file by incorporating file information and a data providing unit that provides the input image data to the file creation unit as digital data and provides the input management information as file information to the file creation unit is provided. The management information may be, for instance, photographing date information indicating the date on which the image data were photographed, and a date indicated by the photographing date information input from the digital camera by adopting the feature described above is then used as a file creation date at the file creation unit.

Under normal circumstances, the file creation unit assigns a date on which image information is input and a file is actually created as the file creation date. Accordingly, if the image is searched by using the file creation date as a key through a regular file search system, a file is extracted based upon the actual file creation date. However, it is much easier to search for an image file by the date on which the image was photographed rather than by the date on which the image was input. By adopting the feature characterizing the present invention described above, a photographing-date-based search can be conducted through a regular file search system.

Other examples of the management information input from the digital camera include image photographer information and title information indicating a title entered by the photographer at the digital camera, and they can be utilized respectively as file creator information and a file name at the file creation unit. The file creator information, the file name and the like thus used at the file creation unit, too, can be utilized as effective keys when searching for the image file through a standard file search system.

A sixth object of the present invention is to improve the image photographing performance and the image reproduction performance in a digital camera by bearing in mind that photographed images are often utilized outside.

In order to achieve the sixth object, the present invention provides a digital camera comprising a display data creation unit that creates display data in correspondence to image data output to the outside and a processing unit that reflects on corresponding image data output to the outside an operation executed at an operating unit on display data displayed at a display unit. In correspondence to a specific operation at the operating unit, the processing unit executes processing such as processing image data to be output to the outside or outputting information needed to process the image data to the outside in relation to the image data. Specific examples of the operation executed at the operating unit include issuing instructions for editing the image data and for recording the image data.

As described above, display data are created in correspondence to image data to be output to the outside, and the display data thus created are then displayed at the display unit. This eliminates the need to process the image data into a display-enabled form and, at the same time, an operation performed which regard to the display data can be reflected on the image data.

To describe the present invention in more specific terms, the digital camera includes a storage unit in which the display data are stored even after the image data are output to the outside so as to enable a reproduction based upon the display data in the storage unit.

Another specific feature of the present invention is that the image data output to the outside are raw data provided from an image capturing unit and that an operation executed at the operating unit can be reflected through an operation executed for the display data without having to interpolate or compress the raw data.

The image data may be output to the outside by storing the image data in a detachable storage medium loaded at a loading unit and removing the detachable storage medium from the digital camera.

As a specific feature of the present invention, the display data creation unit modifies display data based upon an operation executed at the operating unit for the display data displayed at the display unit. In this case, a modification similar to that reflected on the image data output to the outside through an operation of the operating unit can also be made on the display data.

As another feature characterizing the present invention, a digital camera comprising an instruction unit that issues an instruction with regard to image data to be output to the outside and a display data creation unit that creates display data for display at an image display unit while preventing any degradation of the image quality attributable to the instruction issued through the instruction unit with regard to the image data to be output to the outside, is provided. This feature makes it possible to maintain the image quality of the display data at a high level even when the image quality of the image data has become poor.

Specific examples of image degradation attributable to an instruction issued at the instruction unit include the following two. Namely, when an instruction is issued to use only a portion of the image area constituted of the image data through electronic zoom or trim, or when an instruction is issued to reduce a number of pixels to be used to record the image data through subsampling or the like, the image quality becomes lower if the image obtained in conformance to such an instruction is directly reproduced in a specific size. Display data are generated specifically by reducing the number of pixels constituting the image data through subsampling or the like. In the specific feature of the present invention, the display data are created by lessening the extent to which the number of pixels constituting the image data is reduced (or without reducing the number of pixels) if an instruction to reduce the number of pixels of the image data has been issued through the instruction unit.

The features of the present invention may be effectively adopted in a digital image reproduction apparatus and, in particular, a hand-held type digital image reproduction apparatus having a small display unit, as well as in a digital camera.

### BRIEF DESCRIPTION OF THE DRAWINGS

FIG. 1 is a block diagram of a first embodiment of the present invention;
FIG. 2 is a chart of the structure of the data in an image folder;
FIG. 3 is an external view of a digital camera integrated portable telephone achieved in the first embodiment;
FIG. 4 presents a main flowchart of the processing executed in the digital camera integrated portable telephone;
FIG. 5 presents a detailed flowchart of the registration/initialization processing;
FIG. 6 presents a detailed flowchart of the photographing test;
FIG. 7 presents a detailed flowchart of the user registration processing;
FIG. 8 presents a flowchart of the operation executed when the photographing mode is selected;
FIG. 9 presents a flowchart of the operation executed when a shutter release interrupt is applied;
FIG. 10 presents a flowchart of the operation executed when the reproduction mode is selected;
FIG. 11 presents a flowchart of the operation executed when a thumbnail specification interrupt is applied;
FIG. 12 presents a flowchart of the operation executed when a call is received at the digital camera integrated portable telephone;
FIG. 13 presents a flowchart of the operation executed when a connection OFF interrupt is applied to cut off the connection with the server center;
FIG. 14 presents a main flowchart of the processing executed at the server center;
FIG. 15 presents a flowchart of the operation executed when the connection with the server center 2 is established;
FIG. 16 is a block diagram of a second embodiment of the present invention;
FIG. 17 is a block diagram of a third embodiment of the present invention;
FIG. 18 is a chart of the structure of the data in the image folder that may be adopted in another embodiment;
FIG. 19 is a block diagram of a fourth embodiment of the present invention;
FIG. 20 is a block diagram of a fifth embodiment of the present invention;
FIG. 21 is a block diagram of a sixth embodiment of the present invention;
FIG. 22 is a block diagram of a seventh embodiment of the present invention;
FIG. 23 presents a flowchart of the image storage flow at the personal computer in the fourth through seventh embodiments;
FIG. 24 is a block diagram of the essential portion of an eighth embodiment of the present invention;
FIG. 25 presents a flowchart of the shutter release interrupt in the first embodiment modified by adopting the eighth embodiment;
FIG. 26 presents a main flowchart of the processing executed in the fifth embodiment modified by adopting the eighth embodiment;
FIG. 27 presents a flowchart of the shutter release interrupt in the fifth embodiment modified by adopting another mode of the eighth embodiment;
FIG. 28 presents a flowchart of the processing executed in conformance to the file generation program in the eighth embodiment;
FIG. 29 is a block diagram of a ninth embodiment of the present invention;
FIG. 30 presents a flowchart of the reproduction mode interrupt flow in the ninth embodiment;
FIG. 31 is a chart of the data structure adopted in the ninth embodiment, indicating the storage locations of specific types of data;
FIG. 32 is a detailed flowchart of the reproduction-enabled thumbnail display processing in FIG. 30;
FIG. 33 is a detailed flowchart of the large-capacity storage unit add processing in FIG. 30;
FIG. 34 presents a flowchart of the operation executed when a shutter release interrupt is applied in a tenth embodiment;
FIG. 35 presents a flowchart of the operation executed when an edit interrupt is applied in the tenth embodiment; and
FIG. 36 presents a detailed flowchart of the display data/thumbnail generation processing.

Specific features characterizing the present invention are described with further clarity in the explanation of the embodiments of the present invention given below in reference to the drawings.

### BEST MODE FOR CARRYING OUT THE INVENTION

The following is an explanation of the embodiments of the present invention.

### (First Embodiment)

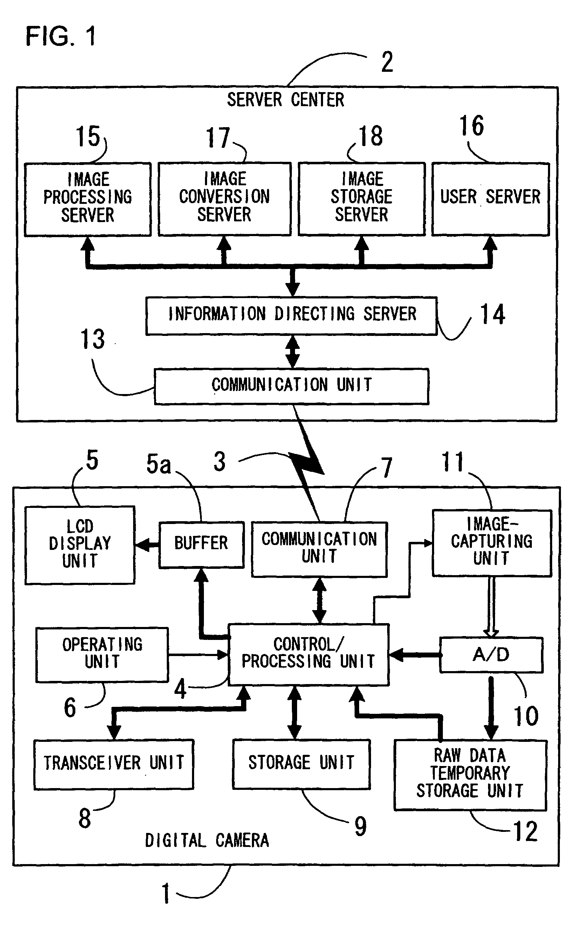

FIG. 1 is a block diagram of a digital camera system achieved in the first embodiment of the present invention. A digital camera, which is realized as a digital camera integrated portable telephone 1, is built into the portable telephone (cellular phone) as an integrated part thereof. The essential functions of the digital camera are provided at a server center 2 which functions as an image storage apparatus, and as the digital camera integrated portable telephone 1 and the server center 2 work together through a wireless communication 3 achieved via the Internet or the like by utilizing a public communication line, the functions of the digital camera are fulfilled. In more specific terms, the wireless communication 3 may be executed so as to establish a connection with the server center 2 via the Internet by first connecting to a provider from a portable telephone line, to establish the connection with the server center 2 via the Internet by first connecting to a provider's LAN through short-distance wireless communication or to establish a connection with a dedicated line at the server center through wireless communication.

The digital camera integrated portable telephone 1 is controlled by a control / processing unit 4. When making a normal telephone call, a telephone mode is selected at an operating unit 6 by checking the menu displayed at an LCD display unit 5 and the desired number is dialed on a 10-key pad provided at the operating unit 6. After verifying the dialed number, the user performs a transmission operation at the operating unit 6. In response, a call signal is transmitted from a communication unit 7, and once the call is connected, the user can conduct a telephone conversation by using a transceiver unit (telephone transceiver unit or telephone transmitter / receiver unit) 8. It is to be noted that if the telephone number of the other party is already stored in the directory at a storage unit 9, the call can be originated simply by selecting the telephone number from the menu on display at the LCD display unit 5 with the operating unit. A buffer 5a holds display data provided by the control / processing unit 4. Until the control / processing unit 4 overwrites the display data in the buffer 5a, the same display is sustained at the LCD display unit 5.

When using the digital camera integrated portable telephone 1 as a digital camera, either a photographing mode or a reproduction mode is selected with the operating unit 6 by checking the menu displayed at the LCD display unit 5. At this time, a call is automatically originated to establish a connection with the server center 2 with which the user has signed up in advance. Subsequently, as long as the digital camera integrated portable telephone 1 is utilized as a digital camera, the digital camera integrated portable telephone 1 and the server center 2 remain in a connected state at all times.

If the photographing mode is selected, optical images repeatedly obtained through a lens (not shown) are converted to electronic image signals by an image capturing unit 11 having an image sensor with approximately 3 million pixels. Until the shutter is released, the electronic image signals are culled (subsampled) and the post-cull (post-subsampling) image signals are read out from the image capturing unit 11 through control implemented by the control / processing unit 4 and the post-cull image signals thus read out are digitized to post-cull image data at an A/D conversion unit 10. The post-cull image data are provided to the control / processing unit 4 where the post-cull image data are converted to display image data which are then provided to the buffer 5a. Since the image capturing unit 11 captures images repeatedly, post-cull image data, too, are repeatedly provided to the control / processing unit 4. Thus the display image data in the buffer 5a are sequentially overwritten with the most recent display image data. The images repeatedly captured by the image capturing unit 11 are, therefore, monitored as dynamic images at the LCD display unit 5. The LCD display unit 5 functions as a viewfinder when the digital camera integrated portable telephone 1 is utilized as a digital camera.

When the user presses a key assigned to function as a shutter release button at the operating unit 6, a full read, in which image data are read from all the pixels at the image capturing unit 11, is executed through control implemented by the control / processing unit 4 and the image signals thus read out are digitized by the A/D conversion unit 10. Since these digital data are unprocessed data directly output from the image sensor at the image capturing unit 11, they are referred to as raw data. The raw data from the A/D conversion unit 10 are directly provided to a raw data temporary storage unit 12 for temporary storage without undergoing processing such as interpolation and white balance adjustment. The raw data temporary storage unit 12, which is a nonvolatile memory, holds the data in storage even when the power to the digital camera integrated portable telephone 1 is turned off. Once the raw data are completely stored, the operation at the image capturing unit 11 returns to the culled read and dynamic image monitoring at the LCD display unit 5 resumes.

It is to be noted that the raw data temporary storage unit 12 has a capacity for storing 10 images, and thus, up to 10 images can be saved in the raw data temporary storage unit 12 in response to shutter release button operations. However, the digital camera integrated portable telephone 1 is connected with the server center 2 at all times and thus, a set of raw data saved in the raw data temporary storage unit 12 in response to a shutter release button operation is immediately transmitted from the control / processing unit 4 to a communication unit 13 at the server center 2 via the communication unit 7 without undergoing processing such as interpolation and white balance adjustment and compression processing. When the transmission speed is approximately 20 Mbps, the transmission of raw data constituted of 3 million pixels is completed within a few seconds. Once the transmission is completed and the transmission completion is verified, the transmitted raw data are erased from the raw data temporary storage unit 12 or are assigned as overwrite permitted data. Thus, as long as the connection between the digital camera integrated portable telephone 1 and the server center 2 is sustained, a plurality of untransmitted raw data are rarely saved together in the raw data a temporary storage unit.

The raw data temporary storage unit has the capacity for storing up to 10 images to support a continuous shooting operation and to assure an extra storage capacity in the event that the constant connection with the server center cannot be sustained. For instance, during a continuous shooting operation, in which a subsequent image is captured before the transmission of the preceding image is completed, a plurality of sets of raw data may be saved together in the raw data temporary storage unit 12 at a given time point. However, as long as the raw data are saved in the raw data temporary storage unit 12 and the constant connection is sustained, the raw data are transmitted one set after another, and if the shutter is not released for some time during the continuous shooting operation, the raw data saved in the raw data temporary storage unit 12 are continuously transmitted without pause, thereby creating more available storage area in the raw data temporary storage unit 12. In addition, if the constant connection has failed, a raw data transmission automatically starts as soon as the constant connection is restored. In either case, the automatic transmission is continuously executed until the completion of the transmission of all the raw data having been saved in the raw data temporary storage unit 12 is verified and the storage area for saving new data in the raw data temporary storage unit 12 is completely available.

The raw data transmitted to the server center 2 are transferred from the communication unit 13 to an image processing server 15 via an information directing server 14. When the connection between the digital camera integrated portable telephone 1 and the server center 2 is established, information indicating the owner of the digital camera integrated portable telephone 1 and the specific model type of the digital camera integrated portable telephone 1 is transmitted to the server center 2 and is recorded at a user server 16 as connection record information. Based upon the record at the user server 16, the image processing server 15 obtains information indicating the color filter arrangement at the image sensor in the image capturing unit 11 and the like and generates image signals corresponding to different colors such as R, G and B by executing interpolation processing matching the specific type of image sensor used at the image capturing unit 11 on the raw data transferred thereto. The image processing server 15 also executes necessary image processing such as white balance adjustment and edge emphasis processing, and the resulting image data are provided to an image conversion server 17 via the information directing server 14.

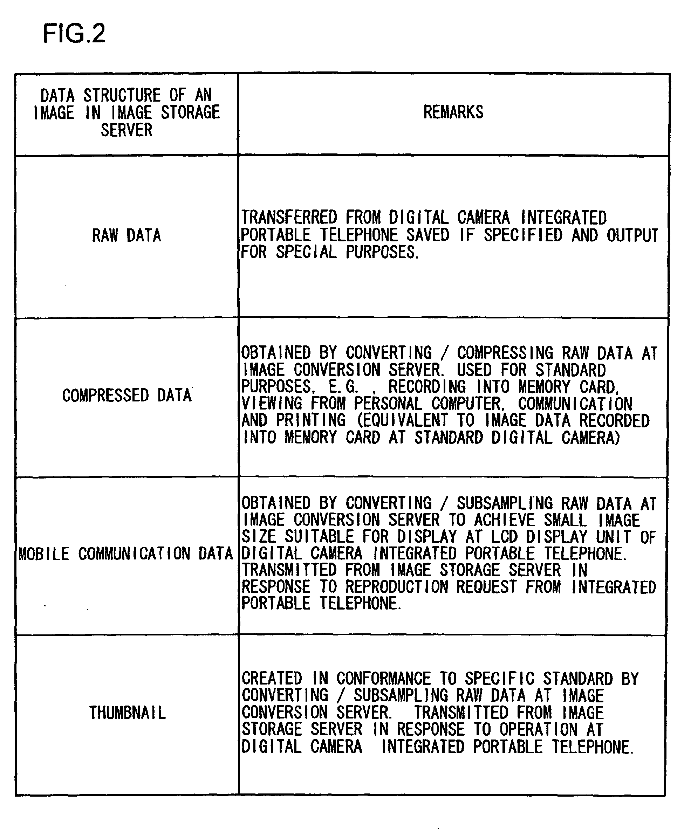

The image conversion server 17 creates compressed image data by executing recording format conversion processing and compression processing on the image data provided thereto. The image conversion server 17 also creates mobile communication data to be transmitted to the digital camera integrated portable telephone 1 in response to a reproduction request or the like and thumbnail data conforming to a specific standard by executing cull processing on the image data provided by the image processing server 15. It is to be noted that the mobile communication data may be obtained by executing compression processing in conformance to the specifications of the image communication on the Internet. Those different types of data are stored into a single image folder as data corresponding to a single image, and are provided to an image recording server 18. FIG. 2 is a chart showing the data structure assumed in such an image folder. The raw data which are erased by the image conversion server 17 as soon as the compressed image data are created unless a specific instruction for saving the raw data is issued from the digital camera integrated portable telephone 1 are not normally provided to the image storage server 18. Accordingly, the data volume of the raw data in FIG. 2 is zero assuming that no such instruction has been issued.

A file name is assigned to the various types of data shown in FIG. 2 so as to ensure that they can be identified as data corresponding to a single image even as they are processed separately. It is to be noted that the various types of data in FIG. 2 may be compiled as a single file assuming the structure shown in FIG. 2.

Advance instructions can be issued from the digital camera integrated portable telephone 1 with regard to the processing to be executed by the individual servers at the server center 2. The instruction as to whether or not to save the raw data mentioned above is an example of such instructions. As the user selects a setting with the operating unit 6 by checking the menu on display at the LCD display unit 5, specific instructional details are transmitted to the server center 2 via the communication unit 7 and the communication unit 13. The compression rate, the image size, the color balance, the edge emphasis level and the like can also be specified from the digital camera integrated portable telephone 1. These settings, too, can be specified by transmitting the settings selected with the operating unit 6 while the menu is on display at the LCD display unit 5 to the server center 2. The various servers at the server center 2 execute image processing, conversion and storage based upon these instructions.

Instead of executing the processing in conformance to instructions issued from the digital camera as described above, the image processing server 15 and the image conversion server 17 at the server center 2 may create image data by executing processing at varying compression rate settings, image size settings, color balance settings, edge emphasis level settings and the like and the resulting image data may be stored into the image storage server 18. In this case, image data matching a specific request issued from the digital camera integrated portable telephone 1 or the like can be output as needed. In such an application, the data structure shown in FIG. 2 will need to include a plurality of sets of compressed data and a plurality of sets of mobile communication data.

As the key assigned to function as the shutter release button is pressed, the read operation at the image capturing unit 11 enters a full read state in the structure described above, and the raw data are output from the A/D conversion unit 10 to the control / processing unit 4 as well. The control / processing unit 4 creates mobile communication data through culled sampling of the raw data and also creates thumbnail data by further culling the data. The mobile communications data and the thumbnail data thus created conform to the standard to which the data shown in FIG. 2 which are created at the server 2 also conform. In addition, a file name bearing a correlation to the raw data of the same image transmitted to the server center 2 is assigned to the mobile communications data and the thumbnail data. In other words, the same file name as that assigned to the mobile communication data and the thumbnail data created at the server center 2 from the transmitted raw data is also assigned to the mobile communication data and the thumbnail data created within the digital camera integrated portable telephone 1.

The mobile communication data and the thumbnail data created by the control / processing unit 4 are stored into the storage unit 9. Since the storage unit 9 is a nonvolatile memory, the data stored in the storage unit 9 are not lost even when the power switch at the digital camera integrated portable telephone 1 is turned off. As described above, when the shutter is released, the raw data of the captured image are stored into the raw data temporary storage unit 12 and also the mobile communications data and the thumbnail data corresponding to the same image are stored into the storage unit 9. In other words, the image data other than the compressed data in FIG. 2 are created and held within the digital camera integrated portable telephone. The mobile communication data and the thumbnail data are held at the storage unit 9 so as to allow the images to be reproduced at the digital camera integrated portable telephone 1 even when the connection with the server center 2 is disabled or when it is otherwise not necessary to connect with the server center 2.

Next, the image reproduction at the digital camera integrated portable telephone 1 is explained. If the reproduction mode is selected with the operating unit 6 and a thumbnail request needs to be transmitted, the digital camera integrated portable telephone 1 is connected to the server center 2. Once the thumbnail request is transmitted to the server center 2, the thumbnail data of a specific number of most recent images or the thumbnail data corresponding to all images photographed on a given date are transmitted from the image storage server 18 to the communication unit 7 via the information directing server 14 and the communication unit 13. Through the control implemented by the control / processing unit 4, thumbnail data corresponding to a specific number of thumbnail images are transferred into the buffer 5a and are displayed at the LCD display unit 5. If the number of thumbnail images having been transmitted is greater than the specific number of images that can be displayed at once at the LCD display unit 5, thumbnail images can be scrolled with the operating unit 6.

If there are thumbnail data stored in the storage unit 9, the thumbnail images at the storage unit 9 are first displayed at the LCD display unit 5 before the thumbnail request is transmitted to the server center 2. Then, only if the user needs thumbnail images other than those on display, the connection with the server center 2 is established to issue a thumbnail request, as described above.

If mobile communication data corresponding to a thumbnail image selected with the operating unit 6 from the thumbnail images on display at the LCD display unit 5 are not present at the digital camera integrated portable telephone 1, the digital camera integrated portable telephone 1 is connected with the server center 2 to request the mobile communications data corresponding to the selected thumbnail image. In response, the mobile communication data of the corresponding image at the image storage server 18 are transmitted from the communication unit 13 to the communication unit 7 via the information directing server 14. The mobile communication data are then transferred to the buffer 5a under the control implemented by the control / processing unit 4 and are displayed at the LCD display unit 5. It is to be noted that if the mobile communication data are compressed data, the image data are first decompressed by utilizing the function for decompressing Internet images at the control / processing unit 4 and then the decompressed image data are transferred to the buffer 5a. Subsequently, each time a thumbnail image is selected, the corresponding mobile communication data are transmitted from the server center 2 and are displayed at the LCD display unit 5.

During the process described above, too, if the mobile communication data corresponding to a specif ic thumbnail image are stored in the storage unit 9, the mobile communication data at the storage unit 9 are displayed at the LCD display unit 5 instead of issuing a request for the mobile communication data to the server center 2. If, on the other hand, the mobile communication data corresponding to the specific thumbnail image are not available, a request for the mobile communication data is issued to the server center 2 as described above.

The mobile communication data transmitted from the server center 2 are simply held at the control / processing unit 4 under normal circumstances. For this reason, the digital camera integrated portable telephone 1 loses themobile communication data when the constant connection with the server center 2 is turned off after using the digital camera integrated portable telephone 1 as a digital camera or when the power switch of the digital camera integrated portable telephone 1 is turned off. However, since the mobile communication data can be provided by the server center 2 promptly whenever necessary, they can be reproduced again at the digital camera integrated portable telephone 1 any time.

It is to be noted that the digital camera integrated portable telephone 1 may be set so as to store mobile communication data at the storage unit 9 after the initial reception. In such a case, any mobile communication data that have already been received can be reproduced at the digital camera integrated portable telephone 1 even if the communication with the server center is disabled in the reproduction mode. It also eliminates the need to establish a connection with the server center 2 subsequently for the same mobile communication data.

Once thumbnail image data are transmitted to the digital camera integrated portable telephone 1, they are stored into the storage unit 9. For this reason, as long as the user only selects an image from the thumbnail images that have already been transmitted, there is no need to issue a request for the same thumbnail images to the server center 2. If the number of thumbnail images stored at the storage unit 9 exceeds a predetermined number, the oldest thumbnail image data are erased and are replaced with thumbnail data newly provided by the server center, unless a specific instruction to do otherwise is issued.

As described above, the server center 2 fulfills the functions of image processing, image conversion and image storage as a surrogate for the digital camera integrated portable telephone 1. Thus, the digital camera integrated portable telephone 1 can obtain high-quality image data while assuming a compact structure and, at the same time, it can be utilized to display images at the LCD display unit 5 just like a standard digital camera.

Other authorized digital camera integrated portable telephones or any authorized mobile apparatus can access the server center 2 to obtain thumbnail data and mobile communication data held at the server center 2 for reproduction in addition to the digital camera integrated portable telephone 1 used to photograph the image data.

When thumbnail or mobile communication data are simply to be viewed at the digital camera integrated portable telephone 1 or another mobile apparatus, only they are provided to the requesting recipient, as described above. If, on the other hand, a print order is placed from the digital camera integrated portable telephone 1 or another digital camera integrated portable telephone or a mobile apparatus authorized for image acquisition, the compressed data provided from the server center 18 are output on a printer installed in the server center 2 or the compressed data are transmitted to a print service center at a remote location via the communication unit 13. In such a case, the desired print size can be specified from the digital camera integrated portable telephone 1 or the mobile apparatus. If the raw data corresponding to the image file are saved in the image storage server 18, the following processing may be executed instead of outputting the compressed data from the image storage server 18. Namely, the image conversion server 17 may newly create print data better matching the specified print size from the raw data stored at the image storage server 18 and the print data thus created may then be compressed and output.

In addition, the compressed data are provided when a view request or a download request is issued from a personal computer authorized to view/obtain images. If the raw data corresponding to a given image file have been saved, the raw data may instead be provided on demand.

If a data delete operation is performed by specifying a given thumbnail image with the operating unit 6 while thumbnail images are on display at the digital camera integrated portable telephone 1, the thumbnail data and the mobile communication data of the specified image are deleted from the storage unit 9. At this time, information indicating that the data have been deleted through an operation performed with the operating unit 6 is transmitted to the server center 2, and the entirety of the corresponding image file in the image storage server 18, i.e., the compressed data, the mobile communication data, the thumbnail data and the raw data if the raw data have been saved, is deleted.

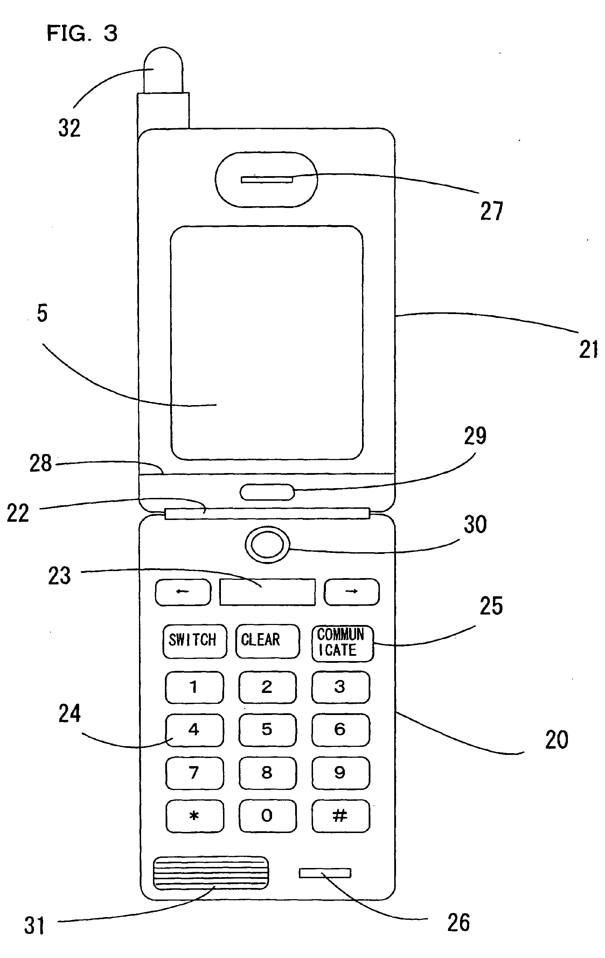

In FIG. 3 presenting an external view of the digital camera integrated portable telephone 1 used in the system described above, the same reference numerals are assigned to components corresponding to those shown in FIG. 1. The digital camera integrated portable telephone 1 includes a first body 20 at which the operating unit 6 is located and a second body 21 having the LCD display unit 5, and the second body 21 can be folded forward at a first hinge portion 22. The operating unit 6 is constituted with a menu operation portion 23, a keypad 24, a send operation portion 25 and the like. A microphone 26 and a speaker 27, both constituting part of the transceiver unit 8, are respectively disposed at the first body 20 and the second body 21. When the first body 20 and the second body 21 are folded together at the first hinge portion 22, the various operation portions, the LCD display unit 5 and the like shown in FIG. 3 are all concealed inside for protection.

A second hinge portion 28 is also provided at the second body 21 and the portion of the second body 21 above the second hinge portion 28 can be folded toward the rear by pressing a lock button 29. In this case, the first body 20 and the second body 21 are folded back-to-back, and the lock button 29 becomes automatically locked in the folded state.

A lens 30 which forms an image at the image sensor of the image capturing unit 11 is provided at the first body 20. Accordingly, when the lens 30 is originated along the same direction as the LCD display unit 5, as shown in FIG. 3, the user can capture an image of himself while checking the display at the LCD display unit 5. In addition, the digital camera integrated portable telephone 1 can be utilized as a videophone as well in this state. Namely, if a videophone mode is selected at the menu operation portion 23, a culled read of the image data at the image capturing unit 11 is executed, the data thus read out are digitized at the A/D conversion unit 10 and are then provided as post-cull dynamic image data to the control / processing unit 4, and the post-cull dynamic image data undergo dynamic image compression at the control / processing unit 4 before being transmitted to the other party via the communication unit 7. At the same time, dynamic image information from the other party which is received via the communication unit 7 undergoes dynamic image decompression processing at the control / processing unit 4, and the decompressed dynamic image data are then transferred to the buffer 5a and are displayed at the LCD display unit 5.

When the first body 20 and the second body 21 are folded back-to-back and locked together, the lens 30 is turned toward the rear surface of the LCD display unit 5 and thus the subject toward which the lens 30 is trained to capture an image thereof can be monitored at the LCD display unit 5 that functions as a viewfinder of the digital camera in this situation. In other words, ease of use comparable to that of a standard digital camera is afforded. It is to be noted that as the first body 20 and the second body 21 are folded back-to-back and become locked automatically, the control / processing unit 4 detects the locked state and displays an image by rotating it by 90° when reproducing the image captured in the state illustrated in FIG. 3 or displaying the menu. As a result, when the first body 20 and the second body 21 are folded back-to-back, the digital camera integrated portable telephone 1 can be operated by positioning the LCD display unit 5 sideways, as in the case of a standard digital camera. When, on the other hand, an image photographed while the first body 20 and the second body 21 are folded together back-to-back is reproduced in the state shown in FIG. 3, the image can be rotated by 90° and thus can be viewed on the vertical screen. When an image is rotated by 90° in this manner, the layout of the code information such as the menu is automatically modified so as to fully utilize the entire screen whether it is being used as the vertical screen or the horizontal screen, whereas the width of the image is automatically adjusted to ensure that the entire image is displayed when adjusting the dimensional discrepancy between the longitudinal and lateral measurements rather than giving priority to the full utilization of the vertical or horizontal screen.

A strobe 31 is provided at the first body 20 to enable the user to operate the digital camera integrated portable telephone 1 as he would a standard digital camera when the first body 20 and the second body 21 are folded back-to-back. This strobe is structured so as to be allowed to emit light only when the automatically locked state resulting from folding the first body 20 and the second body 21 back-to-back is detected and, as a result, an inadvertent light emission does not occur when there is a likelihood of the face of the user being nearby in the state shown in FIG. 3. It is to be noted that when operating the digital camera integrated portable telephone 1 as a regular digital camera, an antenna 32 at a side surface of the second body 21 may be used as a shutter release button instead of assigning one of the buttons at the operating unit 6 e.g., one of the number keys 24, as a shutter release button. In such a case, the antenna 32 should be provided so that it can be pressed further in by a small degree from the normal storage position to release the shutter as the antenna 32 is pressed further in.

In the embodiment described above, if it is more convenient to employ a single server that executes the various types of processing instead of employing different servers, i.e., the image processing server 15, the image conversion server 17 and the image storage server 18, to execute them as shown in FIG. 1, an integrated server should be provided. In addition, the user server 16 also manages fee accounts for the individual digital camera integrated portable telephones 1 for using the services such as the image processing, the image compression and the image storage.

There may be more than one server center 2, and faster processing can be achieved by providing similar server centers in different regions and allowing each digital camera integrated portable telephone 1 to access the closest server center. In such a case, data should be exchanged between different server centers as the need arises. For instance, when a request to print given compressed data is issued, the compressed data are transferred from the server center where the file is stored to the server center from which the print output can be delivered with the utmost ease so as to output the compressed data on a printer installed in the recipient server center. In order to enable such management, management information with regard to the image data stored at all the server centers is shared among the individual server centers. In addition, the processing can be expedited by assigning a specific function to each of a plurality of server centers. For instance, a first server center may be assigned to execute the image processing alone and image data having undergone the image processing at the first servermay then be transmitted to another server center assigned to execute the image compression. Furthermore, a role assignment may be set up so that all the data are sent to a central server to undergo the image processing and the image compression while regional server centers are assigned to simply receive the raw data and store the images.

The services such as the image processing and the image compression provided by the server center 2 are by no means fixed. Namely, when upgraded versions of the image processing service, the image compression service or the like become available or when a new system is proposed, a notification is transmitted to the digital camera integrated portable telephone 1 at which the contents of the notification are displayed in the menu screen at the display unit 5 as necessary. As a result, the user can use the newly available digital camera function without having to replace the digital camera integrated portable telephone 1 and, at the same time, can indicate in the menu that he is not going to use a given service to reduce his fee payment, as well. It is to be noted that in the case of simple debugging, the service should be upgraded at the discretion of the server center 1 without notifying the user of details.

If the digital camera integrated portable telephone 1 is stolen or lost, the user contacts the server center 1 to stop the services. After the services are stopped, raw data cannot be stored at the digital camera integrated portable telephone 1 beyond the first 10 images and the digital camera integrated portable telephone 1 can no longer use the raw data. In addition, since the data that are stored at the storage unit 9 and can be viewed at the LCD display unit 5 are data with a very small data size, such as thumbnail data and mobile communication data, no image with a high image quality worthy of a digital camera can be recorded. Thus, the product value of the digital camera integrated portable telephone 1 becomes greatly reduced and the user is spared from being billed by the server center for services he did not use.

While an explanation is given above on a tie-in between the digital camera integrated portable telephone 1 and the server center 2, a tie-in between the digital camera integrated portable telephone 1 and another portable telephone equipped with an image communication function can also be achieved by adopting the embodiment shown in FIG. 1. For instance, the user selects a mobile communication dedicated still image photographing mode with the operating unit 6 while checking the menu at the LCD display unit 5. As he presses the key assigned to function as the shutter release button at the operating unit 6, a culled read of the image signals at the image capturing unit 11 is executed. These image signals are then digitized at the A/D conversion unit 10 and the resulting digital signals are provided to the control / processing unit 4. In addition, a set of post-cull image data undergoes still image compression at the control / processing unit 4 and the compressed image data are stored into the storage unit 9. The stored image data, which are similar to the mobile communication data in FIG. 2, are not transmitted to the server center 2 but instead are directly transmitted to the other portable telephone equipped with the image communication function via the communication unit 7. Compressed still image information received from the other party via the communication unit 7 is stored into the storage unit 9 and also undergoes still image decompression at the control / processing unit 4, which is then transferred to the buffer 5a and is displayed at the LCD display unit 5. When the mobile communication dedicated still image photographing mode is selected as described above, a full pixel read from the image capturing unit 11 is not executed for captured still images. Also, the mobile communication data are not transmitted to the server center 2 and are instead stored inside the digital camera integrated portable telephone 1. During communication, too, image data are directly exchanged between portable telephones each equipped with the image communication function, e.g., a digital camera integrated portable telephone 1.

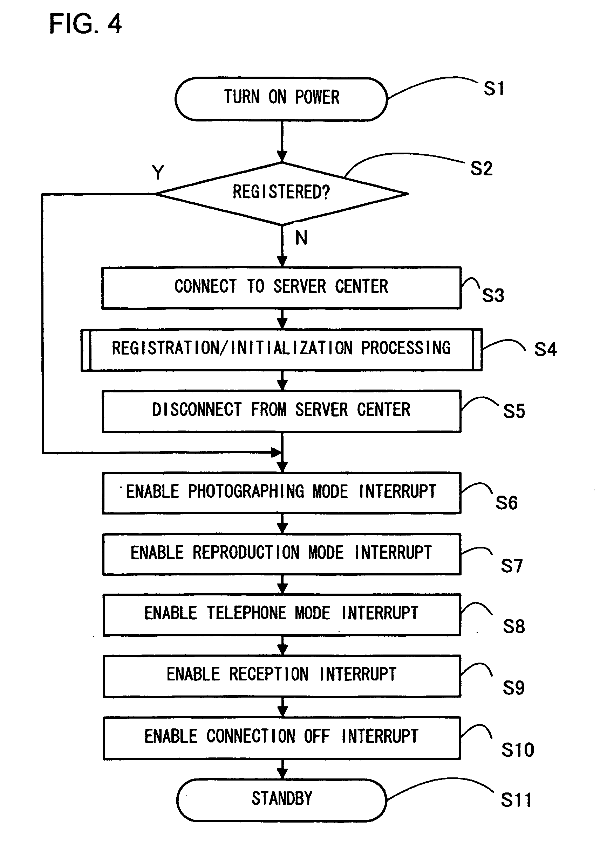

FIG. 4 presents a main flowchart of the processing executed in the digital camera integrated portable telephone 1 in the embodiment described above. As the power switch is turned on in step S1, a verification is executed in step S2 to ascertain whether or not the digital camera integrated portable telephone 1 is registered at the server center. If the power switch has been turned on for the first time after the digital camera integrated portable telephone 1 is purchased or if specific registration processing has not been executed yet, the operation proceeds to step S3, to automatically connect with the server center 2. When the connection is established, specific registration/initialization processing is executed in step S4, and upon completing the registration/initialization processing, the connection with the server center 2 is turned off in step S5.

If it is decided in step S2 that the digital camera integrated portable telephone 1 is a registered unit, various types of interrupts are enabled in step S6 through step S10, and then the operation enters a standby state in step S11.

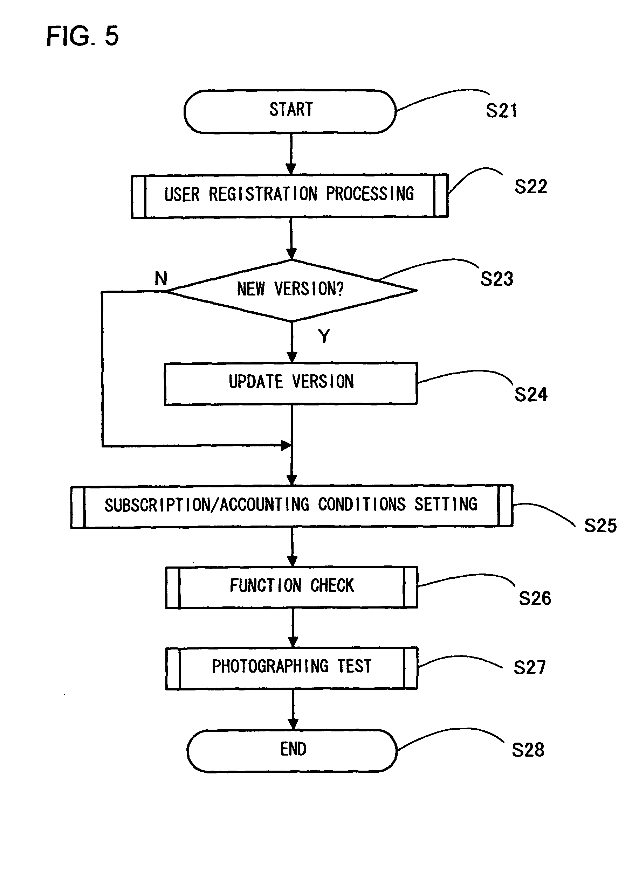

FIG. 5 is a detailed flowchart of the registration/initialization processing executed in step S4 in FIG. 4 under the guidance of the server center 2. As the processing starts in step S21, the specific user registration processing is executed in step S22. Next, a verification is executed in step S23 to ascertain whether or not any upgrade has been made on the firmware of the digital camera integrated portable telephone 1 after the digital camera integrated portable telephone 1 was purchased or after the digital camera integrated portable telephone 1 was last connected with the server center 2. If there is an upgrade of the firmware, the data are transmitted from the server center 2 in step S24 to update the firmware version by overwriting the existing firmware of the digital camera integrated portable telephone 1. In this manner, the firmware in the digital camera integrated portable telephone 1 is always kept up-to-date, so that the functions of the digital camera integrated portable telephone 1 are constantly upgraded and any problems can be solved promptly.

In step S25, subscription/accounting conditions are set. In more specific terms, a menu of the functions available at the server center 2 that can be used by the user is displayed together with accounting condition options at the LCD display unit 5 of the digital camera integrated portable telephone 1. The user then sets desirable subscription/accounting conditions with the operating unit 6 by following instructions provided by the server center 2. The subscription/accounting conditions can be freely modified at a later date.

In step S26, the various functions of the digital camera integrated portable telephone 1 are all checked in response to an instruction signal provided from the server center 2. The functions that are checked in this step include both functions inherent to the digital camera integrated portable telephone 1 and functions related to the tie-in between the digital camera integrated portable telephone 1 and the server center 2. It is essential without any newly purchased digital camera integrated portable telephone 1 be fully equipped with these functions.

In step S27, a photographing test is conducted on the digital camera integrated portable telephone 1 in response to an instruction signal provided from the server center 2. The photographing test is conducted to check whether or not a successful tie-in is achieved between the digital camera integrated portable telephone 1 and the server center 2, especially when the digital camera integrated portable telephone 1 is a newly purchased unit. Upon completing the photographing test, the registration/initialization processing ends in step S28.

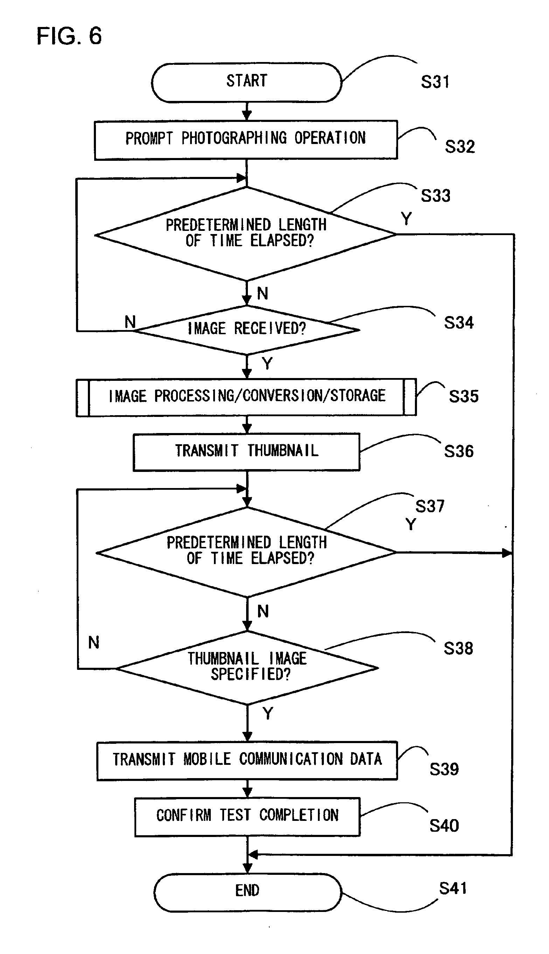

FIG. 6 is a detailed flowchart of the photographing test executed in step S27 in FIG. 5. After the photographing test starts in step S31, the user is prompted in step S32 to photograph an image by a signal transmitted from the server center 2 to the digital camera integrated portable telephone 1. After the user is thus prompted, a timer is started, and a decision is made in step S33 as to whether or not a predetermined length of time has elapsed after starting the timer. If the predetermined length of time has not elapsed, the operation proceeds to step S34 to ascertain whether or not raw image data of an image photographed by the user have been received. If no raw image data have been received, the operation returns to step S33 and subsequently, the operation waits in standby for a photographing operation to be performed by the user by alternately executing step S33 and step S34 until the predetermined length of time elapses.

If raw image data are received from the user before the predetermined length of time has elapsed, the operation proceeds to step S35 to engage the image processing server 15, the image conversion server 17 and the image storage server 18 to process the received raw data. When the processing by these servers is completed, the thumbnail data are transmitted to the digital camera integrated portable telephone 1 in step S36. After the thumbnail data are transmitted, the timer is started and a decision is made in step S37 as to whether or not a predetermined length of time has elapsed after starting the timer. If the predetermined length of time has not elapsed, the operation proceeds to step S38 to execute a verification to ascertain whether or not the user has specified a thumbnail image with the operating unit 6. If no thumbnail image has been specified, the operation returns to step S37, and subsequently, the operation waits for the user to specify a thumbnail image by alternately executing step S37 and step S38.

If the user specifies a thumbnail image before the predetermined length of time has elapsed, the operation proceeds to step S39 to transmit the mobile communication data to the digital camera integrated portable telephone 1. Upon verifying that the mobile communication data have been transmitted, the operation proceeds to step S40 to confirm that the photographing test has been completed and the photographing test ends in step S41. If no confirmation is made in step S40, the user is not recognized as a registered user and accordingly, when the power switch is next turned on at the digital camera integrated portable telephone 1, the operation proceeds from step S2 to step S3 in FIG. 4.

If, on the other hand, it is determined in step S33 or step S37 that there has been no user response even as the predetermined length of time has elapsed, the operation proceeds to step S41 to immediately end the photographing test. In such a case, no confirmation that the photographing test has been completed is made.

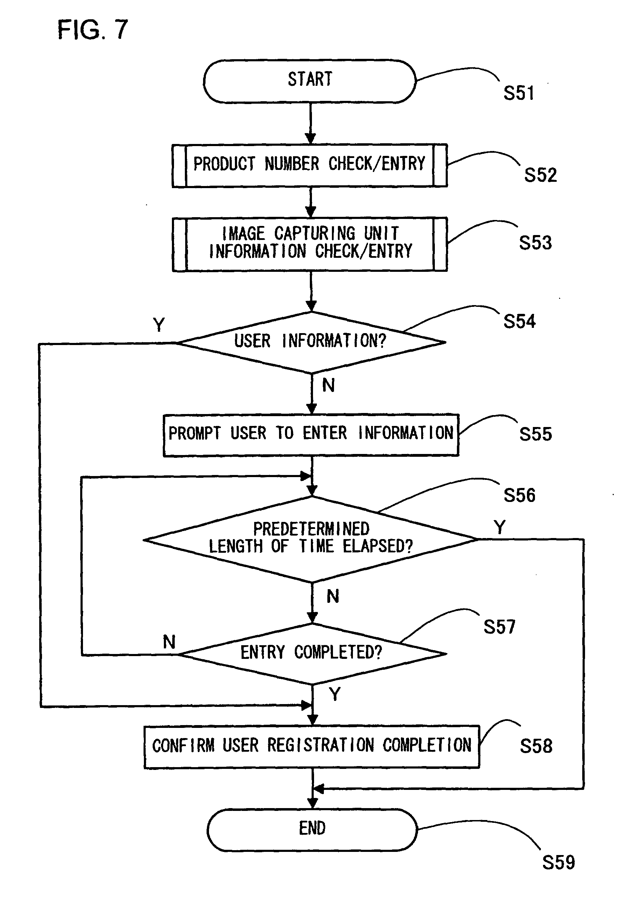

FIG. 7 is a detailed flowchart of the user registration processing executed in step S22 in FIG. 5. After the processing starts in step S51, the product number is checked/entered in step S52. More specifically, data indicating the product number are transmitted from the digital camera integrated portable telephone 1 to the server center 2. If the server center 2 already has the product number registered when the user purchased the digital camera integrated portable telephone 1, the server center 2 checks the transmitted data by comparing them with the registered product number, whereas if the product number has not yet been registered, the transmitted product number is newly entered for registration.

Next, image capturing unit information is checked and entered in step S53. This information, which is related to the color filter arrangement at the image sensor of the image capturing unit 11 in the digital camera integrated portable telephone 1, is crucial information required by the image processing server 15 to execute interpolation processing and the like on the raw data transmitted to the server center. With respect to this information, too, which is univocally set in correspondence to the product number, too, each digital camera integrated portable telephone and the server center engage in communication to allow the server center to check the information set univocally in correspondence to the product number and to enable the digital camera integrated portable telephone to enter the information individually.

The processing in step S52 and step S53 described above is automatically executed as the digital camera integrated portable telephone 1 and the server center 2 engage in communication with each other following the start of user registration processing.

In step S54, a verification is executed to ascertain whether or not user personal information, such as the user's name, gender, age, mailing address and telephone number, has already been entered. If the personal information has not yet been entered, a signal is transmitted to the digital camera integrated portable telephone 1 to prompt the user to enter the information in step S55. After the user is thus prompted, the timer is started and a decision is made in step S56 as to whether or not a predetermined length of time has elapsed after starting the timer. If the predetermined length of time has not elapsed, the operation proceeds to step S57 to ascertain whether or not the user has completed the entry of the specific user information with the operating unit 6. If the user information entryhas not been completed, the operation returns to step S56 and subsequently, the operation waits for the completion of the user information entry by alternately executing step S56 and step S57 until the predetermined length of time elapses.

If the user information entry is completed within the predetermined length of time, the operation proceeds to step S58 to confirm the completion of the user registration and the user registration processing ends in step S59. If no confirmation is made in step S58, the user is not recognized as a registered user and accordingly, when the power switch is next turned on at the digital camera integrated portable telephone 1, the operation proceeds from step S2 to step S3 in FIG. 4.

If it is determined in step S56 that the user information entry is not completed even when the predetermined length of time has elapsed, the operation jumps to step S59 to immediately end the user registration processing. In this case, no confirmation of the user registration completion is made.

### - photographing mode -

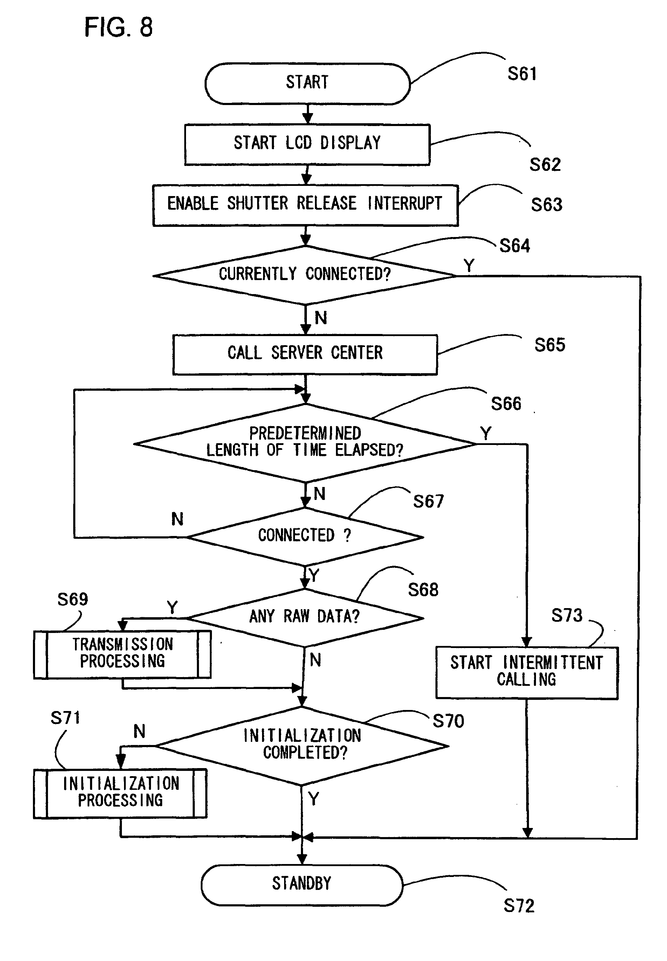

FIG. 8 presents a flowchart of the operation executed in the digital camera integrated portable telephone 1 when the photographing mode is selected by operating the operating unit 6 in the standby state in step S11 in FIG. 4. A photographing mode interrupt is applied through a menu selection with the operating unit 6 and the operational flow starts in step S61. Then, a display operation starts at the LCD display unit 5 in step S62 to display an image obtained by executing a culled read of the data at the image capturing unit 11 at the LCD display unit 5 functioning as a viewfinder. Next, a shutter release interrupt is enabled in step S63.

In step S64, a verification is executed to ascertain whether or not the digital camera integratedportable telephone 1 and the server center 2 are currently connected, and if they are not connected, a call to the server center 2 is originated in step S65. After originating the call, a timer is started, and in step S66, a decision is made as to whether or not a predetermined length of time has elapsed after starting the timer. The operation proceeds to step S67 if the predetermined length of time has not elapsed to ascertain whether or not a successful connection with the server center 2 has been established. If no connection has been established, the operation returns to step S66 and subsequently, the operation waits for a connection with the server center 2 to be established by repeatedly executing the processing in step S66 and in step S67 until the predetermined length of time elapses.

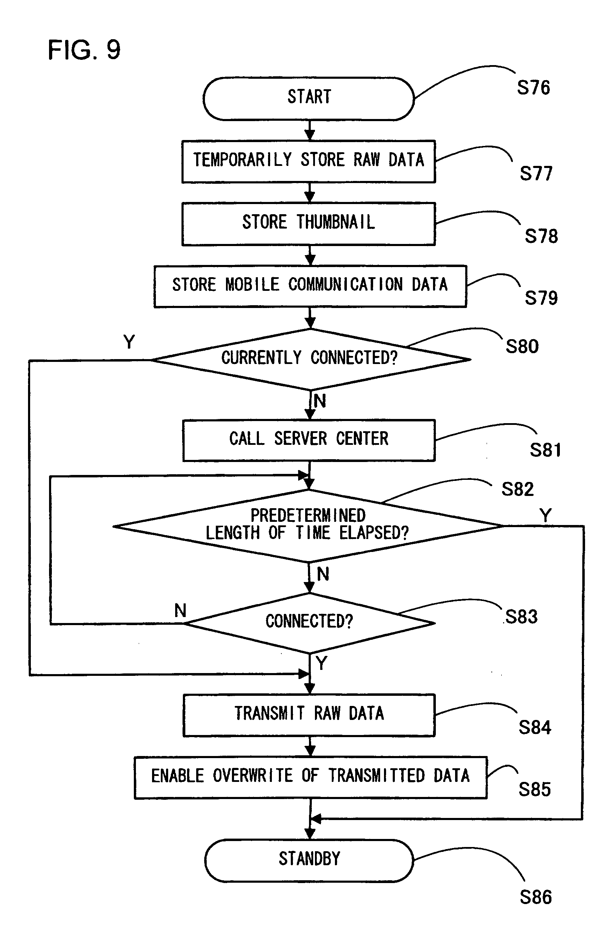

If a successful connection with the server center 2 is established before the predetermined length of time has elapsed, a verification is executed in step S68 to ascertain whether or not any untransmitted raw data are still stored in the raw data temporary storage unit 12. If there are untransmitted raw data in the raw data temporary storage unit 12, transmission processing is executed in step S69 and then the operation proceeds to step S70. The transmission processing executed in step S69 is similar to that executed in step S84 and step S85 in FIG. 9 to be explained later. If, on the other hand, it is determined in step S68 that no raw data remain in the raw data temporary storage unit 12, the operation proceeds directly to step S70. In step S70, a verification is executed to ascertain whether or not initialization processing has been completed. In more specific terms, this verification is equivalent to the verification as to whether or not the test completion has been confirmed in step S40 in FIG. 6 or whether or not the user registration completion has been confirmed in step S58 in FIG. 7. If neither of these confirmations has been made and thus it is judged that the initialization has not yet been completed, the initialization processing is executed in step S71 before the operation proceeds to step S72 to enter a standby state for a shutter release operation. If it is determined in step S70 that the initialization processing has been completed, the operation proceeds directly to step S72. This initialization processing is similar to the processing shown in FIG. 5.

If it is determined in step S64 that the digital camera integrated portable telephone 1 is currently connected to the server center 2, the operation jumps to step S72 to enter a standby state. In addition, if it is determined in step S66 that a successful connection with the server center 2 has not been established within the predetermined length of time, intermittent call start processing is executed in step S73, and then the operation jumps to step S72 to enter a standby state. The intermittent call processing as referred to in this context is processing for repeatedly executing the operation starting in step S65 over predetermined time intervals until a successful connection with the server center 2 is established while the photographing mode is sustained.

### - shutter release interrupt -

FIG. 9 presents a flowchart of the operation executed when a shutter release interrupt is applied. As a shutter release interrupt is applied through an operation of the operating unit 6 and the operational flow starts in step S76, the data read from the image capturing unit 11 is switched to a full pixel read, and the raw data obtained through the full pixel read are temporarily stored into the raw data temporary storage unit 12 in step S77. In addition, the corresponding thumbnail data are stored into the storage unit 9 in step S78. The mobile communication data, too, are stored into the storage unit 9 in step S79. The thumbnail data and the mobile communication data are created at the control / processing unit 4 by culling the raw data obtained through the full pixel read, which have been input from the image capturing unit 11 to the control / processing unit 4.

In step S80, a verification is executed to ascertain whether or not the digital camera integrated portable telephone 1 and the server center 2 are currently connected, and if they are not connected, a call to the server center 2 is originated in step S81. After originating the call, the timer is started, and in step S82, a decision is made as to whether or not a predetermined length of time has elapsed after starting the timer. The operation proceeds to step S83 if the predetermined length of time has not elapsed to ascertain whether or not a successful connection with the server center 2 has been established. If no connection has been established, the operation returns to step S82 and subsequently, the operation waits for a connection with the server center 2 to be established by repeatedly executing the processing in step S82 and in step S83 until the predetermined length of time elapses.

If a successful connection with the server center 2 is established before the predetermined length of time elapses, the photographed raw data are transmitted to the server center 2 in step S84. If the raw data are transmitted successfully, processing is executed in step S85 to enable an overwrite of the raw data with new raw data, and then the operation enters a standby state in step S86 for the next shutter release. The processing described above is substantially equivalent to deleting the transmitted data from the raw data temporary storage unit 12 and securing the storage capacity corresponding to the data volume of the transmitted data for storage of new raw data.

It is to be noted that if it is determined in step S80 that the digital camera integrated portable telephone 1 is currently connected with the server center 2, the operation proceeds directly to step S84 to execute the transmission. In addition, if it is determined in step S82 that a connection with the server center 2 has not been established within the predetermined length of time, the operation proceeds directly to step S86 to enter a standby state. In this case, the untransmitted raw data remain stored in the raw data temporary storage unit 12.

### - reproduction mode interrupt -

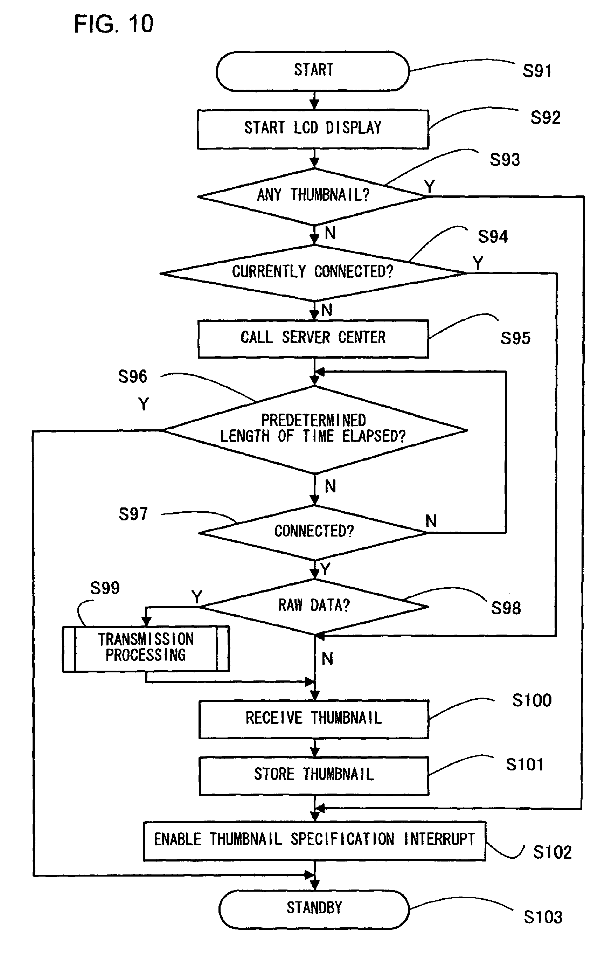

FIG. 10 presents a flowchart of the operation executed in the digital camera integrated portable telephone 1 when the reproduction mode is selected by operating the operating unit 6 in the standby state in step S11 in FIG. 4. As a reproduction mode interrupt is applied through a menu selection with the operating unit 6, the operational flow starts in step S91. In step S92, a display operation starts at the LCD display unit 5 to prepare for a thumbnail display. In step S93, a verification is executed to ascertain whether or not there are any thumbnail data stored in the storage unit 9, and if it is determined that no thumbnail data are held in the storage unit 9, a verification is executed in step S94 to ascertain whether or not the digital camera integrated portable telephone 1 is currently connected with the server center 2. If they are not connected, a call to the server center 2 is originated in step S95. After originating the call, the timer is started, and in step S96, a decision is made as to whether or not a predetermined length of time has elapsed after starting the timer. The operation proceeds to step S97 if the predetermined length of time has not elapsed to ascertain whether or not a successful connection with the server center 2 has been established. If no connection has been established, the operation returns to step S96 and subsequently, the operation waits for a connection with the server center 2 to be established by repeatedly executing the processing in step S96 and in step S97 until the predetermined length of time elapses.

If a successful connection with the server center 2 is established before the predetermined length of time has elapsed, a verification is executed in step S98 to ascertain whether or not any untransmitted raw data are still stored in the raw data temporary storage unit 12. If there are untransmitted raw data in the raw data temporary storage unit 12, transmission processing is executed in step S99 and then the operation proceeds to step S100. The transmission processing executed in step S99 is similar to that executed in step S84 and step S85 in FIG. 9 explained earlier. If, on the other hand, it is determined in step S98 that no raw data remain in the raw data temporary storage unit 12, the operation proceeds directly to step S100.

In step S100, thumbnail data for the predetermined number of thumbnail images are received from the server center 2 and the thumbnail data thus received are stored into the storage unit 9 in step S101. Then, a thumbnail specification interrupt is enabled in step S102 before entering a standby state in step S103.

If it is determined in step S93 that thumbnail data are stored in the storage unit 9, on the other hand, the operation proceeds directly to step S102 to enable a thumbnail specification interrupt. In addition, if it is determined in step S94 that the digital camera integrated portable telephone 1 is currently connected with the server center 2, the operation proceeds directly to step S100 to receive thumbnail data.

If it is determined in step S96 that a connection with the server center 2 has not been established within the predetermined length of time, the operation proceeds directly to step S103 to enter a standby state. In this case, the digital camera integrated portable telephone 1 will not enter the reproduction mode. However, some thumbnail data are bound to be stored in the storage unit 9 in reality and thus, such an eventuality is not likely. This particular operational flow is followed when all the thumbnail data in the storage unit 9 become lost accidentally and, at the same time, the digital camera integrated portable telephone 1 cannot establish a connection with the server center 2, in order to prevent the flow from becoming hung up.

If the user wishes to obtain thumbnail data other than those present in the storage unit 9 after the operation proceeds from step S93 to step S102 and enters the standby state, the user can indicate his preference through the operating unit 6 and accordingly, the operation enters the flow starting in step S94.

### - thumbnail specification interrupt -

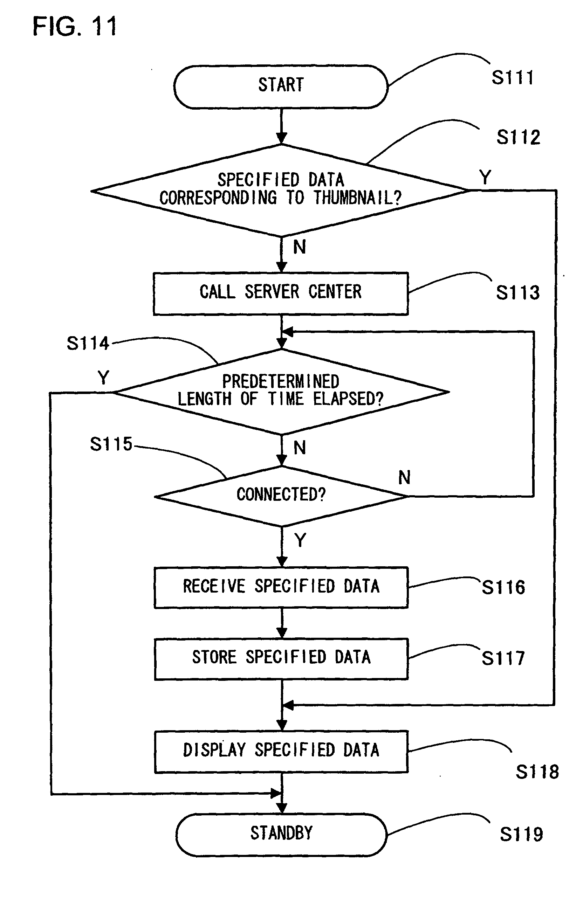

FIG. 11 presents a flowchart of the operation executed when a thumbnail specifications interrupt is applied. As one of the thumbnail images is specified through an operation of the operating unit 6, the operational flow starts in step S111. Then, a verification is executed in step S112 to ascertain whether or not the mobile communication data corresponding to the specific thumbnail image are stored in the storage unit 9. If it is determined that the mobile communication data of the specific thumbnail image are not stored in the storage unit 9, a call to the server center 2 is originated in step S113. After originating the call, the timer is started, and in step S114, a decision is made as to whether or not a predetermined length of time has elapsed after starting the timer. The operation proceeds to step S115 if the predetermined length of time has not elapsed to ascertain whether or not a successful connection with the server center 2 has been established. If no connection has been established, the operation returns to step S114 and subsequently, the operation waits for a connection with the server center 2 to be established by repeatedly executing the processing in step S114 and in step S115 until the predetermined length of time elapses.

If a successful connection with the server center 2 is established before the predetermined length of time has elapsed, the operation proceeds to step S116 to receive the mobile communication data corresponding to the specific thumbnail image from the server center 2, and then the mobile communication data thus received are stored into the storage unit 9 in step S117. The mobile communication data are displayed at the LCD display unit 5 in step S118, before the operation enters a standby state in step S119.

If it is determined in step S112 that the mobile communication data corresponding to the specific thumbnail image are stored in the storage unit 9, the operation proceeds directly to step S118 to display the mobile communication data at the LCD display unit 5. If it is determined in step S114 that a connection with the server center 2 has not been established within the predetermined length of time, the operation jumps to step S119 to enter a standby state.

### - reception interrupt -

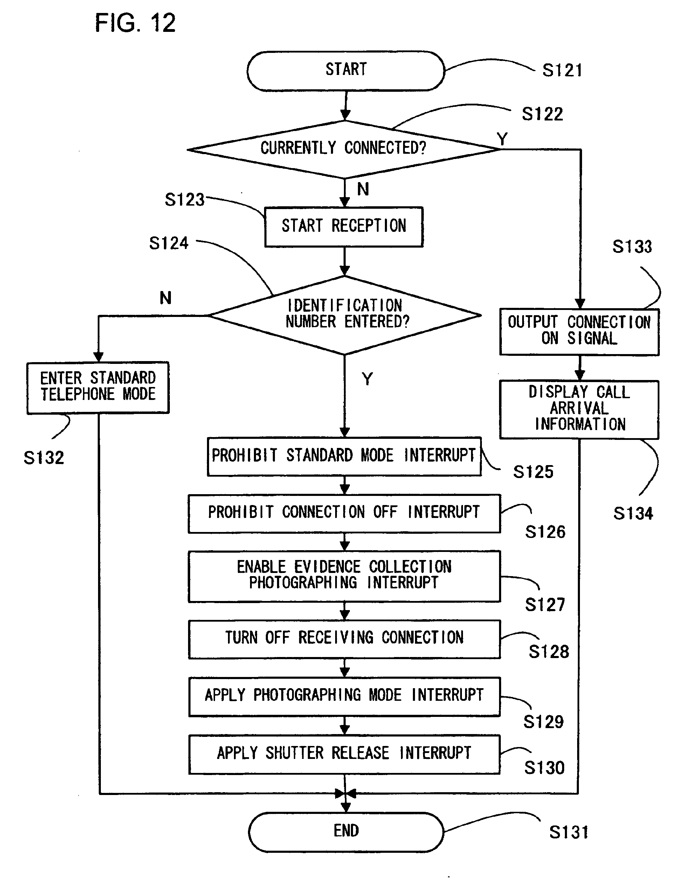

FIG. 12 presents a flowchart of the operation executed when a call is received at the digital camera integrated portable telephone 1. The operational flow starts in step S121 as a call arrives at the digital camera integrated portable telephone 1, and then a verification is executed in step S122 to ascertain whether or not the digital camera integrated portable telephone 1 is currently connected with the server center 2. If they are not connected with each other, the call can be received without any problems and, accordingly, the operation proceeds to step S123 to start reception. After starting the reception, a verification is executed in step S124 as to whether or not the identification number has been entered by the caller within a predetermined length of time. The identification number, which is used as a countermeasure against loss or theft of the digital camera integrated portable telephone 1, is entered as the user calling the digital camera integrated portable telephone 1 from the outside establishes a connection with the digital camera integrated portable telephone 1.

If it is verified in step S124 that the identification number has been entered, a normal mode interrupt becomes prohibited in step S125. Subsequently, a photographing mode interrupt, a reproduction mode interrupt or a telephone mode interrupt cannot be applied by the person currently in possession of the digital camera integrated portable telephone 1 by operating the operating unit 6, and thus, the digital camera integrated portable telephone 1 cannot the operated as a regular digital camera or a regular portable telephone. It is to be noted that a reception interrupt does not become prohibited.

In addition, a connection OFF interrupt is prohibited in step S126. As a result, the person currently in possession of the digital camera integrated portable telephone 1 can no longer turn off the power switch by operating the operating unit 6.

Following the operation executed in the steps described above, an evidence collection photographing interrupt is enabled in step S127. This interrupt is applied when the person currently in possession of the digital camera integrated portable telephone 1 subsequently operates any operating member at the operating unit 6 to automatically apply a photographing mode interrupt and then automatically apply a shutter release interrupt immediately after the shutter release interrupt becomes enabled. As a result, a photographing operation is automatically executed and the resulting raw data are transmitted to the server center 2. As FIG. 3 clearly indicates, the face of the person operating the operating unit 6 is normally turned toward the lens 30 over a distance of approximately 50 cm from the lens, and thus, through the automatic photographing operation executed as described above, the image of the face of the person currently in possession of the digital camera integrated portable telephone 1 is automatically photographed and is transmitted to the server center 2 so that it can be eventually used as evidence. Even if the culprit having realized that he has been photographed attempts to turn off the power switch, the connection OFF interrupt has been prohibited in step S126 and, as a result, he cannot stop the image from being transmitted to the server center 2.

After the functions of the digital camera integrated portable telephone 1 are altered as described above, the receiving connection is cut off and the telephone is disconnected in step S128. Immediately afterward, the photographing mode interrupt is automatically applied in step S129, and successively after the shutter release interrupt is enabled, the shutter release interrupt is automatically initiated in step S130 to execute the first evidence collection photographing operation. As described above, the evidence collection photographing operation can be executed by calling the digital camera integrated portable telephone 1 from the outside. In addition, after the evidence collection photographing interrupt is enabled in step S127, the photographing operation is executed each time the person currently in possession of the digital camera integrated portable telephone 1 operates the operating unit 6. While the operational flow ends in step S131, the operation does not proceed to step S131 and instead jumps to step S76 in FIG. 9 if the shutter release interrupt is correctly applied in step S130.

If the identification number is not entered in step S124, the call having arrived at the digital camera integrated portable telephone 1 is a normal telephone call, and accordingly, the digital camera integrated portable telephone 1 enters the normal telephone mode in step S132 and the operational flow ends in step S131. In addition, if it is determined in step S122 that the digital camera integrated portable telephone 1 is currently connected with the server center 2, a connection ON signal output is returned to the caller side in step S133, information indicating the arrival of the call is displayed at the LCD display unit 5 in step S134 and the operational flow ends in step S131. Namely, the line is assumed to be engaged and thus, the call is not received in this case. It is to be noted that if the person operating the digital camera integrated portable telephone 1 switches the digital camera integrated portable telephone 1 to the telephone mode with the operating unit 6 upon checking the call arrival information brought up on display in step S134 while the other party is calling the digital camera integrated portable telephone 1, the connection OFF interrupt is applied, thereby turning off the connection with the server center 2, and as a result, a reception operation for the call starts to enable a telephone conversation.

### - connection OFF interrupt -

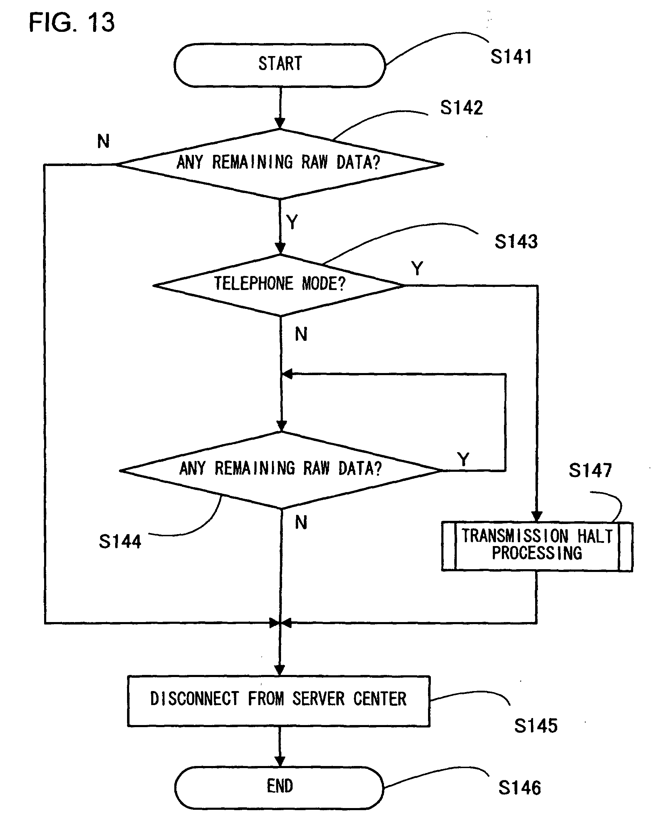

FIG. 13 presents a flowchart of the operation executed when a connection OFF interrupt is applied to turn off the connection with the server center 2. As the power switch is turned off or the digital camera integrated portable telephone 1 is switched to the telephone mode with the operating unit 6, the connection OFF interrupt is applied, and the operational flow starts in step S141. In step S142, a verification is executed to ascertain whether or not any untransmitted raw data are currently held in the raw data temporary storage unit 12, and if it is determined that the raw data temporary storage unit 12 is holding untransmitted raw data, it is judged that a transmission operation is in progress and the operation proceeds to step S143. In step S143, a verification is executed to ascertain whether or not the connection OFF interrupt has been applied as a result of a switchover to the telephone mode. If the connection OFF interrupt has not been applied by a switchover to the telephone mode, it is assumed that the connection OFF interrupt has been applied by turning off the power switch, and accordingly, the operation proceeds to step S144 to execute a verification as to whether or not there are any remaining raw data. If it is determined that there are remaining raw data, the transmission has not been completed yet and, accordingly, the operation waits for the completion of the transmission in step S144. Once the transmission is completed, the operation proceeds to step S145 to turn off the connection with the server center 2 and the operational flow ends in step S146. As explained above, if the connection OFF interrupt is applied by turning off the power switch while there are still remaining raw data, the connection with the server center 2 is turned off after the raw data transmission is completed.

If, on the other hand, it is determined in step S143 that the connection OFF interrupt has been applied as a result of a switchover to the telephone mode, the operation proceeds to step S147 to execute transmission halt processing. During the transmission halt processing, the raw data transmission is first halted immediately and an overwrite of the raw data is prohibited. Thus, when a connection with the server center 2 is next established, the raw data are retransmitted from the beginning. In addition, in the transmission halt processing executed in step S147, a message indicating the halt in the transmission is sent to the server center 2 and the server center having received the message cancels the incomplete raw data having been received and regards that the raw data of the corresponding image have not been transmitted altogether. After executing the processing described above, the connection with the server center 2 is promptly turned off in step S145 to execute processing in response to the switchover to the telephone mode. As a result, the user is enabled to originate a call in an emergency.

### - server main flow -

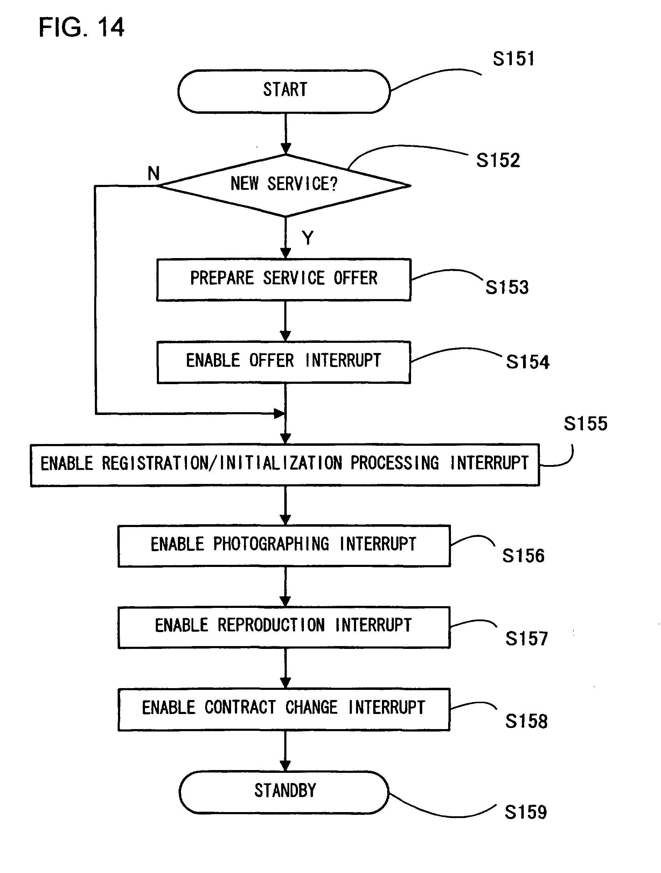

In the main flow of the processing executed at the server center 2 shown in FIG. 14, after the operational flow starts in step S151, a verification is executed in step S152 to ascertain whether or not a new service is available at the server center 2. A new service in this context refers to an upgrade of an existing function or an additional function available to the digital camera integrated portable telephone 1. If there is a new service, a program for offering the new service to the digital camera integrated portable telephone 1 is prepared in step S153, and also, an offer interrupt is enabled in step S154.

In step S155, a registration/initialization processing interrupt is enabled in case the digital camera integrated portable telephone 1 issues a connection request in order to execute the registration/initialization processing shown in FIG. 5. In step S156, a photographing interrupt is enabled in case the digital camera integrated portable telephone 1 issues a connection request during the flow of the photographing mode interrupt shown in FIG. 8. In step S157, a reproduction interrupt is enabled in case the digital camera integrated portable telephone 1 issues a connection request during the flow of the reproduction mode interrupt shown in FIG. 10. In step S158, a contract change interrupt is enabled in case a contract change operation is performed with the operating unit 6 while the server center 2 is connected with the digital camera integrated portable telephone 1. After enabling these interrupts, the operation enters a standby state in step S159.

### - server connection interrupt -

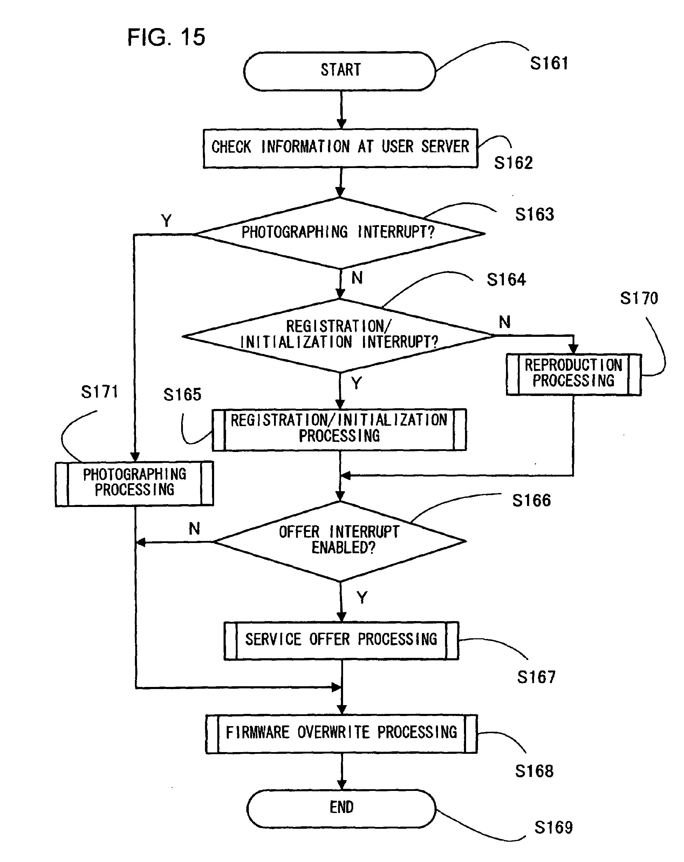

FIG. 15 presents a flowchart of the operation executed when the digital camera integrated portable telephone 1 issues a connection request to the server center 2. The operational flow starts in step S161 if the digital camera integrated portable telephone 1 issues a connection request in order to execute the registration/initialization processing and FIG. 5 or during the flow of the photographing mode interrupt in FIG. 8 or during the flow of the reproduction mode interrupt shown in FIG. 10. In step S162, the digital camera integrated portable telephone 1 having issued the connection request is identified and the corresponding information at theuser server 16 is verified. Details of the information checked at this time are similar to those of the information checked/entered in step S52 and step S53 in FIG. 7.

Once the information at the user server 16 is checked, a verification is executed in step S163 to ascertain whether or not a photographing interrupt has been applied. If it is determined that a photographing interrupt has not been applied, a further verification is executed in step S164 as to whether or not the registration/initialization interrupt has been applied. If the registration/initialization interrupt has been applied, the registration/initialization processing shown in FIG. 5 is executed in step S165. Upon completing the registration/initialization processing, a verification is executed in step S166 to ascertain whether or not the offer interrupt has been enabled. If the offer interrupt has been enabled, the operation proceeds to step S167 to execute service offer processing. More specifically, the offer interrupt is applied and a detailed offer of the new service is transmitted to the digital camera integrated portable telephone 1. Then, in accordance with the user response, a decision is made as to whether or not the new service is to be provided to the user and how the subscription/accounting conditions should be set if the new service is to be provided.

Upon completing the service offer processing, the operation proceeds to step S168 and a firmware overwrite is automatically executed to upgrade the firmware as necessary if a problem such as a bug is present in the firmware of the digital camera integrated portable telephone 1. It is to be noted that the firmware overwrite processing is executed only if the digital camera integrated portable telephone 1 has not yet undergone the overwrite processing based upon the information at the user server 16 which will have been verified in step S162. Following the processing described above, the operational flow ends in step S169.

If it is determined in step S164 that the registration/initialization interrupt has not been applied, the applied interrupt is the reproduction interrupt and, accordingly, processing is executed in step S170 in response to the reproduction mode interrupt shown in FIG. 10, before the operation proceeds to step S166. If, on the other hand, it is determined in step S163 that the photographing interrupt has been applied, processing is executed in step S171 in response to the photographing mode interrupt shown in FIG. 8 and then the operation proceeds to step S168. In the photographing processing executed in step S171, relevant information included in the information on the digital camera integrated portable telephone 1 stored at the user server 16 and has been verified in step S162 is utilized to enable control by the server center 2.

During the operation described above, the offer interrupt is allowed to override the reproduction mode interrupt as is the registration/initialization interrupt, as long as the offer interrupt is enabled, whereas the offer interrupt is not allowed to override the photographing mode interrupt even if the offer interrupt is enabled. As a result, the user having applied the photographing mode interrupt is never forced to miss a good photo opportunity.

### - Second Embodiment -

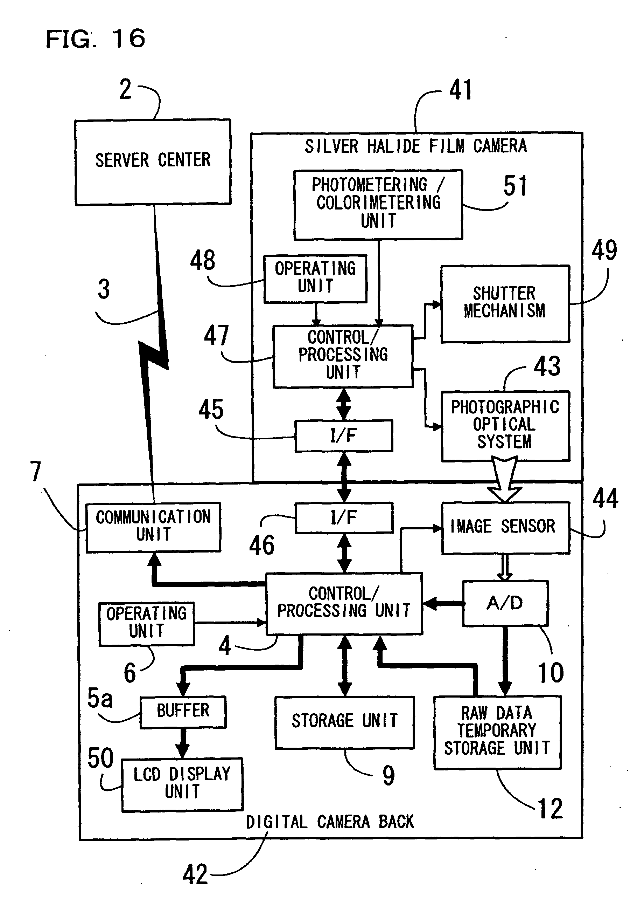

FIG. 16 is a block diagram of the second embodiment of the present invention, having the same reference numerals assigned to components identical to those in the first embodiment shown in FIG. 1. In the second embodiment shown in FIG. 16, the present invention is adopted in a digital camera back 42 to be mounted at a silver halide film camera 41 instead of in a digital camera integrated portable telephone. It shares similarities with the first embodiment in that some of the digital camera functions are provided at the server center 2 and that the digital camera back 42 and the server center 2 work together through a wireless communication 3. It is to be noted that the specific structure adopted by the server center 2 shown in FIG. 16 is identical to that in FIG. 1.

While the silver halide film camera 41 adopts a standard structure, the digital camera back 42 is mounted in place of its detachable rear lid. As a result, a photographic optical system 43 forms a subject image on an image sensor 44. Unlike in the first embodiment, the digital camera back 42 does not include a photographic lens. The image sensor 44 has a large area image sensor and is set directly on the focal plane of a photographic optical system 43.

It is to be noted that as an alternative, a reduction image reforming optical system may be installed forward relative to the image sensor 44 at the digital camera back 42 so as to reform the image at the focal plane of the photographic optical system in a reduced size, with the image sensor 44 disposed at the secondary focal plane of the reduction optical system. In this case, the image sensor 44 does not need to take up a large area.

The overall assembly that includes the digital camera back 42 mounted at the silver halide film camera 41 constitutes a digital camera.

The silver halide film camera 41 and the digital camera back 42 are electrically coupled with each other via an interface 45 and an interface 46, and a digital communication is achieved between a control/processing unit 47 at the silver halide film camera 41 and the control processing unit 4 at the digital camera back 42. The control/processing unit 47 at the silver halide film camera 41 receives operation signals from an operating unit 48 and controls a shutter mechanism 49, the focusing mechanism and the zooming mechanism at the photographic optical system 43 and the like. Accordingly, a shutter release is executed through a shutter release button at the operating unit 48 of the silver halide film camera 41, and a shutter release signal generated in response is transmitted to the control / processing unit 4 via the control/processing unit 47, the interface 45 and the interface 46 in the second embodiment. In turn, the data read from the image capturing unit 11 is switched to the full pixel read, and the image signals read out from the image capturing unit 11 are digitized and are stored into the raw data temporary storage unit 12. Other operational details including the storage of the thumbnail data and the mobile communication data into the storage unit 9 and the transmission of the raw data from the raw data temporary storage unit 12 to the server center 2 are identical to those in the first embodiment including those in FIG. 2 and shown in the flowcharts presented FIGS. 4 through 15.

At the silver halide film camera 41, a photometering / colorimetering unit 51 that measures light passing through the photographic optical system is provided and thus, the silver halide film camera 41 executes exposure adjustment by controlling the shutter speed and the aperture based upon photometric information. In addition, colorimetric information such as the color temperature is recorded at a magnetic recording layer applied onto film or at an information recording portion of a film cartridge, and the information thus recorded is provided to the photo lab as print information. When the digital camera back 42 is mounted at the silver halide film camera 41, the colorimetric information provided by the photometering / colorimetering unit 51 at the time of a shutter release is transmitted to the control / processing unit 4 as well via the control/processing unit 47 and the interfaces 45 and 46. This colorimetric information is transmitted to the server center 2 together with the raw data when the raw data are transmitted to the server center 2. The image processing server 15 shown in FIG. 1 at the server center 2 executes white balance adjustment based upon the colorimetric information indicating the color temperature and the like transmitted to the server center 2.

An LCD display unit 50 of the digital camera back 42 is larger than the LCD display unit used in the first embodiment and is set sideways so that the longer side sits horizontally. As a result, a larger number of thumbnail images can be displayed, mobile communication data can be displayed in a larger size and two split screens can be displayed side-by-side by operating the operating unit 6 in a specific manner.

It is also possible to issue a request for the server center 2 to transmit the compressed data shown in FIG. 2 by operating the operating unit 6. In such a case, upon verifying that the request has been issued from a digital camera back, the server center 2 modifies the compressed data so as to achieve a smaller file size better suited to a display at the LCD display unit 50 and transmits the modified compressed data.

As described above, in the second embodiment, the rear lid of a standard silver halide camera is removed and the image sensor 44 is set in place of silver halide film at the focal plane of the photographic optical system 43 to achieve functions as a digital camera. Crucial components of the digital camera back 42 must include an image sensor with a large number of pixels and a communication function. The execution of the image processing, the image conversion including the compression and the image storage are all assigned to the server center 2, as in the first embodiment. As a result, the digital camera back 42 can be achieved through a simple structure while assuring a high-quality image capturing function.

### - Third Embodiment -

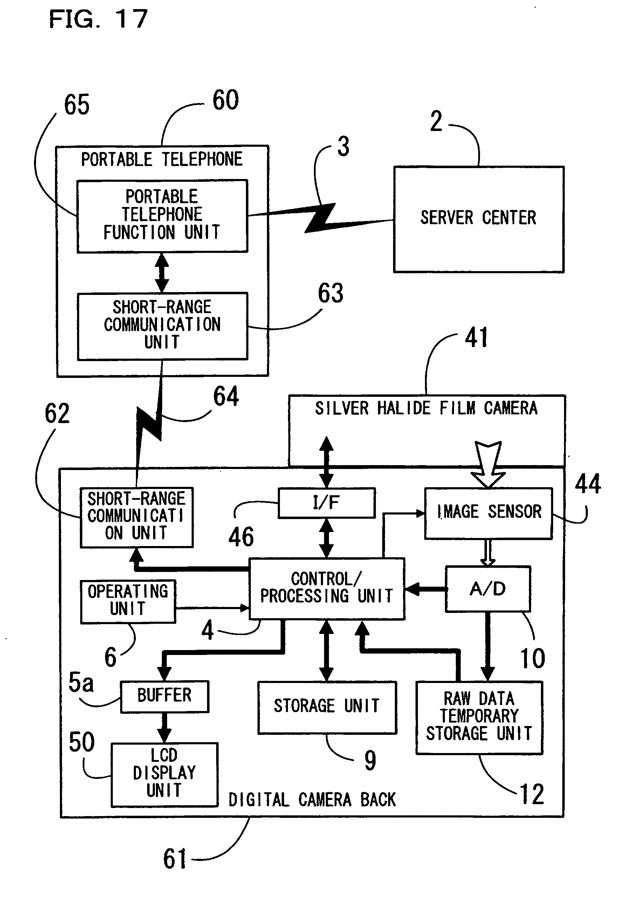

In the block diagram of the third embodiment according to the present invention presented in FIG. 16, the same reference numerals are assigned to components identical to those in the second embodiment shown in FIG. 16. In the third embodiment shown in FIG. 17, which adopts a structure basically identical to that of the second embodiment in FIG. 17, the structure of a digital camera back 61 is further simplified by using the communication function of a regular portable telephone 60. The third embodiment shares similarities with the first embodiment and the second embodiment in that some of the digital camera functions are fulfilled at the server center 2 and that the digital camera back 61 works together with the server center 2 through a wireless communication 3. It is to be noted that the specific structure adopted in the server center 2 shown in FIG. 17 is identical to that shown in FIG. 1, whereas the specific structure of the silver halide film camera 41 is identical to that shown in FIG. 16.

The structure shown in FIG. 17 differs from that in FIG. 16 in that a short-range communication unit 62 utilized to exchange signals with the portable telephone 60 is provided in place of the communication unit 7. More specifically, the short-range communication unit 62, which is constituted of a short-range radio communication device, is connected with a short-range communication unit 63 at the portable telephone 60 through a short-range radio communication 64. As a result, the digital camera back 61 is achieved in a simple structure and, at the same time, there is no need to sign up for a portable telephone subscription service for the digital camera back 61 itself or to obtain a telephone number for the digital camera back 61.

The short-range communication unit 63 in the portable telephone 60 assumes a structure that enables the short-range communication unit 63 to exchange digital signals with a regular portable telephone function unit 65, and the portable telephone 60 connects with the server center 2 through a wireless communication 3 executed by the portable telephone function unit 65. Thus, the digital camera back 61 and the server center 2 are enabled to work together via the short-range communication unit 62, the short-range communication unit 63 and the portable telephone function unit 65.

The user who typically carries the portable telephone 60 can concentrate on photographing images without being distracted by the operation of the portable telephone 60 once the digital camera back 61 is mounted at the silver halide film camera 41, which can then be operated just as easily as a standard digital camera. For instance, when the digital camera back 61 is set the in the photographing mode, the processing up to step S65 is executed as shown in the flowchart presented in FIG. 8 and then, the control / processing unit 4 issues an instruction for the portable telephone function unit 65 at the portable telephone 60 to call the server center 2 via the short-range communication unit 62 and the short-range communication unit 63. Subsequently, after a successful connection is established, the digital camera back 61 and the server center 2 sustain a connected state at all times, as shown in the flow chart. Other functions can be understood by applying the concept of the relationship between the control / processing unit 4 and the communication unit 7 in FIG. 16 (equivalent to the relationship shown in FIG. 1) to the relationship between the control / processing unit 4 and the portable telephone function unit 65 achieved via the short-range communication unit 62 and the short-range communication unit 63 in FIG. 17.

It is to be noted that the short-range communication unit 62 and the short-range communication unit 63 may each be constituted of a means for infrared communication instead of a means for short-range radio communication. In addition, if it is not necessary to perform communication wirelessly, cable connectors may be installed instead of the short-range communication unit 62 and the short-range communication unit 63 to directly connect the digital camera back 61 and the portable telephone 60 with a cable, thereby achieving the simplest and least expensive structure. In such a case, a portable telephone holder should be provided at the digital camera back 61 so as to allow the portable telephone 60 and the digital camera back 61 to be handled as one.

In addition, the structure of the digital camera back may be further simplified by omitting the storage unit 9, the LCD display unit 50 and the buffer 5a in FIG. 17, utilizing the standard LCD display unit of the portable telephone 60 for display and utilizing the standard storage unit provided at the portable telephone 60 for image storage. In this case, the essential components of the digital camera back 61 are substantially pared down to an image sensor with a large number of pixels and peripheral devices such as an output interface of the image sensor and thus, the digital camera back can be achieved with an even simpler and less expensive structure.

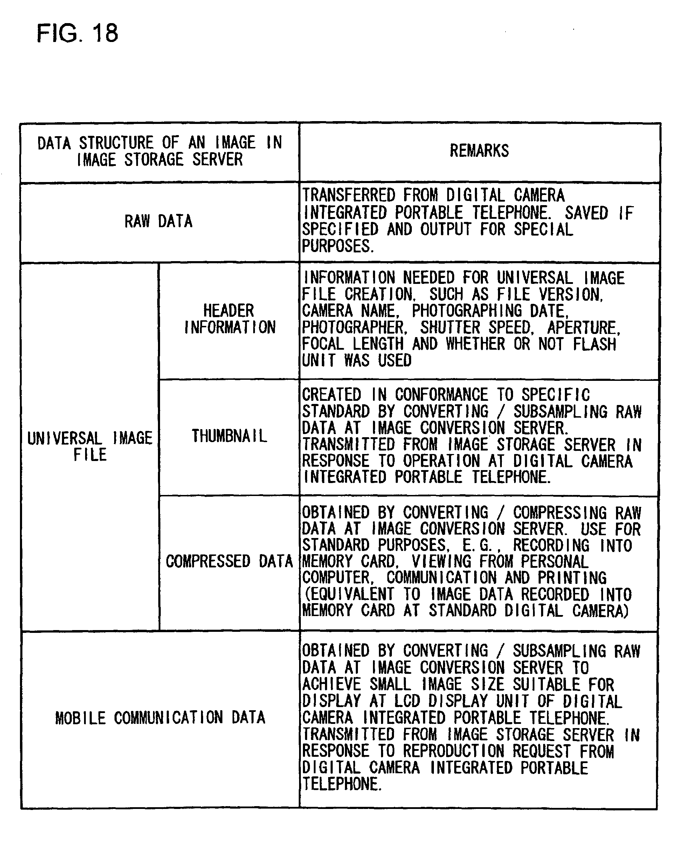

FIG. 18 is a chart of the structure of the data inside an image folder, achieved in another embodiment. The raw data and the mobile communication data are similar to those shown in FIG. 2. However, the compressed data and the thumbnail datadifferfromthosein FIG. 2, and are compiled in an universal image file (or general-purpose image file) conforming to a specific standard such as EXIF with header information attached thereto. The header information includes information needed when creating the universal image file, such as user information indicating the camera name, the photographer and the like and photographic information indicating the file version specified by the photographer, the photographing date, the shutter speed, the aperture, the focal length and whether or not a flash was used. Such information is transmitted to the server center 2 together with the raw data from the digital camera integrated portable telephone 1 shown in FIG. 1 or from the digital camera back 61 shown in FIG. 16 or FIG. 17 and is written into the header portion of the universal image file as the header information when the image conversion server 17 creates the compressed data and the thumbnail data and compiles them into the universal image file. Thus, the universal image file conforming to the specific standard can be created at the server center 2.

While FIG. 1 shows an embodiment in which the present invention is adopted in a digital camera integrated portable telephone, the present invention can be also adopted in a digital camera by dispensing with the transceiver unit 8 and the telephone mode explained in reference to FIG. 1. In addition, while the present invention is adopted in a digital camera backmounted at a silver halide camera in the embodiments shown in FIGS. 16 and 17, the present invention can also be adopted in a dedicated digital camera by permanently coupling the silver halide camera and the digital camera back. Accordingly, the application of the features of the present invention is not limited to digital camera integrated portable telephones or digital camera backs.

### - Fourth Embodiment -

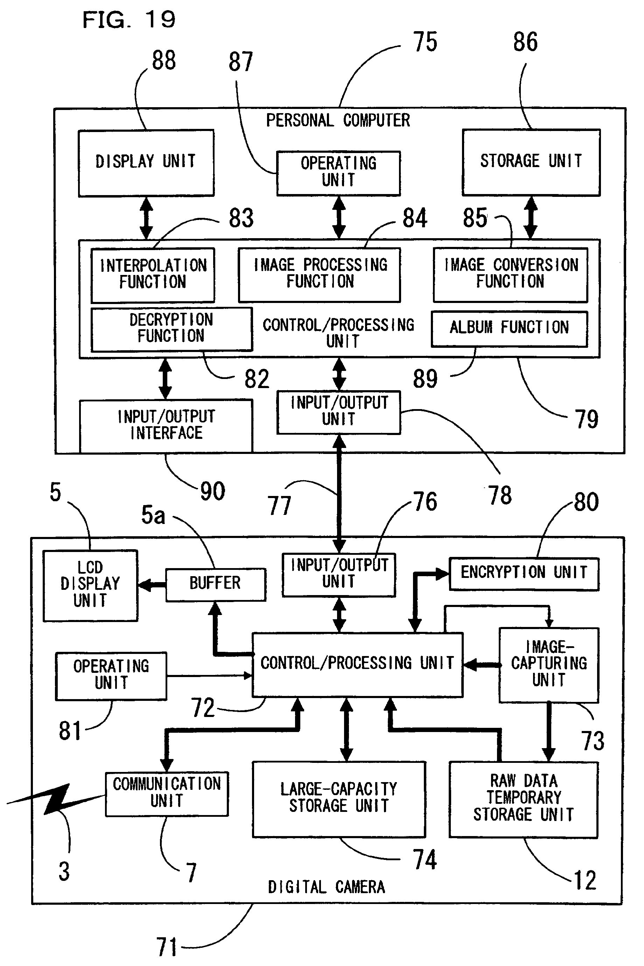

In the block diagram of the fourth embodiment according to the present invention shown in FIG. 19, the same reference numerals are assigned to components identical to those in the first embodiment shown in FIG. 1. It is to be noted that a digital camera 71 shown in FIG. 19, which is not a digital camera integrated portable telephone such as that shown in FIG. 1, does not have a voice conversation function. However, the fourth embodiment allows for an option of constituting the digital camera 71 as a digital camera integrated portable telephone by simply adding the transceiver unit 8 shown in FIG. 1. In addition, the function of the storage unit 9 in FIG. 1 is integrated in a control/processing unit 72 in FIG. 19 and the function is not specifically illustrated. Also, the image capturing unit 11 and the A/D conversion unit 10 in FIG. 1 are integrated as an image capturing unit 73 in FIG. 19, and digital image data are directly output from the image capturing unit 73 and are input to the raw data temporary storage unit 12 and the control/processing unit 72.

In the fourth embodiment shown in FIG. 19, the raw data are stored into a large-capacity storage unit 74 and are thus held inside the digital camera 71, instead of transmitting the raw data to the outside, as shown in FIG. 1. For this reason, the large-capacity storage unit 74 is constituted of a compact hard disk device with a gigabyte level storage capacity or a nonvolatile solid memory. When the user returns home with the digital camera 71, the user connects the digital camera 71 to a personal computer 75 at home to input the raw data in the large-capacity storage unit 74 to the personal computer 75. More specifically, he connects an input/output unit 76 of the digital camera 71 to an input/output unit 78 of the personal computer 75 through a high-speed digital cable 77 to input the raw data in the large-capacity storage unit 74 to a control/processing unit 79 of the personal computer 75 via the control/processing unit 72 for "development" processing.

An encryption processing unit 80 of the digital camera 71 executes encryption processing on raw data when the raw data having been stored in the raw data temporary storage unit 12 are stored into the large-capacity storage unit 74. While the raw data are directly input from the digital camera 1 to the personal computer 75 through the high-speed digital cable 77 under normal circumstances as described above, the raw data may sometimes be transmitted to the personal computer 75 through a public line via the communication unit 7 when, for instance, the storage capacity of the large-capacity storage unit has become low while the user is out or when the user wishes to transmit the raw data immediately. The encryption processing unit 80 is provided to assure a high level of security in such a situation. Since the structure ensures that the image data cannot be accessed unless image data are input to the personal computer 75 and are then decrypted, a high level of protection for the image data is assured. In addition, since the digital camera 71 by itself is not very useful, any attempt at theft is deterred and for this reason, the digital camera 71 can be marketed as a rental camera in an ideal manner. It is to be noted that while an operating unit 81 adopts a structure basically identical to that of the operating unit 6 shown in FIG. 1, the operating unit 81 enables operations compatible with the digital camera 71.

The encrypted raw data input to the control/processing unit 79 at the personal computer 75 are decrypted back to the standard raw data through a decryption function 82. An interpolation function 83 is utilized to generate image signals corresponding to different colors such as R, G and B by executing interpolation processing matching the type of image sensor provided at the image capturing unit 73 on the raw data. An image processing function 84 is used to execute necessary image processing such as white balance adjustment and edge emphasis processing on the image signals corresponding to the different colors. An image conversion function 85 is used to create compressed image data by executing recording format conversion processing or compression processing on the image data having undergone the image processing. The image conversion function 85 is also used to create "mobile communication data" and thumbnail data conforming to a specific standard by executing cull processing on the image data having undergone the image processing. The different types of data described above are compiled into a single image folder as data related to a single image and are stored into a storage unit 86. The structure of the image folder may be similar to that shown in FIG. 2. The "mobile communication data" can be transferred from the input output unit 78 to the control/processing unit 72 via the high-speed digital cable 77 and stored into the control/processing unit 72 so as to allow the image to be viewed at the digital camera 71.

The personal computer 75 also functions as an image storage apparatus, and the user can issue instructions to search for specific image data stored at the storage unit 86 for viewing, print specific image data stored at the storage unit 86 and the like via an operating unit 87 constituted of a keyboard, a mouse and the like and a display unit 88 such as a monitor. These functions as an image storage apparatus are realized by using an album function 89.

The functions of the control/processing unit 79 described above are installed as a software program into the personal computer 75 from an input/output interface 90. In more specific terms, the input/output interface 90 is constituted as a CD ROM drive or a communication function, and the program that can be downloaded via the CD ROM having stored therein, the program or via the communication function is coupled with the digital camera 71 to be marketed as a commercial product package.

In order to reproduce an image at the digital camera 71 immediately after a photographing operation, raw data identical to the raw data stored into the raw data temporary storage unit 12 with the image capturing timing are input from the image capturing unit 73 to the control/processing unit 72. The raw data then undergo the cull processing at the control/processing unit 72 and are converted to display data with an image size suited for display at the LCD display unit 5 (equivalent to the "mobile communication data" in the first embodiment) and thumbnail data. The display data and the thumbnail data are then stored in correspondence to the raw data having been stored in the raw data temporary storage unit 12. The image is reproduced at the digital camera 71 by using the display data and the thumbnail data stored in the storage unit (corresponding to the storage unit 9 in FIG. 1) within the control/processing unit 72, as described above. These data with small data volumes are good enough for the data reproduction at the digital camera 71 which is executed at the small screen of the LCD display unit 5, and since the processing onus on the digital camera 71 is greatly reduced and the length of processing time is also reduced compared to the processing onus and the length of processing time in a digital camera that reproduces image data stored executing interpolation and image processing on the raw data, the digital camera 71 is enabled to provide full support for images obtained through continuous shooting as well.

As an alternative, the digital camera 71 does not need to include any structural features of the LCD display unit 5 or to be equipped with functions such as the display data creation at the control/processing unit 72, and in such a case, no images are reproduced at the digital camera 71. Instead, images will be checked after they are "developed" at the personal computer 75. By adopting this alternative, the structure of the digital camera 71 can be further simplified. The digital camera 71 can then be used in a familiar manner as the user would any conventional silver halide camera. In addition, since no image can be obtained unless data are first "developed" in the personal computer, all image data are gathered into the personal computer to undergo the "development" processing and are managed through the album function of the personal computer. Thus, no image data are lost.

### - Fifth Embodiment -

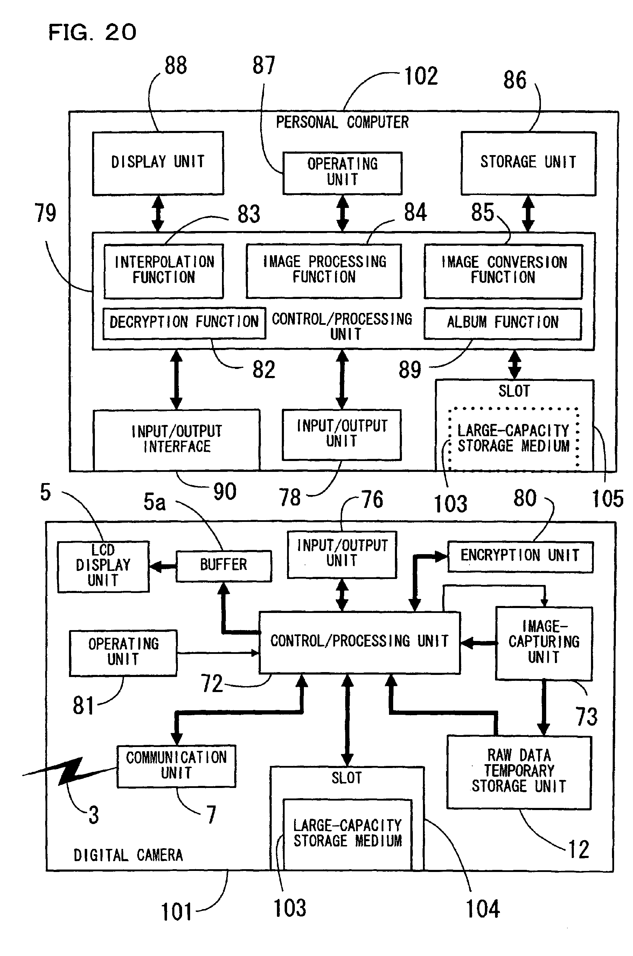

In the block diagram of the fifth embodiment according to the present invention presented in FIG. 20, the same reference numerals are assigned to components identical to those in the fourth embodiment shown in FIG. 19. While the fifth embodiment in FIG. 20 includes a digital camera 101 and a personal computer 102, as does the fourth embodiment, it differs from the structure shown in FIG. 19 in that the large-capacity storage unit 74 is replaced with a detachable large-capacity storage medium 103. The large-capacity storage medium 103 may be a detachable card-type compact hard disk drive or a nonvolatile solid memory card. The large-capacity storage medium 103 can be detachably loaded into a storage medium slot 104, and thus, when the user returns home with the digital camera 101, he unloads the large-capacity storage medium 103 from the digital camera 101 and inputs the raw data in the large-capacity storage medium 103 to the personal computer 102 by inserting the large-capacity storage medium 103 in a storage medium slot 105 of the personal computer 102 at home. The raw data input to the personal computer 102 are "developed" by the control/processing unit 79, as in the configuration shown in FIG. 19. Since the details of this process are the same as those explained in reference to FIG. 19, they are not explained here.

The raw data may also be input to the personal computer 102 by connecting the input/output units 76 and 78 through a high-speed digital cable, as shown in FIG. 19 while the large-capacity storage medium 103 is still inserted at the storage medium slot 104 of the digital camera 101 as well.

### - Sixth Embodiment -

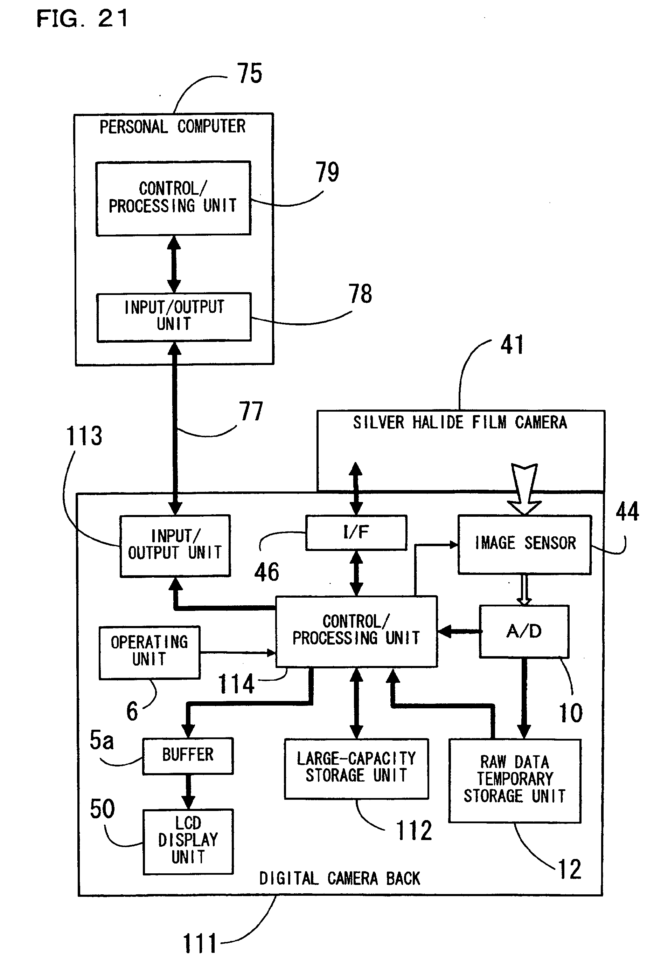

In the block diagram of the sixth embodiment according to the present invention presented in FIG. 21, the same reference numerals are assigned to components identical to those in the third embodiment shown in FIG. 17. In addition, since the personal computer 75 adopts a structure identical to that in the fourth embodiment shown in FIG. 19, an illustration of the structural features except for the control/processing unit 79 and the input/output unit 78 and an illustration of the internal structure of the control/processing unit 79 are omitted.

As in the third embodiment shown in FIG. 17, the digital camera functions are realized by combining the silver halide film camera 41 and a digital camera back 111 in the sixth embodiment shown in FIG. 21. However, as in the fourth embodiment shown in FIG. 19, the raw data are stored into a large-capacity memory unit 112 and are held inside the digital camera back 111 instead of transmitting the raw data to the outside. For this reason, the large-capacity storage unit 112 is constituted of a compact hard disk device with a gigabyte-level storage capacity or a nonvolatile solid memory, as is the large-capacity memory unit in the fourth embodiment. When the user returns home with the digital camera back 111, the user connects the digital camera back 111 to the personal computer 75 at home to input the raw data in the large-capacity storage unit 111 to the personal computer 75. More specifically, he connects an input/output unit 113 of the digital camera back 111 to the input/output unit 78 of the personal computer 75 through the high-speed digital cable 77 to input the raw data in the large-capacity storage unit 112 to the control/processing unit 79 of the personal computer 75 via the control/processing unit 114 for "development" processing. Other functions are realized as in the third embodiment.

### - Seventh Embodiment -

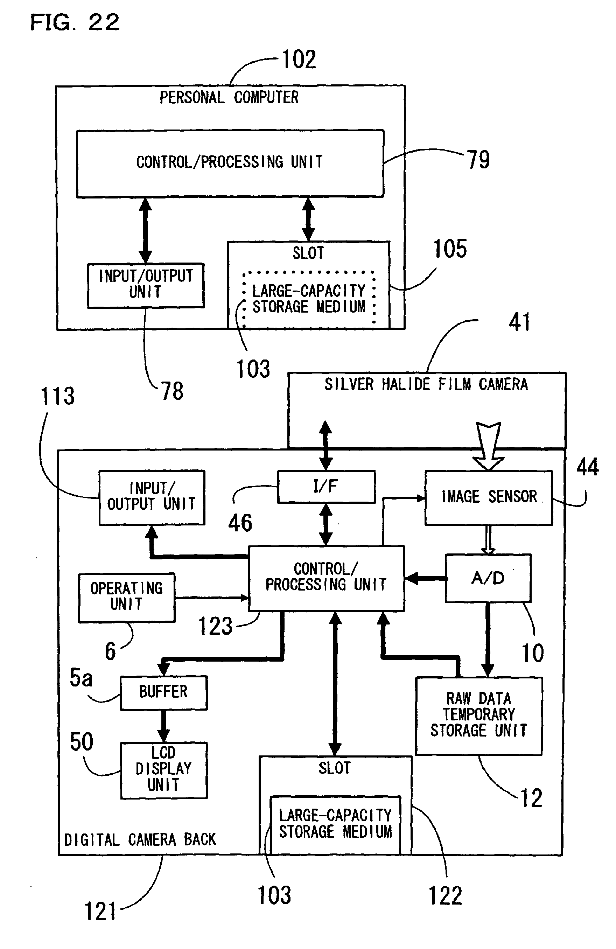

In the block diagram of the seventh embodiment according to the present invention presented in FIG. 22, the same reference numerals are assigned to components identical to those in the sixth embodiment shown in FIG. 21. In addition, since the personal computer 102 adopts a structure identical to that in the fifth embodiment shown in FIG. 20, an illustration of the structural features except for the control/processing unit 79, the input/output unit 78 and the storage medium slot 105 and an illustration of the internal structure of the control/processing unit 79 are omitted.

While the seventh embodiment in FIG. 22 includes a digital camera back 121, the silver halide film camera 41 and the personal computer 102, as does the sixth embodiment, it differs from the structure shown in FIG. 21 in that the large-capacity storage unit 112 is replaced a detachable large-capacity storage medium 103, similar to that shown in FIG. 20. The large-capacity storage medium 103 may be a detachable card-typed compact hard disk drive or a nonvolatile solid memory card as in the embodiment shown in FIG. 20. The large-capacity storage medium 103 can be detachably loaded into a storage medium slot 122, and thus, when the user returns home with the digital camera back 121, he unloads the large-capacity storage medium 103 from the digital camera back 121 and inputs the raw data in the large-capacity storage medium 103 to the personal computer 102 by inserting the large-capacity storage medium 103 in the storage medium slot 105 of the personal computer 102 at home. The raw data input to the personal computer 102 are "developed" by the control/processing unit 79, as in the configuration shown in FIG. 19. Since the details of this process are the same as those explained in reference to FIG. 19, they are not explained here.

It is to be noted that the raw data may also be input to the personal computer 102 by connecting the input/output units 113 and 78 through a high-speed digital cable, as shown in FIG. 21, while the large-capacity storage medium 103 is still inserted at the storage medium slot 122 of the digital camera back 121, as well.

### - image storage flow (fourth through seventh embodiments) -

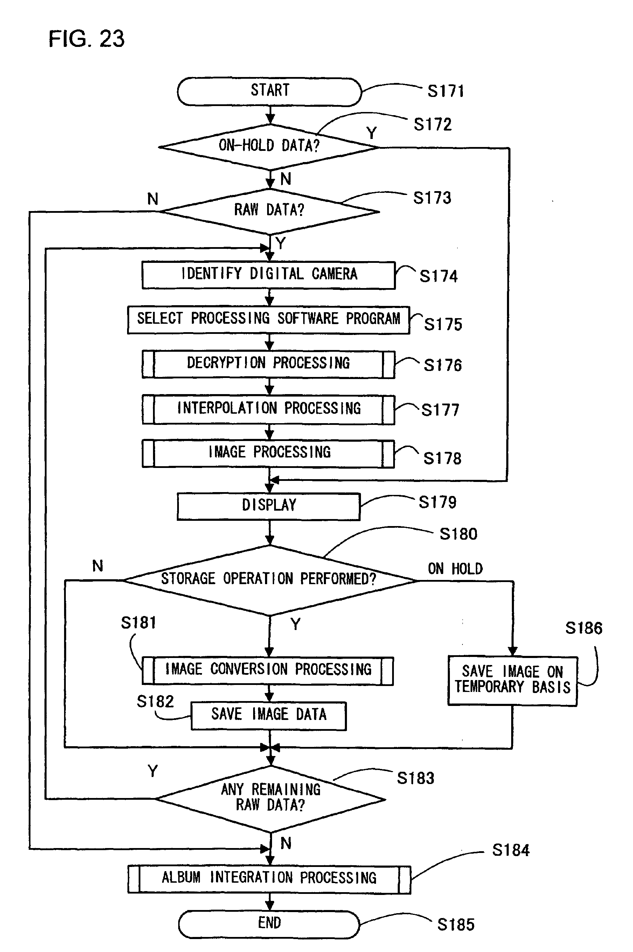

FIG. 23 shows the flow of the image storage operation executed in the personal computer in the fourth through seventh embodiments. The operational flow starts in step S171 as image data are input to the input/output unit 78 via the high-speed digital cable 77 or image data are input from the large-capacity storage medium 103 via the storage medium slot 105. In step S172, a verification is executed to ascertain whether or not there are any on-hold data. It is to be noted that the term "on-hold data" is to be explained later. If it is determined that there are no on-hold data, the operation proceeds to step S173 to ascertain whether or not the input data are raw data.

If it is determined in step S173 that the input data are raw data, the operation proceeds to step S174 to identify the digital camera, which may instead be a "digital camera back". Thesameprincipleapplieshereafter, basedupondata input thereto. Based upon the results of the identification, the processing software program, which is marketed as a product package offering the digital camera and the software program as a set and is pre-installed in the personal computer is selected and started up in step S175. Is assumed that the personal computer can process image data input froma plurality of digital cameras and has a plurality of software processing programs installed to process image data from the individual digital cameras. In step S175, one of the plurality of processing software programs is selected. As described above, the data input to the personal computer contain information needed to identify the digital camera and based upon this information, processing such as the interpolation can be executed in a compatible manner.

In step S176 through step S178, description processing, interpolation processing and image processing are individually executed by using the processing software program selected in step S175 on the image data, one set at a time, and as the processing is completed, the image resulting from the processing is displayed at the display unit 88 in step S179. In step S180, a verification is executed to ascertain whether or not a storage operation has been performed with the operating unit 87 within a predetermined length of time following the start of the display. If a storage operation has been performed, the image is compressed and the like through image conversion processing executed in step S181 and also, the compressed image data are saved in step S182 before the operation proceeds to step S183. If, on the other hand, it is determined in step S180 that no storage operation has been performed within the predetermined length of time, a verifying message is brought up on display at the display unit 88 and then, if the operating unit 87 is operated to indicate no intent to store the image anyway, the operation proceeds directly to step S183. In this case, the input image data are not saved and instead are deleted. It is to be noted that if the user is unable to decide whether or not to save the image data at this time, he operates the operating unit 87 within a predetermined length of time to enter an "on hold" instruction. In such a case, the operation proceeds to step S186 to temporarily save the image data in an uncompressed state as "on hold" data.

In step S183, a verification is executed to ascertain whether or not there are still any raw data remaining in the input data, and if it is determined that there are raw data present in the input data, the operation returns to step S174 to start the processing on the next set of the raw data, and subsequently, the processing in step S174 through step S183 is repeatedly executed until the processing of all the raw data is completed. Then, when it is determined that there are no more unprocessed raw data, the operation proceeds to step S184. While it is rather redundant to execute the processing in step S174 and the processing in step S175 for each set of raw data when processing raw data obtained through image capturing operations executed in a single digital camera, there are situations in which a large-capacity storage medium has been used in different digital cameras and, as a result, holds raw data provided by different image capturing units together and there are also situations in which "on-hold data" are to be processed. For this reason, the operation follows the flow in which it returns from step S183 to step S174.

In step S184, album integration processing is executed. This processing is executed so as to manage all the image data input to the personal computer within an integrated album, by transferring the image data saved in step S182 to the integrated album regardless of the specific type of processing software program selected in step S175. As a result, all the data input to the personal computer are accumulated in the integrated album, and thus, any image data can be retrieved without fail by searching the integrated album with an album software program. Upon completing the album integration processing, the image storage flow ends in step S185.

If it is determined in step S172 that "on-hold data" resulting from the previous on hold processing are present in a temporarily saved state, the operation jumps to step S179 to display the on-hold data and then, a final decision on how the data should be processed is prompted in step S180. The subsequent processing is executed as described earlier and since there will be some unprocessed raw data under normal circumstances, the operation returns from step S183 to step S174 to execute the specific processing.

In addition, if it is determined in step S173 that the input data are not raw data, it means that compressed image data having already been processed into the standard image format have been input to the personal computer, and accordingly, the operation proceeds to step S184 to execute the album integration processing. As described above, in the image storage flow at the personal computer shown in FIG. 23, images are stored so that all the input image data, including image data having undergone the compression processing and thus having been converted into the standard image format and raw data, are managed within a single integrated album.

In the fourth through seventh embodiments explained above, too, header information needed for universal image file creation, such as the user information indicating the camera name, the photographer and the like and the photographic information indicating the file version specified by the photographer, the photographing date, the shutter speed, the aperture, the focal length and whether or not the flash unit was utilized, is input together with the raw data to the personal computer so as to manage the image data as a universal image file conforming to a specific standard as has been explained in reference to FIG. 18. These data are written into the header portion of the universal image file as the header information when the compressed data and the thumbnail data created at the personal computer through the image conversion are compiled into the universal image file. Through this process, a universal image file conforming to the specific standard is created at the personal computer.

### - Eighth Embodiment -

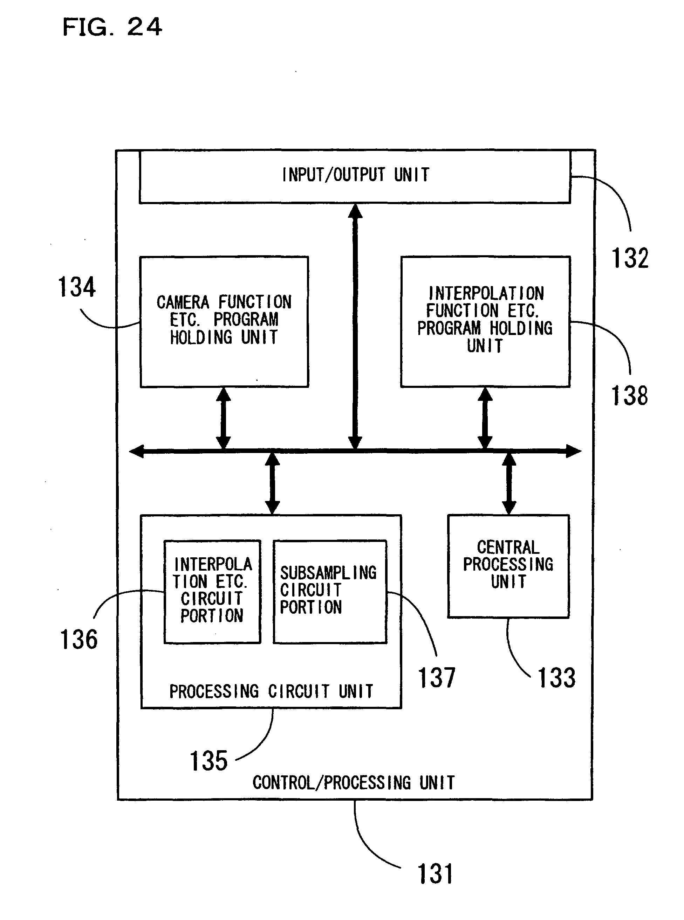

FIG. 24 is a block diagram of the essential portion of the eighth embodiment according to the present invention. In the eighth embodiment, the functional details of the control/processing units in the first through seventh embodiments are modified. Accordingly, FIG. 24 simply shows the internal structure of a control/processing unit 131 and does not include an illustration of the other components. In addition, the eighth embodiment in which the control/processing units in the first through seventh embodiments are modified can be realized in seven different forms. As the functional details of the control/processing unit 131 are altered, the structure adopted to receive raw data and interpolate the raw data, e.g., the function of the server center 2 in the first embodiment shown in FIG. 1 and the function of the personal computer 102 in the fifth embodiment shown in FIG. 20, is also altered (the function is simplified) and such alterations are to be explained in detail later.

First, an explanation is given on specifically how the control/processing unit 131 in FIG. 24 operates in conjunction with the first embodiment shown in FIG. 1. The various components 5a and 6 through 12 of the digital camera integrated portable telephone 1 in FIG. 1 are connected to an input/output unit 132. A central processing unit 133 executes specific processing based upon a program which is stored in a camera function etc. program holding unit 134 provided to realize camera functions and the like, and also controls the components 5a and 6 through 12 as well as exchanging data and signals with the components 5a and 6 through 12 via the input/output unit 132.

As described above, some of the functions of the control/processing unit 131 are realized by the central processing unit 133 executing the program stored at the camera function etc. program holding unit 134. Other functions of the control/processing unit 131 are realized in a processing circuit unit 135 which is constituted of a hard logic circuit.

For instance, as explained earlier, if the photographing mode is selected in the digital camera shown in FIG. 1, a culled read is executed at the image capturing unit 11 under the control implemented by the control / processing unit 4 until the shutter is released, and then the image signals read out are digitized at the A/D conversion unit 10 and the resulting post-cull image data are provided to the control / processing unit 4. At the control/processing unit 131 in FIG. 24, which corresponds to the control / processing unit 4 in FIG. 1, the post-cull image data are processed at a circuit portion (hereafter referred an interpolation etc. circuit portion) 136 of the processing circuit unit 135, which executes interpolation and the like, and as a result, image signals corresponding to different colors such as R, G and B are prepared. The control/processing unit 131 also converts the image signals corresponding to the different colors to display image data and the display image data are then transferred to the buffer 5a from the input/output unit 132.

Also, as explained earlier, when the shutter is released in the camera shown in FIG. 1, the data read from the image capturing unit 11 is switched to a full pixel read under the control implemented by the control / processing unit 4, the image signals read out from the image capturing unit 11 are digitized at the A/D conversion unit 10 and the digital data are then sent to the raw data temporary storage unit 12 for temporary storage. Once the storage of the raw data is completed, the data read from the image capturing unit 11 is switched back to the culled read and the dynamic image monitoring at the LCD display unit 5 is resumed. At the control/processing unit 131 in FIG. 24, processing for displaying the results of the image capturing operation at the LCD display unit 5 over a predetermined length of time before resuming the dynamic image monitoring is executed. In order to enable this processing, the raw data stored into the raw data temporary storage unit 12 immediately after the image capturing operation are sent to the control/processing unit 131 where the raw data are culled at a culling circuit portion 137 of the processing circuit unit 135. At this time, the raw data are culled to an extent roughly equal to the extent to which the data at the image capturing unit 11 are culled during the culled read and, as a result, the data volume is reduced to a level that is still high enough for display at the LCD display unit 5. Then, the post-cull image data provided by the culling circuit portion 137 undergo the processing executed by the interpolation etc. circuit portion 136 to create image signals corresponding to different colors such as R, G and B and the image signals are converted to display image data which are transferred to the buffer 5a from the input/output unit 132. After the captured image data are displayed over the predetermined length of time as described above, the dynamic image monitoring is resumed at the LCD display unit 5 by using image signals obtained through the culled read at the image capturing unit 11. It is to be noted that the data having undergone the processing at the interpolation etc. circuit portion 136 are stored into the storage unit 9 in FIG. 1 to be used for reproduction within the digital camera integrated portable telephone.

As explained earlier, the raw data saved into the raw data temporary storage unit 12 in response to any operation of the shutter release button in FIG. 1 are immediately transmitted to the communication unit 13 at the server center 2 from the control / processing unit 4 via the communication unit 7 without first undergoing processing such as interpolation and white balance adjustment or compression processing. At this time, a program that enables the processing such as interpolation and is stored in an interpolation function etc. program holding unit 138 at the control/processing unit 131 is transmitted together with the raw data to the communication unit 13 at the server center 2 via the communication unit 7 in the embodiment shown in FIG. 24. In this case, the program stored in the interpolation function etc. program holding unit 138 is not executed at the control/processing unit 131 itself but is stored within the control/processing unit 131 so as to be made available to the server center 2 for an execution thereof at the server center 2, instead. In conformance to the program stored in the interpolation function etc. program holding unit 138, the following image processing is executed. Image signals corresponding to different colors such as R, G and B are created by executing interpolation processing matching the type of image sensor on the raw data and also, image processing such as white balance adjustment and edge emphasis processing is executed to create uncompressed universal image data that can be handled at the server center 2. By transmitting the interpolation function etc. program to the server center 2 together with the raw data as in the eighth embodiment shown in FIG. 24, the structureofthe server center 2 canbe simplified as described below.

Namely, when a connection between the digital camera integrated portable telephone 1 and the server center 2 is established in the first embodiment shown in FIG. 1, information indicating the owner of the digital camera integrated portable telephone and the model type of the digital camera integrated portable telephone is transmitted to the server center. Then, the image processing server 15 obtains the information indicating the color filter arrangement at the image sensor of the image capturing unit 11 based upon the record held at the user server 16 and accordingly, it executes the interpolation processing matching the type of image sensor 11 on the raw data transmitted to the server center to create the image signals corresponding to different colors such as R, G and B and also executes necessary image processing including white balance adjustment and edge emphasis processing. In other words, in the first embodiment, shown in FIG. 1, a plurality of interpolation function etc. programs are provided in advance and the processing is executed in conformance to the interpolation function etc. program selected in correspondence to the specific model type of the digital camera integrated portable telephone connected with the server center 2 by identifying the owner and the model type of the digital camera integrated portable telephone.

In contrast, the interpolation function etc. program itself, which is needed to process the raw data to obtain universal image data, is transmitted together with the raw data to the server center 2 in the eighth embodiment shown in FIG. 24. As a result, the universal image data can be obtained with ease by executing the processing at the image processing server 15 on the raw data transmitted to the server center 2 without the server center side having to acquire in advance the interpolation function etc. program compatible with the digital camera integrated portable telephone, or even when the raw data are received from a first-time user. Since the image processing server 15 outputs the universal image data, compressed image data and the like can be created easily by the image conversion server 17 through the recording format conversion processing and the conversion processing executed on the image data transferred thereto.

It is to be noted that other programs to be used at the server center may also be stored in the interpolation function etc. program holding unit 138, and these programs may be transmitted together with the interpolation function etc. program to the server center. For instance, a decompression program to be used to reconvert reversibly compressed (or lossless-compressed) raw data transmitted to the server center to the original raw data by decompressing the compressed data at the server center, a program which enables image file creation at the server center and the like, too, may be stored at the interpolation function etc. program holding unit 138 and be transmitted to the server center when transmitting the interpolation function etc. program.

While an explanation is given above on the specific details of the control / processing unit 131 achieved in the eighth embodiment in reference to the first embodiment in FIG. 1, the same concept can be adopted in the fourth through seventh embodiments in FIGS. 19 to 22 in which the raw data are input to the personal computer 75 installed at home instead of transmitting the raw data to the outside, as well as in the second and third in embodiments respectively shown in FIGS. 16 and 17.

Namely, the program stored in the interpolation function etc. program holding unit 138 shown in FIG. 24 can also be input when inputting the raw data in the large-capacity storage unit of the digital camera to the personal computer 75 through the high-speed digital cable 77 as in the fourth embodiment shown in FIG. 19 and the sixth embodiment shown in FIG. 21.

In addition, the program stored in the interpolation function etc. program holding unit 138 shown in FIG. 24 can be input to the large-capacity storage medium 103 so that the program is also input together with the raw data stored in the large-capacity storage medium 103 to the personal computer 102 by unloading the large-capacity storage medium 103 from the digital camera and inserting the large-capacity storage medium 103 at the storage medium slot 105 at the personal computer 102 as in the fifth embodiment shown in FIG. 20 and the seventh embodiment shown in FIG. 22. As a result, the personal computer 102 receives the interpolation function etc. program together with the raw data.

It is to be noted that if the interpolation function etc. program has already been transmitted to the server center or input to the personal computer in the eighth embodiment shown in FIG. 24 explained above, the transmission or the input does not need to be executed again.

### - shutter release interrupt (eighth embodiment) -

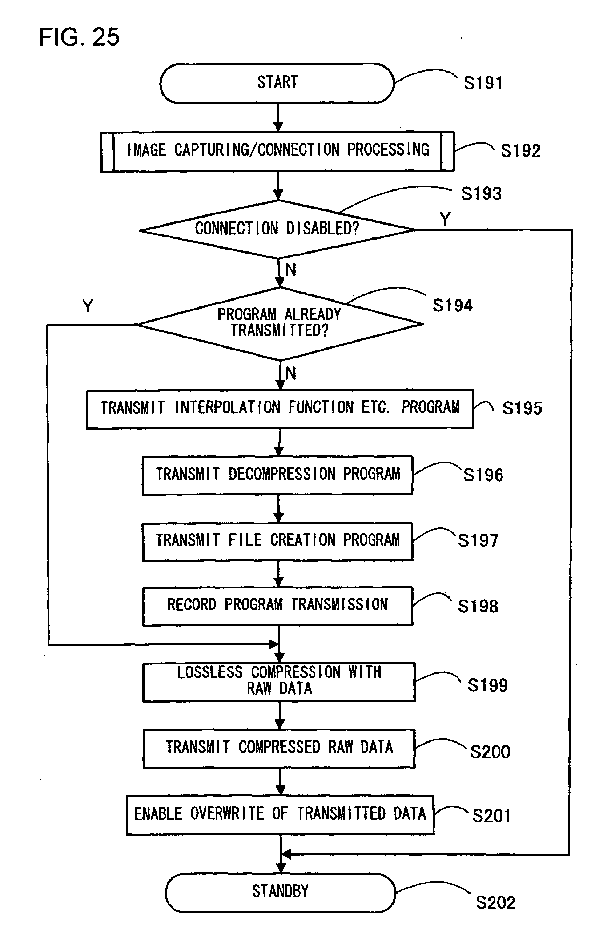

FIG. 25 presents a flowchart of the shutter release interrupt executed in the first embodiment when the control/processing unit is altered as explained in reference to the eighth embodiment. As in FIG. 9, the operational flow starts in step S191 in response to the shutter release interrupt applied by operating the operating unit 6. Details of the image capturing/connection processing executed in step S192 are identical to those of the image capturing processing executed in steps S77 through S79 in FIG. 9 and those of the connection processing executed in steps S80 through S83 in FIG. 9. In step S193, a verification is executed to ascertain whether or not an attempt to connect with the server center has failed, and if there is already an ongoing connection with the server center or if a connection has been successfully established by calling the server center, the operation proceeds to step S194.

In step S194, a verification is executed to ascertain whether or not the program stored at the interpolation function etc. program holding unit 138 has already been transmitted to the server center, and if it is determined that the program has not been transmitted yet, the operation proceeds to step S195. In step S195, the interpolation function etc. program is transmitted to the server center. In step S196, the decompression program to be used to reconvert the reversibly compressed raw data (i.e. the raw data which has undergone losslesscompression) totheoriginalrawdatabydecompressing them is also transmitted to the server center. In addition, the program needed for the image file creation at the server center, too, is transmitted to the server center in step S198. In step S198, information indicating that these programs have been transmitted to the server center is recorded, before the operation proceeds to step S199. If, on the other hand, it is determined in step S194 that the interpolation function etc. program has already been transmitted, the operation proceeds directly to step S199.

In step S199, the raw data stored in the raw data temporary storage unit 12 are reversibly compressed, and the compressed data are then transmitted to the server center in step S200. In step S201, processing is executed to permit the raw data that have been successfully transmitted to be overwritten with new raw data at the raw data temporary storage unit 12 and then, the operation enters a standby state for the next shutter release in step S202. If, on the other hand, it is determined in step S193 that a connection with the server center has not been established, the operation proceeds directly to step S202 and enters a standby state. In this case, the raw data are left untransmitted at the raw data temporary storage unit 12.

The operational flow in the flowchart presented in FIG. 25 can also be adopted in the second embodiment and the third embodiment and FIGS. 16 and 17, in which the communication with the server center is achieved via the communication unit, as in the first embodiment. In addition, it can also be adopted with equal effect in embodiments in which the communication with the personal computer is achieved via a high-speed digital cable, as in the fourth embodiment and the sixth embodiment respectively shown in FIGS. 19 and 21.

As described above, the latest version of the program is also transmitted when the raw data are transmitted in response to a shutter release in the embodiment shown in FIG. 25, and thus, a server center or a personal computer that has not acquired the program in advance is enabled to execute correct processing, e.g., interpolation, on the raw data having been received.

### - main flow (eighth embodiment) -

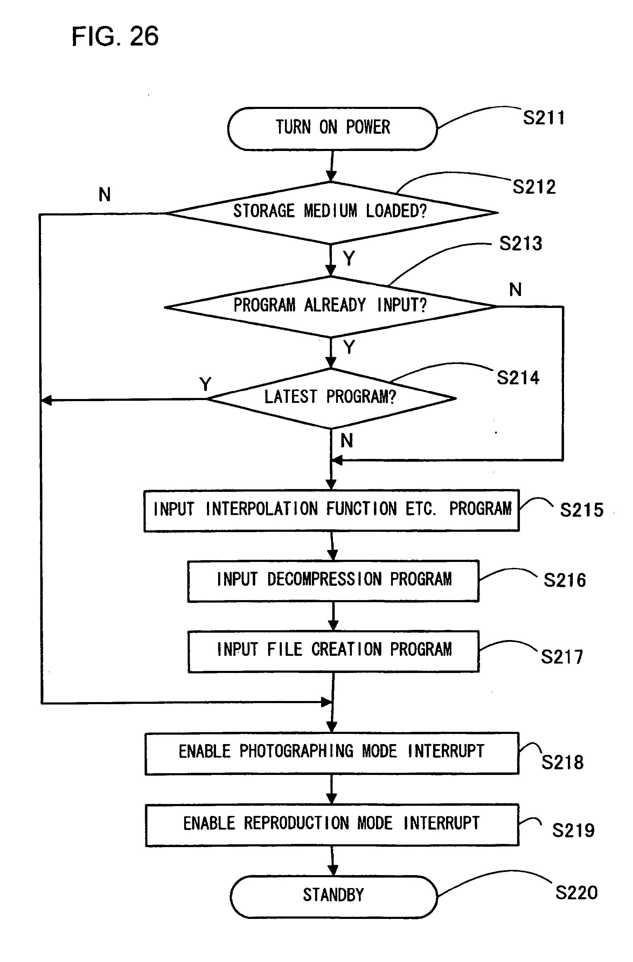

FIG. 26 presents a main flowchart of the operation executed in a digital camera in which the control/processing unit in the fifth embodiment and FIG. 2 or the seventh embodiment in FIG. 22 adopts the alterations achieved in the eighth embodiment. It is to be noted that when the modified control/processing unit in the eighth embodiment is adopted in either the fifth embodiment or the seventh embodiment, the function of the encryption processing unit 80 or 82 may be omitted. The following is an explanation on an example in which the modified control/processing unit in the eighth embodiment is adopted in the fifth embodiment shown in FIG. 20.

As the power switch is turned on through an operation at the operating unit 81, the operational flow starts in step S211, and in step S212 a verification is executed to ascertain whether or not the large-capacity storage medium 103 is currently loaded in the storage medium slot 104. If it is determined that the large-capacity storage medium 103 is loaded in the storage medium slot 104, the operation proceeds to step S213 to execute a verification to ascertain whether or not the program stored at the interpolation function etc. program holding unit 138 has already been input to the large-capacity storage medium 103.

If it is determined that the program has already been input, the operation proceeds to step S214 to execute a verification as to whether or not the program having been input to the large-capacity storage medium 103 is identical to the latest program version stored in the interpolation function etc. program holding unit 138. Then, if it is determined that the program is not the most recent version, the operation proceeds to execute the processing in step S215 and subsequent steps. If it is determined in step S213 that the program has not been input to the large-capacity storage medium 103, the operation proceeds directly to execute the processing in step S215 and subsequent steps.

In step S215, latest version of the interpolation function etc. program stored in the interpolation function etc. program holding unit 138 is input to the large-capacity storage medium 103 via the storage medium slot 104. In step S216, the latest version of the decompression program stored in 138 is input to the large-capacity storage medium 103 via the storage medium slot 104. In step S217, the latest version of the file creation program stored in 138 is input to the large-capacity storage medium 103 via the storage medium slot 104. Once these programs are input, the operation proceeds to step S218.

If, on the other hand, it is determined in step S212 that the large-capacity storage medium 103 is not loaded in the storage medium slot 104, the operation proceeds directly to step S218. In addition, if it is determined in step S214 that the program having been input to the large-capacity storage medium 103 is identical to the latest version of the program stored in the interpolation function etc. program holding unit 138, the operation proceeds directly to step S218 as well.

Once the program identical to that stored in the interpolation function etc. program holding unit 138 is input to the large-capacity storage medium 103, inserted at the storage medium slot 104 as described above, this program is held in the large-capacity storage medium 103. If, on the other hand, the program has not been input to the large-capacity storage medium 103 or if the program having been input to the large-capacity storage medium 103 is not the latest version of the program, the latest version of the program stored in the interpolation function etc. program holding unit 138 is input to the large-capacity storage medium 103 in response to a power on operation. In this manner, it is ensured that the latest version of the program is provided to the large-capacity storage medium, whether it is a new large-capacity storage medium recently loaded into the medium slot 104 or a large-capacity storage medium having stored therein an older version of the program.

In step S218, the photographingmode interrupt is enabled and in step S219, the reproduction mode interrupt is enabled before the digital camera enters a standby state in step S220.

As described above, the contents of the large-capacity storage medium 103 are constantly kept current with the latest versions of the programs to be used to process raw data, and thus, when the large-capacity storage medium 103 is loaded into the medium slot 105 at the personal computer 102, the latest version of the program is installed into the control/processing unit 79 of the personal computer 75 from the large-capacity storage medium 103 to enable the control/processing unit 79 to execute the interpolation processing and the like on the raw data received from the large-capacity storage medium 103.

### - shutter release interrupt (eighth embodiment) -

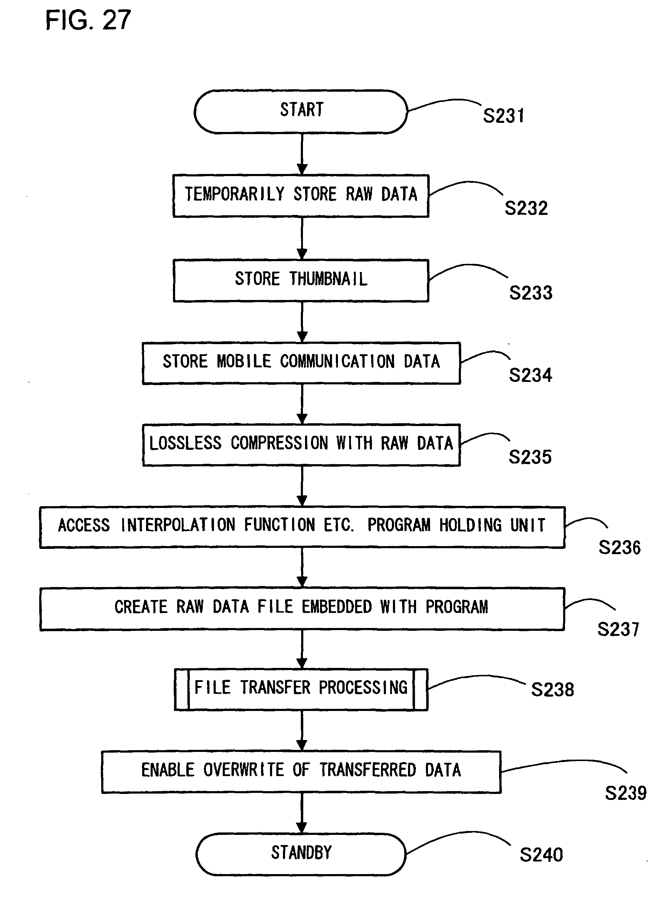

FIG. 27 presents a flowchart of a shutter release interrupt applied in another embodiment when the modified control/processing unit in the eighth embodiment in FIG. 24 is adopted in the fifth embodiment shown in FIG. 20. As the shutter release interrupt is applied by operating the operating unit 6, the operational flow starts in step S231. In steps S232 through S234, the raw data are temporarily stored, the thumbnail data are stored and the mobile communication data are stored as in steps S77 through S79 in FIG. 9. It is to be noted that the "mobile communication data" in the fifth embodiment are display data achieving an image size suitable for display at the LCD display unit 5 in the digital camera 101. While the display data can be transferred by a means for communication so as to be displayed at another apparatus having a display unit similar in size to the LCD display unit 5, it is not essential that they be transferred to such an apparatus and instead they may be used strictly for a display at the LCD display unit 5.

In step S235, the raw data in the raw data temporary storage unit 12 are reversibly compressed by the control/processing unit 131. In step S236, the central processing unit 133 accesses the interpolation function etc. program holding unit 138. Then, in step S237, a data file of the reversibly compressed data with the programs in the interpolation function etc. program holding unit 138 embedded therein is created.

In step S238, the data file created in step S237 is transferred. In the fifth embodiment shown in FIG. 20, this processing is executed by writing it the data file into the large-capacity storage medium 103 via the medium slot 104. In step S239, processing is executed to permit the raw data having undergone the transfer processing to be overwritten with new raw data at the raw data temporary storage unit 12, and then the operation enters a standby state for a next shutter release in step S240.

As described above, in the embodiment shown in FIG. 27, the interpolation function etc. program, the decompression program, the file creation program and the like stored in the interpolation function etc. program holding unit 138 are embedded into each image file. Thus, no matter where a given image file is transferred, the appropriate interpolation processing and the like can be executed to reproduce the image and create a file. It is to be noted that the embodiment in FIG. 27 can be adopted equally effectively in all of the first through seventh embodiments with their respective control/processing units modified as in the eighth embodiment. For instance, when the modified control / processing unit is adopted in conjunction with the first embodiment shown in FIG. 1, the file transfer processing executed in step S238 in FIG. 27 is achieved by transmitting the file to the server center. Also, adopted in conjunction with the fourth embodiment shown in FIG. 19, the file transfer processing executed in step S238 in FIG. 27 is achieved by inputting the file into the personal-computer 75 via the high-speed digital cable 77.

It is to be noted that the image file having the programs embedded therein is a self-executing type image file and thus, in response to an operation executed to open the received image file at the personal computer or the server center, the embedded programs are automatically started up to execute the interpolation processing and the like on the raw data. Such a self-executing file may also be created by, for instance, compiling the image file and the programs into a single file and attaching an instruction to execute the programs when the file is opened, instead of embedding the programs in the image file.

### - file creation program -

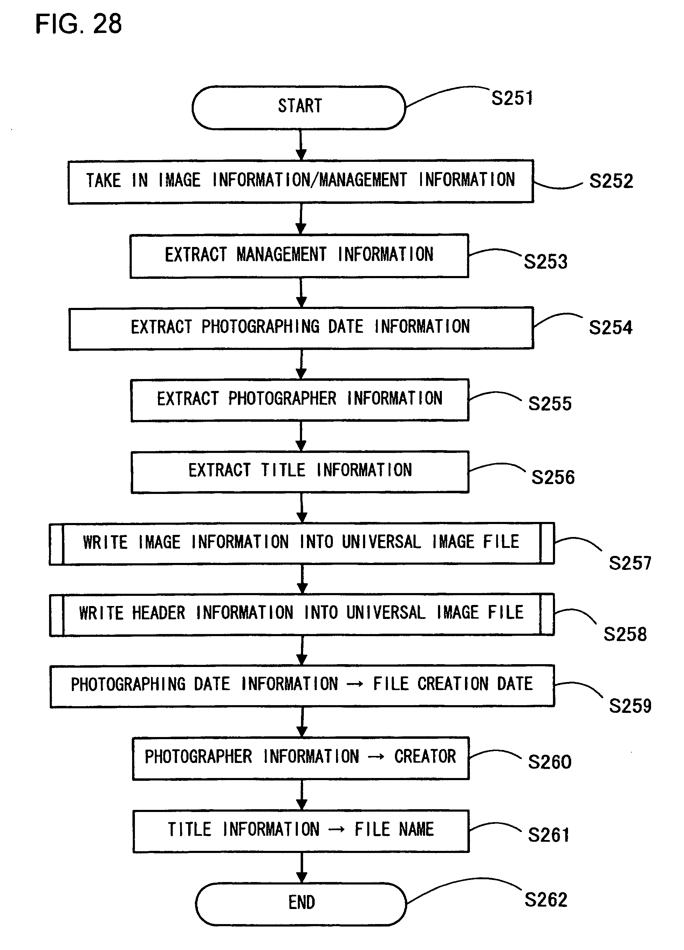

FIG. 28 presents a flowchart of the processing executed in conformance to the file creation program stored in the interpolation function etc. program holding unit 138. The file creation program, which is used in step S197 in FIG. 25 when transmitting the file creation program, in step S217 in FIG. 26 when transmitting the file creation program and in step S237 in FIG. 27 when embedding the file creation program in the file, is executed to create an image file at the server center or the personal computer.

After the execution of the file creation program starts in step S251, image information such as the raw data and management information that includes universal image file creation details with regard to the target image are taken into a processing memory at the server center or the personal computer in step S252. In step S253, the management information such as the user information indicating the camera name and the photographer and the photographic information indicating the file version specified by the photographer, the photographing date, the title, the shutter speed, the aperture, the focal length and whether or not the flash unit was used is extracted from the information having been taken in. In addition, in step S254, step S255 and step S256, the photographing date information, the photographer information and the title information are respectively extracted from the management information. It is to be noted that if there is no relevant information to be extracted in any of steps S253 through S256, the step is skipped.

In step S257, the image information taken in step S252 is written into the universal image file. In step S258, header information of the universal image file is written based upon the items of information needed for the universal image file creation which are included in the management information extracted in step S253. This header information is utilized, for instance, when searching for the image file with an image management program for universal image files.

In steps S259 and S260, a common file creation date, a common file creator name and a common file name are assigned to the file to be handled at the server center or the personal computer.

First, in step S259, a file creation date is assigned based upon the photographing date information extracted in step S254. Under normal circumstances, the date on which the file is actually created by taking in the image data is automatically assigned to the file as the file creation date. However, in the processing executed in step S259, the "file creation date" assigned to the image file is the photographing date instead of the date on which the file is created by taking in the image data. As a result, even when the server center or the personal computer does not have an image management program for universal image files installed therein, the image data can be searched based upon the photographing date which is more essential data related to the image file by using a standard search function or the like of the basic program in the OS.

In step S260, a file creator name is assigned based upon the photographer information extracted in step S255. A file creator name which is set separately is automatically assigned to the file at the server center or the personal computer under normal circumstances. However, in the processing executed in step S260, the photographer is indicated as the "file creator" of the image file instead of the "file creator" inherent to the settings selected at the server center or the personal computer. As a result, even when the server center or the personal computer does not have an image management program for universal image files installed therein, the image data can be searched based upon the photographer which is more essential data related to the image file by using a standard search function or the like of the basic program in the OS.

In step S261, a file name is assigned based upon the title information extracted in step S256. A file name which is set separately is automatically assigned to the file at the server center or the personal computer under normal circumstances. However, in the processing executed in step S261, the file name entered by the photographer in the camera when the image was photographed is assigned to the image file instead of the file name that is automatically assigned by the server or the personal computer. As a result, even when the server center or the personal computer does not have an image management program for universal image files installed therein, the image data can be searched based upon the file name assigned at the camera at the time of the photographing operation by using the standard search function or the like of the basic program in the OS.

After assigning the common file creation date, file creator name and file name to the file handled at the server center or the personal computer as described above, the operational flow ends in step S262. It is to be noted that if there is no relevant information to be used in any of steps S259 through S260, the operation skips to step S262.

### - Ninth Embodiment -

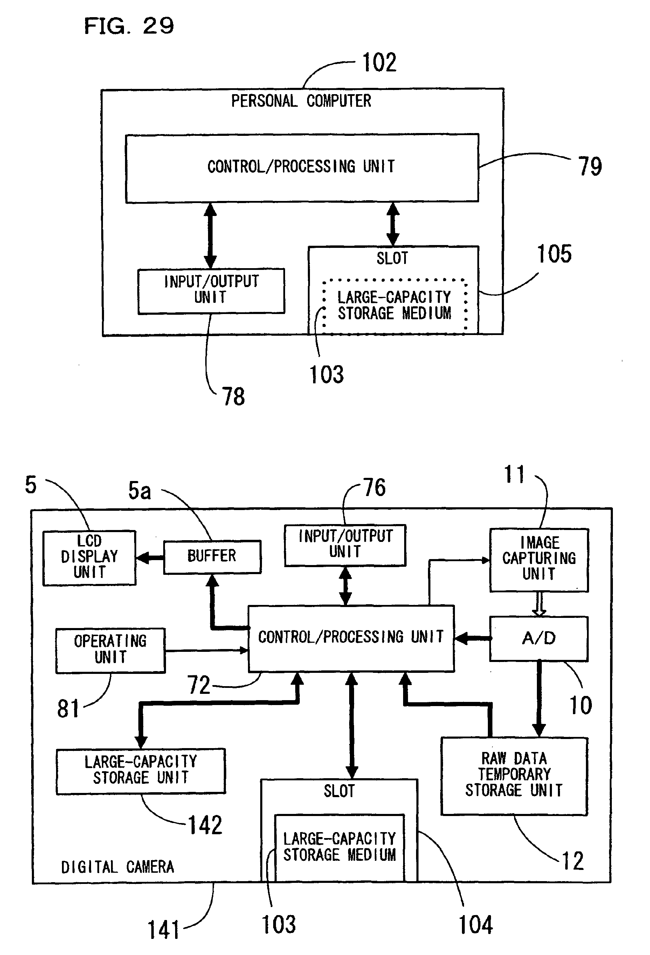

In the block diagram of the ninth embodiment according to the present invention shown in FIG. 29, the same reference numerals are assigned to components identical to those in the fifth embodiment shown in FIG. 20. It is to be noted that in the figure, the image capturing unit 11 and theA/D conversion unit 10 are shown as components independent of each other as in FIG. 1, instead of as the integrated image capturing unit 73. In addition, although not shown, the structure achieved in the ninth embodiment includes a communication unit 7 and an encryption processing unit 80 such as those shown in FIG. 20. Since the personal computer 102 adopts a structure identical to that in the fifth embodiment shown in FIG. 20, an illustration of the structural features other than the control/processing unit 79, the input/output unit 78 and the storage medium slot 105 and an illustration of the internal structure adopted at the control/processing unit 79 are not included.

The ninth embodiment shown in FIG. 29 is characterized in that a digital camera 141 includes a nonvolatile large-capacity storage unit 142 in which display data and thumbnail data with a small file size to be displayed at the LCD display unit 5 can be stored and accumulated in a large volume.

In the embodiment shown in FIG. 29, raw data identical to the data stored into the raw data temporary storage unit 12 with the image capturing timing are input from the image capturing unit 73 to the control/processing unit 72, as in the fifth embodiment in FIG. 20. At the control/processing unit 72, the raw data undergo cull processing and are also converted to display data and thumbnail data which are then stored into the large-capacity storage unit 142 in correspondence to the raw data stored in the raw data temporary storage unit 12. Images are reproduced at the digital camera 141 based upon the display data and the thumbnail data stored into the large-capacity storage unit 142.

The large-capacity storage unit 142 has a capacity for storing substantially unlimited volumes of display data and thumbnail data with a small file size and thus, it is possible to store the display data and the thumbnail data of all the images having been photographed with the digital camera 141 to date in the large-capacity storage unit 142. Accordingly, the digital camera 141 functions as a portable image database which uses the LCD display unit 5 as a means for browsing display.

The raw data stored into the raw data temporary storage unit 12 are transferred into the large-capacity storage medium 103 via the storage medium slot 104 with timing similar to the timing with which the raw data are transmitted to the outside in FIG. 1. Thus, the raw data and the small file size image data corresponding to a given image are respectively stored into the large-capacity storage medium 103 and the large-capacity storage unit 142, with their relation to each other marked clearly. It is to be noted that the raw data stored in the large-capacity storage medium103 are never directly utilized in reproduction operations executed in the digital camera 141 and rather, the raw data are stored in the large-capacity storage medium 103 for exclusive utilization outside the digital camera 141. For this reason, when display data or thumbnail data are read out from the large-capacity storage unit 142 for reproduction, the corresponding raw data are not read out from the large-capacity storage medium 103.

As the power is turned on, the digital camera 141 achieved in the ninth embodiment shown in FIG. 29 enables the photographing mode interrupt and the reproduction mode interrupt as in steps S218 and S219 in the flowchart presented in FIG. 26 and then enters a standby state. In addition, when the shutter release interrupt is applied in the ninth embodiment, the raw data are temporarily stored, the thumbnail data are stored and the mobile communication data (display data) are stored as in steps S232 through S234 in the flowchart presented in FIG. 27 and also the raw data are stored into the large-capacity storage medium 103 before the digital camera 141 enters a standby state. However, the thumbnail data and the mobile communication data (display data) are both stored in the large-capacity storage unit in step S233 and step S234 respectively in the ninth embodiment.

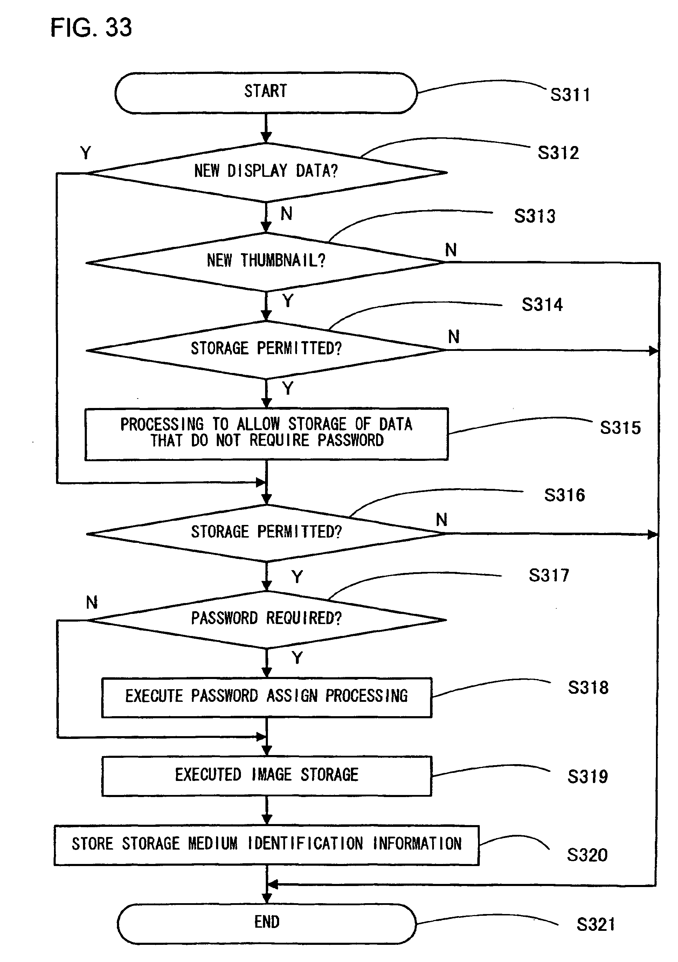

In addition, when storing the thumbnail data in step S233, information to be used to identify the specific large-capacity storage medium 103 is stored into the large-capacity storage unit 142 in correspondence to the thumbnail data (as in step S320 in FIG. 33, which is to be referred to later). As a result, even after the large-capacity storage medium 103 is unloaded from the digital camera 141 and is replaced with another large-capacity storage unit 103, the specific large-capacity storage unit 103 having stored therein the raw data corresponding to the thumbnail data stored in the large-capacity storage unit 142 can be identified readily.

### - reproduction mode interrupt (ninth embodiment) -

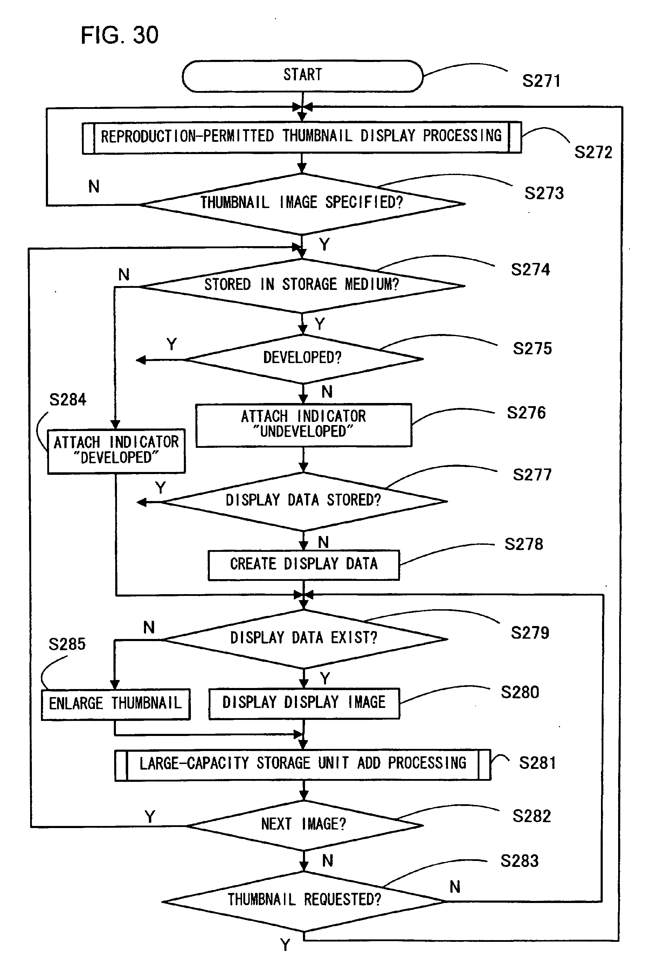

FIG. 30 presents a flowchart of the reproduction mode interrupt executed in the ninth embodiment. As the reproduction mode is selected by operating the operating unit 81, the operational flow starts in step S271. Then, in step S272, reproduction-permitted thumbnail display processing is executed. As explained earlier, the display data and the thumbnail data of all the images having been photographed with the digital camera 141 thus far are stored in the large-capacity storage unit 142 in the ninth embodiment. The processing in step S272, which is executed to apply specific restrictions with regard to thumbnail data that can be reproduced and display reproduction-permitted thumbnail data for privacy protection purposes when the digital camera 141 is shared by a plurality of users, is to be explained in detail later. Through the processing executed in step S272, the reproduction-permitted thumbnail data are displayed and the display can be scrolled to bring up more thumbnail data with the operating unit 81.

In step S273, a verification is executed to ascertain whether or not one of the thumbnail images has been specified, and the processing in step S272 and step S273 is repeatedly executed until a thumbnail image is specified. Once a thumbnail image is specified, the operation proceeds to step S274 to execute a verification as to whether or not the image data corresponding to the specific thumbnail image are stored in the large-capacity storage medium 103. If the corresponding image data are stored in the large-capacity storage medium 103, the operation proceeds to step S275 to execute a verification as to whether or not the corresponding image data in the large-capacity storage medium 103 have already undergone "development". If the image data have not been "developed" yet, the image data in the large-capacity storage medium 103 are raw data resulting from a photographing operation and, accordingly, the operation proceeds to step S276 to prepare an indicator "undeveloped" to be displayed together with the image. It is to be noted that the term "developed" is used to refer to image data in the large-capacity storage medium 103 corresponding to specified thumbnail data, which are no longer raw data but have undergone interpolation/compression processing. Details of such "developed" image data are to be provided later.

In step S277, a verification is executed to ascertain whether or not display data corresponding to the specific thumbnail image are stored in the large-capacity storage unit 142. If it is determined that no such display data are stored, the display data are created in step S278. Details of this eventuality, too, are to be provided later.

In step S279, a verification is executed to ascertain whether or not the display data corresponding to the specific thumbnail image either stored in the large-capacity storage unit 142 or the large-capacity storage medium 103 or having been created in step S278, are available. While the eventuality of no such display data existing at all is explained later, the display data will be available under normal circumstances and accordingly, the operation proceeds to step S280 to display the display data corresponding to the specific thumbnail image. At this time, the indicator "undeveloped" prepared in step S276 is attached to the display data so as to warn the user that the image corresponding to the specific thumbnail image is still in the large-capacity storage medium 103 in the "undeveloped" state and has not been taken out of the digital camera 141.

In step S281, additional storage processing is executed to store additional display data and the like which have not been stored into the large-capacity storage unit 142 yet from the large-capacity storage medium 103. For instance, the display data created in step S278 are added into the large-capacity storage unit 142 together with the corresponding thumbnail data and header information. It is to be noted that no processing is executed in step S281 if there are no additional data to be stored into the large-capacity storage unit 142.

In step S282, a verification is executed to ascertain whether or not a next image has been specified through an operation of the operating unit 81. Then, if another image has not yet been specified, the operation proceeds to step S283 to execute a verification as to whether or not a thumbnail display request has been issued through the operating unit 81 and if no thumbnail display request has been issued, the operation returns to step S279. Subsequently, until the next image is specified or a thumbnail display request is issued, the processing in step S279 through step S283 is executed repeatedly to sustain the display of the same display image.

If, on the other hand, it is determined in step S282 that a next image has been specified through an operation of the operating unit 81, the operation returns to step S274 to execute the verifications in the specific sequence starting in step S274 for the next image. In addition, if it is determined in step S283 that a thumbnail image request has been issued, the operation returns to step S272 to display thumbnail images and the operation waits until it is determined in step S273 that a thumbnail image has been specified.

If it is determined in step S274 that the image data corresponding to the specific thumbnail image are not stored in the large-capacity storage medium 103, it means that the image has already been taken out of the digital camera 141 and has been "developed", and accordingly, the operation proceeds to step S284 to prepare an indicator "developed" to be displayed together with the corresponding image. In this case, too, when the display data are displayed in step S280, the indicator "developed" prepared in step S284 is attached to the display data so as to indicate to the user that the image corresponding to the specific thumbnail image has been "developed".

If it is determined in step S275 that the image data in the large-capacity storage medium 103 corresponding to the specific thumbnail image are "developed", too, the operation proceeds to step S284 to prepare an indicator "developed" to be displayed together with the image. In this case, when the display data are displayed in step S280, the indicator "developed" prepared in step S284 is attached to the display data so as to indicate to the user that the image corresponding to the specific thumbnail image has been "developed".

If it is determined in step S277 that the display data corresponding to the specific thumbnail image are stored in the large-capacity storage unit 142, the operation proceeds to step S279 by skipping step S278. In this case, too, the indicator "undeveloped" prepared in step S276 is attached to the display data to warn the user that the image stored in the large-capacity storage medium 103 which corresponds to the specific thumbnail image is "undeveloped".

If it is determined in step S279 that the display data corresponding to the specific thumbnail image do not exist either in the large-capacity storage unit 142 or the large-capacity storage medium 103 and also that no such display data have been prepared in step S278 either, the operation proceeds to step S285 to display the specific thumbnail image in an enlargement in place of the display data. In this case, too, the indicator "developed" prepared in step S284 is displayed together with the thumbnail image.

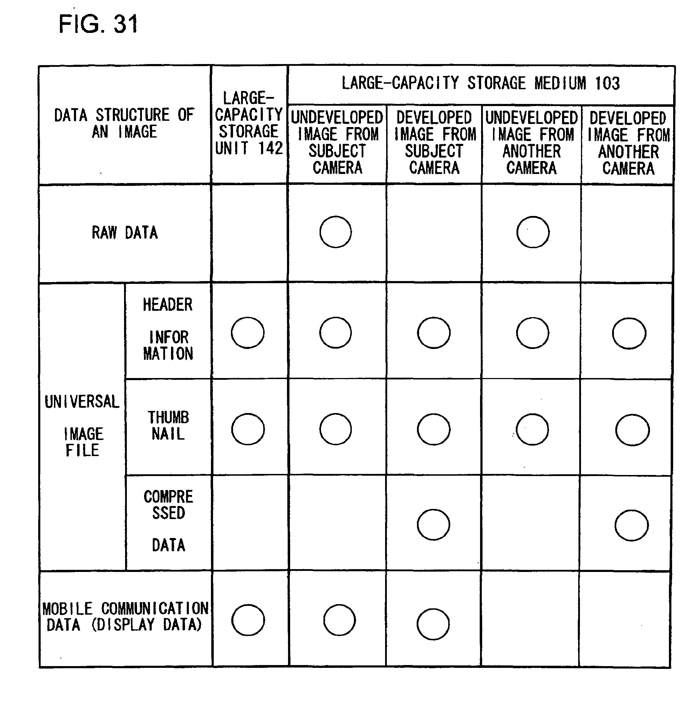

The chart in FIG. 31, showing the data structure adopted in the ninth embodiment and the specific storage locations of the various types of data, summarizes individual situations in which the reproduction mode interrupt function is engaged as explained in reference to FIG. 30. FIG. 31 indicates that the function explained in reference to FIG. 30 supports a large-capacity storage medium 103 having stored therein images photographed with another digital camera as well as the large-capacity storage medium 103 having stored therein images photographed with the digital camera 141.

Let us now examine a situation in which no large-capacity storage medium 103 is loaded at the storage medium slot 104. In this case, a reproduction is executed by using the header information, the thumbnail data and the display data stored in the large-capacity storage unit 142 as shown in FIG. 31. Thus the reproduction process corresponds to the flow starting in step S274 and proceeding to step S280 via step S284 in FIG. 30.

Next, the reproduction executed when the large-capacity storage medium 103 having stored therein images photographed with the digital camera 141 itself is loaded at the storage medium slot 104 is examined. In this case, too, the reproduction is executed by using the header information, the thumbnail data and the display data stored in the large-capacity storage unit 142.

Under these circumstances, an "undeveloped" image may be stored in the large-capacity storage medium 103. As indicated in the "undeveloped image from subject camera" section in FIG. 31, "undeveloped" image data include the raw data, the header information, the thumbnail data and the display data. However, an embodiment in which the display data are not stored into the large-capacity storage medium 103 may be adopted instead. It is to be noted that the thumbnail data and the display data in the large-capacity storage medium 103 were initially created at the digital camera 141 and were then transferred to the large-capacity storage medium 103.

The large-capacity storage medium 103 may also hold a "developed" image. As indicated in the "developed image from subject camera" section in FIG. 31, "developed" image data include the header information, the thumbnail data, the compressed data and the display data. However, an embodiment in which the display data are not stored into the large-capacity storage medium 103 may be adopted instead. The compressed data were created at the personal computer 102, whereas the thumbnail data and the display data were created at the digital camera 141. Or, the thumbnail data and the display data may have been created at the personal computer 102, instead. The description above implies that the large-capacity storage medium 103 was first unloaded from the digital camera 141 and loaded at the personal computer 102, and that the large-capacity storage medium 103 has been reloaded into the digital camera 141 after the "developed" compressed data were returned into the large-capacity storage medium 103. If a new image is subsequently photographed in this situation, the large-capacity storage medium 103 will hold stored therein both the "developed" image and the "undeveloped" image together.

For the reason described above, if it is determined in step S274 that the image data corresponding to the specific thumbnail image as ascertained in step S273 in FIG. 30 are present in the large-capacity storage medium 103, a verification is executed in step S275 to determine whether or not the image data have been "developed" and either indicator is prepared in step S276 or step S284 according to the results of the verification. It is to be noted that the verification in step S274 is executed by matching up the header information in the large-capacity storage unit 142 with the header information in the large-capacity storage medium 103. The point that needs to be stressed is that whether the image data are "undeveloped" or "developed", the reproduction is executed by using the display data in the large-capacity storage unit 142 and there is no need to generate display data by processing the raw data in the large-capacity storage medium 103 or decompressing the compressed data. As a result, an image can be displayed promptly at the LCD display unit 5.

Next, the reproduction executed when a large-capacity storage medium 103 having stored therein images that were photographed with a camera other than the digital camera 141 is loaded at the storage medium slot 104 is examined. FIG. 31 indicates that in a large-capacity storage medium 103 which does not hold display data, "undeveloped" data corresponding to the "undeveloped image from another camera" and "developed" data corresponding to the "developed image fromanother camera" may exist together. In addition, since the images in the large-capacity storage medium 103 were not photographed with the digital camera 141, no header information, thumbnail data and display data such as those shown in FIG. 31 corresponding to the images, are stored in the large-capacity storage unit 142, in principle. Thus, the thumbnail data are reproduced based upon information held in the large-capacity storage medium 103.

If it is determined in step S275 that the image data corresponding to the specific thumbnail image as ascertained in step S273 in FIG. 30 have been "developed", the operation proceeds to step S279 via step S284. Since no display data corresponding to the image data exist and the digital camera 141 does not have a function of decompressing the compressed data for display, the thumbnail image is displayed in an enlargement at the LCD display unit 5 in step S285. It is tobe noted that if the large-capacity storage medium 103 loaded at the storage medium slot 104, which has stored in memory images photographed with a digital camera other than the digital camera 141 also holds the corresponding display data, the operation proceeds from step S279 to step S280 to display the display image.

If, on the other hand, it is determined in step S275 that the image data corresponding to the specific thumbnail image as ascertained in step S273 in FIG. 30 are "undeveloped", the operation proceeds to step S277 via step S276. Since the corresponding display data are not stored in the large-capacity storage unit 142, the operation then proceeds to step S278 to create display data based upon the raw data in the large-capacity storage medium 103. It is to be noted that if the large-capacity storage medium 103 loaded at the storage medium slot 104, which has stored in memory images photographed with a digital camera other than the digital camera 141, also holds the corresponding display data, the operation proceeds from step S279 to step S280 to display the display image by skipping step S278. In this case, since display data do not need to be created from the raw data, the display data display can be brought up more promptly.

### - reproduction-permitted thumbnail display processing -

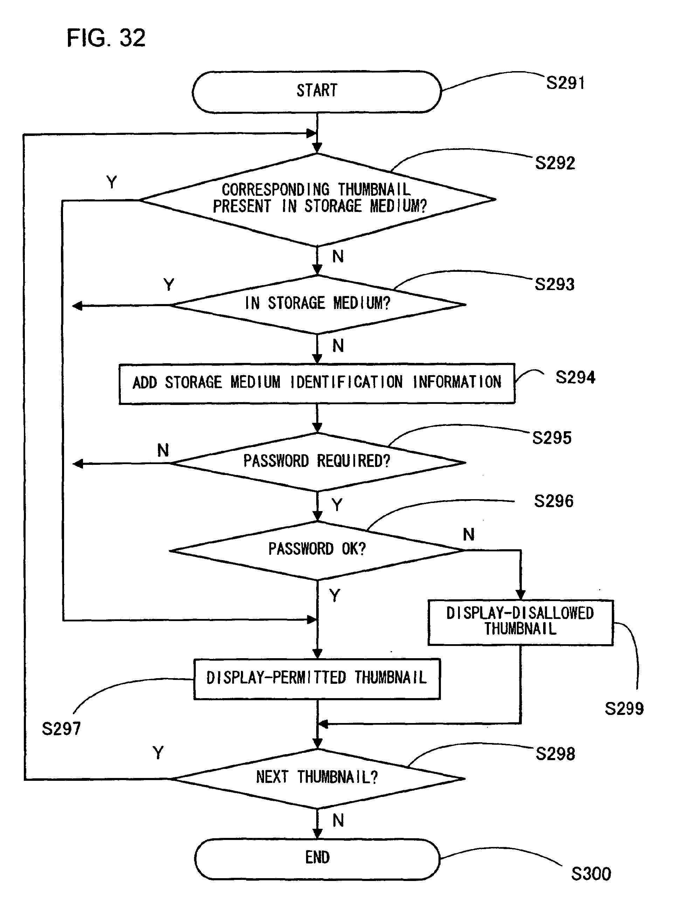

FIG. 32 presents a detailed flowchart of the reproduction-permitted thumbnail display processing executed in step S272 in FIG. 30. The processing in this flowchart is executed to determine whether or not the reproduction of each of all the thumbnail images stored in the large-capacity storage unit 142 and the large-capacity storage medium 103 is permitted. After the operational flow starts in step S291, a verification is executed in step S292 to ascertain whether or not a first thumbnail image is stored in the large-capacity storage unit 142 with an identical corresponding thumbnail image also stored in the large-capacity storage medium 103. If a negative decision is made, the operation proceeds to step S293 to execute averificationas to whether or not the thumbnail image is stored in the large-capacity storage medium 103. If a negative decision is made in step S293, as well, it is judged that the thumbnail image is stored in the large-capacity storage unit 142 with no corresponding thumbnail image present in the large-capacity storage medium 103 and, accordingly, the operation proceeds to step S294.

In the header portion of the data corresponding to the thumbnail data stored in the large-capacity storage unit 142, the storage medium identification informationusedto identify the large-capacity storage medium 103 into which the corresponding raw data were stored at the time of the photographing operation is stored. This information is constituted of a code inherent to the specific large-capacity storage medium 103 and a name assigned by the user may be attached to the code in some cases. In step S294, this storage medium identification information is prepared for display based upon the memory contents in the large-capacity storage unit 142. The storage medium identification information thus prepared is attached to the display image displayed in step S280 in FIG. 30. As a result, even when the large-capacity storage medium 103 having stored therein the image data corresponding to the specific thumbnail image has been unloaded from the digital camera 141, the user can find the right large-capacity storage medium with ease.

In step S295, a verification is executed to ascertain whether or not the thumbnail image requires a password for reproduction. If it is determined that the thumbnail image requires a password, a verification is executed in step S296 as to whether or not the thumbnail image stored in the header portion at the large-capacity storage unit 142 matches the password having been entered. While the password may be entered for each reproduction, the user of the digital camera is normally required to set a password only once and the password is saved as a valid password unless it is reset so as to permit the reproduction of any thumbnail image matching the password, and the valid password is stored into the header portion of each newly photographed image.

If it is determined in step S296 that the thumbnail image matches the valid password, the operation proceeds to step S297 to judge that the thumbnail image is a display-permitted thumbnail image and assign it as an image for display accordingly before the operation proceeds to step S298. If, on the other hand, it is determined in step S296 that the thumbnail image does not match the password, the thumbnail image is judged to be a display-disallowed thumbnail image and is not assigned as an image for display accordingly in step S299, before the operation proceeds to step S298. Thus, when the digital camera 141 is used by a plurality of users, a given user can reproduce only thumbnail images matching the password set by himself and even though the digital camera 141 is shared by multiple users, a high level of privacy protection is assured since images photographed by one of the user's cannot be reproduced by other users. Consequently, even though the display data and the thumbnail data corresponding to all the images photographed with the digital camera 141 thus far are stored in the large-capacity storage unit 142, the privacy of the individual users of the digital camera 141 is fully protected.

If it is determined in step S292 that the thumbnail image is stored in the large-capacity storage unit 142 with the corresponding identical thumbnail image also stored in the large-capacity storage medium 103, the operation proceeds directly to step S297. Thus, even a thumbnail image in the large-capacity storage unit 142 which may correspond to an image photographed by a user with a different password can be reproduced by loading the large-capacity storage medium 103 having stored therein the corresponding image data. This feature affords the convenience of being, in appearance, able to display thumbnail images in a large-capacity storage medium 103 borrowed from another person at the digital camera 141.

If it is determined in step S293 that the thumbnail image is stored in the large-capacity storage medium 103, the thumbnail images are only present in the large-capacity storage medium 103 but not in the large-capacity storage unit 142. In this case, too, it is judged that the large-capacity storage medium 103 has been loaded into the digital camera for purposes of reproduction and, accordingly, the operation proceeds directly to step S297.

If the thumbnail image is stored in the large-capacity storage unit 142 but not in the large-capacity storage medium 103, the operation proceeds to step S295. If it is determined in step S295 that the thumbnail image does not require any password to be reproduced, the operation proceeds directly to step S297 regardless of who is currently using the digital camera. Each user of the digital camera 141 only needs to select a setting to indicate whether or not his thumbnail images are to require a passwordmatch once and this setting is retained as the valid setting until the user selects a different setting. If the user selects a setting that indicates that no password match is required, the setting is stored into the header portion of each newly photographed image.

In step S298, a verification is executed to ascertain whether or not there is any more thumbnail image data yet to undergo the processing, and if it is determined that all the thumbnail image data have undergone the processing, the reproduction-permitted thumbnail display processing ends in step S300 before the operation shifts into step S273 in FIG. 30. If, on the other hand, it is determined that there is a next thumbnail image to be processed, the operation returns to step S292. Subsequently, the processing in step S292 through step S299 is repeatedly executed as long as there are thumbnail image data yet to be processed.

### - large-capacity storage unit add processing -

FIG. 33 presents a detailed flowchart of the large-capacity storage unit add processing executed in step S281 in FIG. 30. The processing in this flowchart is executed to record display image data into the large-capacity storage unit 142 when a large-capacity storage medium 103 having stored therein an image photographed with a camera and other than the digital camera 141 is loaded at the storage medium slot 104 and the display image data in the large-capacity storage medium 103 are reproduced. After the operational flow starts in step S311, a verification is executed in step S312 to ascertain whether or not the data on display are new display data which have not been stored into the large-capacity storage unit 142 yet, i.e., whether or not display data having been prepared in step S278 in FIG. 30 or display data stored in the large-capacity storage medium 103 are currently on display. If it is determined that the data currently on display are not new display data, the operation proceeds to step S313 to execute a verification as to whether or not the current display is an enlargement of a new thumbnail image which has not been stored into the large-capacity storage unit 142 yet, i.e., whether or not the current display is an enlargement of thumbnail image stored in the large-capacity storage medium 103. If it is determined that a new thumbnail image is currently on display in an enlargement, the operation proceeds to step S314 to execute a verification as to whether or not the thumbnail image is allowed to be stored into the digital camera 141. If the storage is allowed, processing is executed in step S315 to permit this thumbnail image to be stored into the large-capacity storage unit 142 as a thumbnail image that does not require a password, before the operation proceeds to step S316. While a verification is executed again to check whether or not the thumbnail image is allowed to be stored into the digital camera 141 in step S316, the storage of the thumbnail image is permitted in this case and accordingly, the operation passes through step S316.

If, on the other hand, it is determined in step S312 that the data currently on display are new display data, the operation proceeds directly to step S316. If it is determined in step S316 that the storage of the new display data is allowed, a verification is executed in step S317 as to whether or not storage by the current user alone is permitted on condition that a password be assigned and if it is determined that a password is required, processing is executed in step S318 to indicate that the display data are to store a password newly assigned by the user before the operation proceeds to step S319. If, on the other hand, no password is required and all the users of the digital camera 141 are allowed to reproduce the display data, the operation skips step S318 and proceeds to step S319. If the data up on display are new display data, the header portion information, the thumbnail data and the display data are stored into the large-capacity storage unit 142 in step S319.

If the data currently on display are a new thumbnail image, the operation proceeds from step S316 to step S317 from which the operation proceeds directly to step S319 since no password is required. Then in step S319, the header information and the thumbnail data are stored into the large-capacity storage unit 142.

In step S320, the information used to identify the large-capacity storage medium 103 in which the original image is recorded is stored into the large-capacity storage unit 142 in correspondence to the thumbnail data. As a result, after an image photographed with a camera other than the digital camera 141 is reproduced at the digital camera 141 for the first time, the specific large-capacity storage medium 103, in which the image is stored into memory to facilitate subsequent identification.

Following the processing in step S320, the large-capacity storage unit add processing ends in step S321 before the operation shifts into step S282 in FIG. 30. It is to be noted that if it is determined in step S313 the a new thumbnail image is not on display, there is no target image to be processed and accordingly, the operation immediately proceeds to step S321 to end the processing. In addition, if it is determined in step S314 or step S316 that the storage of the image on display is not permitted, too, the operation immediately proceeds to step S321 to end the processing.

As described above, even after raw data are taken out, the corresponding display data are stored in the digital camera 141 and are thus held within the large-capacity storage unit 141 in the ninth embodiment. It is to be noted that while raw data stored into a large-capacity storage medium 103 are taken out of the digital camera as the large-capacity storage medium 103 is unloaded in the ninth embodiment, the raw data may be taken out in a method other than this. In practical application, the raw data may be taken out of the digital camera by adopting any of various other methods, e.g., the raw data may be transmitted via wireless communication units, as shown in FIG. 1, or the raw data may be output via a cable connected as shown in FIG. 19.

### - Tenth Embodiment -

The feature characterizing the ninth embodiment, which achieves an advantage in that even after image data are taken out to the outside, the corresponding display data are held within the digital camera may be adopted when raw data having undergone the interpolation/compression processing within the digital camera are taken out of the digital camera by storing them into a large-capacity storage medium 103 instead of when taking the raw data out of the digital camera.

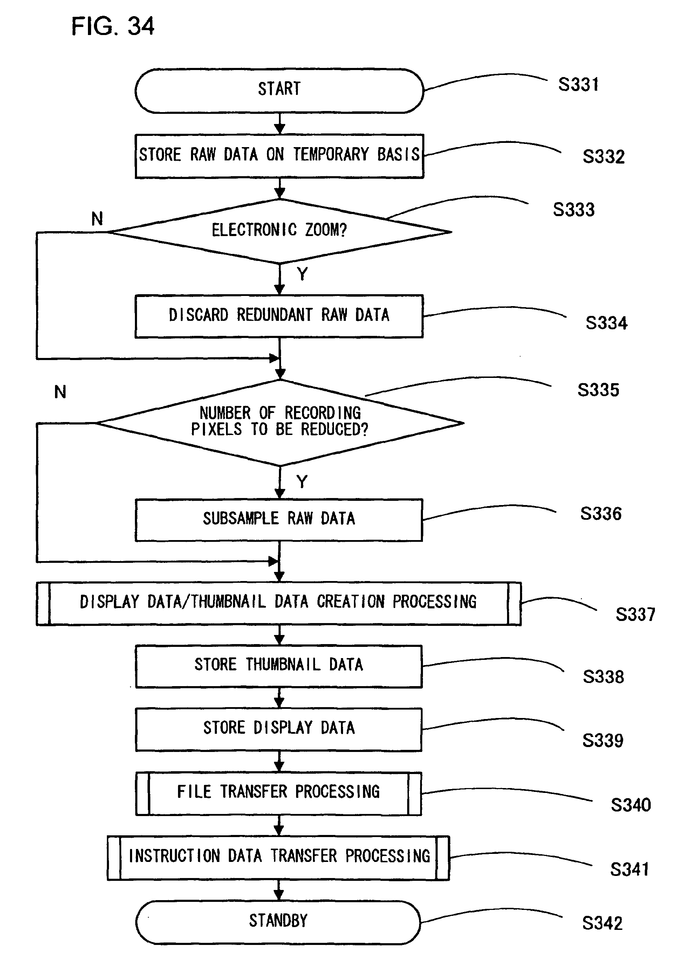

FIGS. 34 through 36 present flowcharts related to the processing executed in the tenth embodiment of the present invention. The tenth embodiment allows the user to specify an "electronic zoom" and a "trim". Since these functions can be provided as additional functions in the first through ninth embodiments, an explanation of the overall structure that may be adopted in the tenth embodiment is omitted and instead, the following explanation focuses on the aspect related to the specification of the electronic zoom and the trim which are provided as additional functions. The term "electronic zoom" in this context refers to processing executed by cutting out a central portion of a captured image and enlarging the central area without changing the focal length of the lens system to induce an effect equivalent to that of zooming toward the telephoto side as opposed to "optical zoom" achieved via a zoom lens having a variable focal length in the lens system thereof. The actual contents of the electronic zoom processing are identical to those of the trim, except for the fact that the electronic zoom processing is executed at the time of the photographing operation instead of after the photographing operation.

As explained earlier, the user can specify whether or not to save raw data taken out of the digital camera, the compression rate for images to be processed outside the digital camera, the image size, the color balance and the desired level of edge emphasis in advance with the operating unit by checking the menu on display at the LCD display unit of the digital camera. In the tenth embodiment, the electronic zoom function and the trim function, too, can be specified in a similarmanner.

FIG. 34 presents a flowchart of the processing executed when a shutter release interrupt is applied in the tenth embodiment. After the operational flow starts in step S331, the raw data are temporarily stored in step S332. This is achieved through a function similar to that used in step S77 in FIG. 9 and in step S232 in FIG. 27. In step S333, a verification is executed to ascertain whether or not an electronic zoom operation was performed prior to the shutter release, and if it is determined that an electronic zoom was performed, the redundant data of the peripheral image portion in the raw data are discarded in step S344 in correspondence to the zoom setting selected on the telephoto side. As a result, the data volume of the raw data to be taken out of the digital camera is reduced. If, on the other hand, it is determined in step S333 the an electronic zoom operation was not performed toward the telephoto side, the operation skips step S334.

In step S335, a verification is executed to ascertain whether or not an operation indicating that the number of recording pixels is to be reduced was performed prior to the shutter release. Under normal circumstances, images used for certain purposes in digital cameras do not need to be fine images, and for this reason, the number of recording pixels can be set freely at a digital camera. In step S335, a verification is executed to ascertain whether or not an indication that the number of recording pixels was to be reduced was set forth through such a setting. If it was indicated that the number of recording pixels was to be reduced, the raw data are culled in step S336. As a result, the data volume of the raw data to be taken out of the digital camera is reduced. It is to be noted that if it is determined in step S335 that no operation indicating that the number of recorded pixels was to be reduced was performed, the operation skips step S336.

While display data and thumbnail data are created in step S337 by using the raw data having undergone the processing executed in steps S333 through S336, details of the creation processing are to be provided later. In step S338, the thumbnail data created in step S337 are stored in memory and then in step S339, the display data created in step S337 are stored. If no redundant image portion of the raw data has been discarded in step S334 or the raw data have not been culled in step S336, creation processing is executed in step S337 to create display data and thumbnail data based upon the raw data stored on a temporary basis in step S332.

In step S340, the raw data having undergone the processing in step S334 and the processing in step S336, as well as the thumbnail data and the display data created in step S337 are transferred. When the tenth embodiment is adopted in the fifth embodiment shown in FIG. 20, this "transfer processing" is achieved by executing the processing to write the data file into the large-capacity storage medium 103 via the medium slot 104.

In step S341, instruction data are transferred to the outside. These instruction data include an instruction for image enlargement and interpolation to be executed after the redundant image portion in the raw data has been discarded in step S334 through the electronic zoom, an instruction as to whether or not the raw data are to be saved, the specified image compression rate, the specified image size, the specified color balance, the specified level of edge emphasis and the like, which are set at the digital camera and based upon which the various types of processing are executed outside the digital camera. After the processing described above is completed, the operational flow ends in step S342 and the operation enters a standby state.

### - edit interrupt -

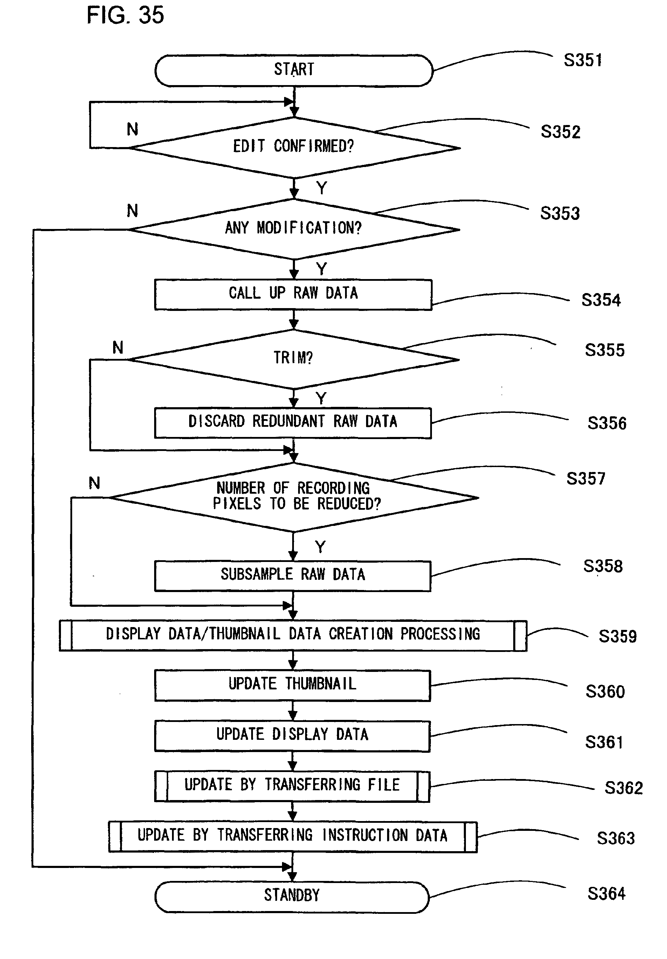

FIG. 35 presents a flowchart of the processing executed when an edit interrupt is applied in the tenth embodiment. An edit interrupt can be applied by operating the operating unit while display data corresponding to "undeveloped" raw data are reproduced in the reproduction mode. While the settings in FIG. 34 are selected at the time of the photographing operation, a trim function whereby a portion of an image is cropped is selected and the number of recording pixels is altered through the edit flow in FIG. 35 after the photographing operation.

As an edit interrupt is applied and the operational flow starts in step S351, the operation waits for a confirmation of the edit operation in step S352. The edit operation is performed based upon the display data displayed at the LCD display unit 5, and it does not take effect until the operation is confirmed. Upon confirming the edit operation following the end of the edit or a cancellation of the edit, the operation proceeds to step S353 to check whether or not any modification has been instructed through the edit operation. If it is judged that a modif ication has been instructed, the operation proceeds to step S354 to call up the raw data. At this time, if the raw data are stored in the raw data temporary storage unit 12, the target raw data are simply specified, but if the target raw data are in the large-capacity storage medium 103, the raw data are called out to the raw data temporary storage unit 12.

In step S355, a verification is executed to ascertain whether or not the modification has been instructed through the edit operation to trim the data. If it is determined that the modification has been instructed to trim the data, the operation proceeds to step S356 to delete the data made redundant through the trim from the raw data and discard the redundant data. As a result, the data volume of the raw data to be taken out can be reduced. It is to be noted that if it is determined in step S355 that the modification has been instructed for purposes other than a trim, the operation skips step S356.

In step S3357, a verification is executed to ascertain whether or not the modification has been instructed through the edit operation to reduce the number of recording pixels. If it is determined that the modification has been instructed to reduce the number of recording pixels to achieve an image with a lower resolution, the operation proceeds to step S358 to cull the raw data. As a result, the data volume of the raw data to be taken out is reduced. It is to be noted that if it is determined in step S357 the modification has been instructed for purposes other than recording pixel number reduction, the operation skips step S336.

In step S359, display data and thumbnail data are created by using the raw data having undergone the processing executed in either of, or both of steps S356 and S358. This data creation processing, which is identical to that executed in step S337 in FIG. 34, is to be described in detail later. In step S360, the original thumbnail data are overwritten with the thumbnail data created in step S359, thereby updating the stored data. In step S361, the original display data are overwritten with the display data created in step S359, thereby updating the stored data.

In step S362, processing is executed to transfer the raw data updated in step S356 or step S358 and the thumbnail data and the display data updated in steps S360 and S361. Through this transfer processing, the file which was initially transferred is overwritten for an update. It is to be noted that an instruction may be issued to save both the initial file and the edited file. Adopted in conjunction with the fifth embodiment shown in FIG. 20, the "transfer processing" is achieved by writing the data file into the large-capacity storage medium 103 via the medium slot 104.

In step S363, instruction data are transferred to the outside for an update. These instruction data, which are similar to those transferred in step S341 in FIG. 34, include the following instructions. Namely, these instruction data include instructions for image enlargement and interpolation to be executed after the redundant image portion in the raw data has been discarded in step S334 through the trim, an instruction as to whether or not the raw data are to be saved, the specified image compression rate, the specified image size, the specified color balance, the specified level of edge emphasis and the like, which are set at the digital camera and based upon which the various types of processing are executed a outside the digital camera.

Upon completing the processing described above, the operational flow ends in step S364 and the operation enters a standby state. It is to be noted that if it is determined in step S353 that no modification has been instructed through the edit operation, the operation proceeds directly to step S364.

### - display data/thumbnail data creation processing -

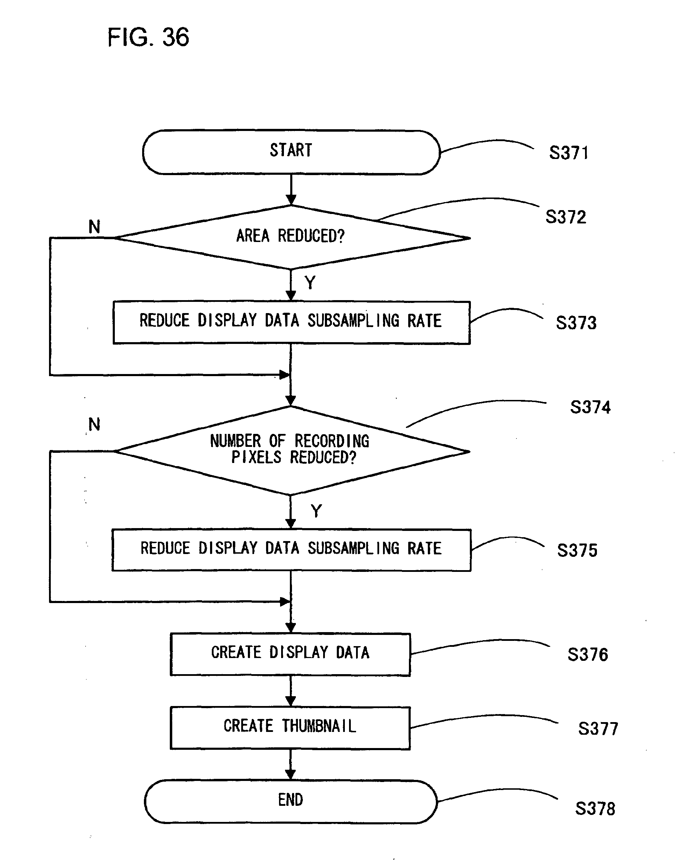

FIG. 36 is a detailed flowchart of the display data/thumbnail data creation processing executed in step S337 in FIG. 34 or in step S359 in FIG. 35. After the processing starts in step S371, a verification is executed in step S372 to ascertain whether or not the image area has been reduced with redundant raw data having been discarded through an electronic zoom or a trim. Then, if it is determined that the image area has been reduced, the culling rate at which the display data are to be created is lowered in step S373. The culling rate is lowered in this step to assure a specific image quality for the display data by creating the display data with the same number of pixels as the number of pixels which would constitute display data created from the raw data with the full image area even when the number of pixels constituting the raw data has been reduced in correspondence to the image area having been reduced through the electronic zoom or the trim.

In step S374, a verification is executed to ascertain whether or not the number of pixels set for raw data recording has been reduced. Then, if it is determined that the raw data recording pixel number has been reduced, the culling rate at which the display data are to be created is lowered in step S375. The culling rate is lowered in this step to assure a specific image quality for the display data by creating the display data with the same number of pixels as the number of pixels which would constitute display data created from the raw data with the full number of pixels even when the number of pixels used to record the raw data has been reduced.

In step S376, the display data are created by culling the raw data at the culling rate lowered through either of, or both step S373 and step S374. It is to be noted that if it is determined in step S372 that the image area has not been reduced and also it is determined in step S374 that the number of pixels set for recording has not been produced either, the display data are created in step S376 by culling the raw data at the initial culling rate. Thus, the file size and the image quality of the display data created in step S376 remain the same regardless of the specific sequence through which the operation proceeds to step S376.

In step S377, thumbnail data are created by further culling the display data, and then the processing ends in step S378 before the operation shifts into step S338 in FIG. 34 or step S360 in FIG. 35.

If the culling rate was not adjusted during the process described above, the quality of the image would become poor when the image with its image area having been reduced through the electronic zoom or the trim or the image with the number of recording pixels having been reduced by selecting a lower setting was enlarged to the standard screen size. By executing the processing shown in FIG. 36, the image quality is maintained at a desirable level. It is to be noted that the culling rate should be adjusted as nearly continuously as possible under a condition in which the raw data are culled in a manner that is compatible with the conversion of the raw data to image signals corresponding to different colors such as R, G and B so as to minimize the change in the number of effective pixels within the target screen area. However, the advantage of the present invention can be realized even by adjusting the culling rate in larger increments, i.e., in steps. As the simplest option, the culling rate may be adjusted over two steps and, in such case, the culling rate will be switched from a first setting to a second setting corresponding to a lower culling rate when the image area or the number of recording pixels has been reduced to a predetermined extent or more to still achieve the advantage.

While the redundant raw data are actually discarded and the raw data are actually culled within the digital camera in steps S334 and S336 in FIG. 34 and steps S356 and S358 in FIG. 35 in the tenth embodiment described above, the present invention is not limited to this example. Namely, instead of actually discarding the redundant raw data and culling the data in the digital camera, the intact raw data may be transferred to the outside without first processing them and appropriate instructions may be set in the corresponding steps to enable the recipient external apparatus to obtain data reflecting the electronic zoom or trim instruction or to execute the culling operation as specified. While the volume of raw data transferred to the external apparatus is not reduced in this case, a higher degree of freedom in information utilization is afforded for the external apparatus which receives the intact raw data with no missing information.

In such an application, the original display image and the edited display image with the instruction settings for raw data processing to enable the external apparatus to conform to the electronic zoom or trim instruction or to execute the culling operation as specified may be saved together in correspondence to a given set of raw data.

While the present invention is adopted in a digital camera in the tenth embodiment, the features shown in FIGS. 35 and 36 may instead be adopted in a digital image reproduction apparatus, as well. These features are particularly advantageous when adopted in a hand held tight digital image reproduction apparatus.

The functions explained above in reference to the individual embodiments may also be achieved in a computer application program, and in such a case, the apparatuses described above will each be constituted of a computer having installed therein the application program and peripheral devices connected to the computer as necessary. Accordingly, the application program itself, which may be distributed via the Internet or the like to realize the functions of the present invention and a recording medium such as a CD ROM having recorded therein the application program, too, are within the scope of the present invention.

## Claims

1. A digital camera system comprising:
a digital camera having an image capturing unit, a temporary storage unit in which digital image signals provided by the image capturing unit are stored and a communication unit that wirelessly transmits the digital image signals at the temporary storage unit without compressing the digital image signals; and
an image storage apparatus having a communication unit that receives the digital image signals, a compression unit that compresses the received digital image signals and a first storage unit in which the compressed image signals are stored.

2. A digital camera system according to claim 1, wherein:
the communication unit at the image storage apparatus receives the digital image signals via the Internet.

3. A digital camera system according to claim 2, wherein:
the digital image signals transmitted from the digital camera to the image storage apparatus are raw data output by the image capturing unit.

4. A digital camera system according to claim 3, wherein:
the image storage apparatus includes an interpolation unit that generates digital image signals corresponding to different colors by interpolating the raw data having been received.

5. A digital camera system according to claim 4, wherein:
the image storage apparatus includes an identification unit that identifies the digital camera and the interpolation unit executes interpolation appropriate to the identified digital camera.

6. A digital camera system according to claim 4, wherein:
the image storage apparatus executes interpolation appropriate to the digital camera based upon information transmitted from the digital camera.

7. A digital camera system according to claim 4, wherein:
the image storage apparatus includes a white balance adjustment unit.

8. A digital camera system according to claim 7, wherein:
the digital camera includes an operating unit;
a color balance is set for a digital image through an operation of the operating unit; and
the color balance having been set is communicated to the white balance adjustment unit at the image storage apparatus via the communication unit of the digital camera.

9. A digital camera system according to claim 4, wherein:
the image storage apparatus includes an edge emphasis unit.

10. A digital camera system according to claim 9, wherein:
the digital camera includes an operating unit;
a level of edge emphasis to be emphasized in a digital image is set through an operation of the operating unit; and
the edge emphasis level having been set is communicated to the edge emphasis unit at the image storage apparatus via the communication unit of the digital camera.

11. A digital camera system according to claim 4, wherein:
the image storage apparatus includes an image subsampling unit.

12. A digital camera system according to claim 11, wherein:
the digital camera includes an operating unit;
an image size of a digital image is set through an operation of the operating unit; and
information indicating the image size having been set is communicated to the image subsampling unit at the image storage apparatus via the communication unit of the digital camera.

13. A digital camera system according to claim 1, wherein:
the digital camera includes an operating unit;
an compression rate is set for a digital image through an operation of the operating unit; and
information indicating the compression rate having been set is communicated to the compression unit at the image storage apparatus via the communication unit of the digital camera.

14. A digital camera system according to claim 1, wherein:
the temporary storage unit is a nonvolatile memory.

15. A digital camera system according to claim 1, wherein:
in the temporary storage unit an area corresponding to digital image signals having been transmitted is assigned as an available storage area.

16. A digital camera system according to claim 1, wherein:
the digital camera includes a subsampling unit that subsamples digital image signals identical to the digital image signals stored in the temporary storage unit; and
a post-subsampling data storage unit in which post-subsampling digital image signals are stored in relation to the digital signals stored in the temporary storage unit.

17. A digital camera system according to claim 16, wherein:
the digital camera includes a display unit at which digital image signals stored in the post-subsampling data storage unit are displayed.

18. A digital camera system according to claim 17, wherein:
a specification signal specifying digital image signals in the post-subsampling data storage unit which are brought up on display at the display unit is transmitted to the image storage apparatus.

19. A digital camera system according to claim 18, wherein:
the image storage apparatus deletes corresponding compressed image signals from the first storage unit based upon the specification signal.

20. A digital camera system according to claim 18, wherein:
the image storage apparatus outputs corresponding compressed image signals in the first storage unit for an image print based upon the specification signal.

21. A digital camera system according to claim 20, wherein:
the image storage apparatus includes a second storage unit in which the received digital image signals are stored in an uncompressed state in relation to the compressed image signals, and outputs the digital image signals in the second storage unit for an image print in an image size specified by the specification signal.

22. A digital camera system according to claim 1, wherein:
the image storage apparatus includes a second storage unit in which the received digital image signals are stored in an uncompressed state in relation to the compressed image signals.

23. A digital camera system according to claim 1, wherein:
the image storage apparatus includes a subsampling unit that subsamples the received digital image signals and a second storage unit in which post-subsampling digital image signals are stored in relation to the digital image signals stored in the temporary storage unit.

24. A digital camera system according to claim 1, wherein:
the digital camera includes an instruction signal output unit that outputs an instruction signal to be transmitted to the image storage apparatus; and
the image storage apparatus outputs the post-subsampling digital image signals from the second storage unit in response to the instruction signal and transmits the post-subsampling digital image signals to the digital camera.

25. A digital camera system comprising:
a digital camera having an image capturing unit, a temporary storage unit in which raw data provided by the image capturing unit are stored and a communication unit that wirelessly transmits the raw data at the temporary storage unit; and
an image storage apparatus having a communication unit that receives the raw data and an interpolation unit that generates digital image signals corresponding to different colors by interpolating the received raw data.

26. A digital camera system according to claim 25, wherein:
the image storage apparatus includes an image subsampling unit.

27. A digital camera system comprising:
a digital camera having an image capturing unit, a temporary storage unit in which raw data provided by the image capturing unit are stored and a communication unit that wirelessly transmits the raw data at the temporary storage unit; and
an image storage apparatus having a communication unit that receives the raw data and an image subsampling unit that creates a post-subsampling image based upon the received raw data.

28. An image storage apparatus, comprising:
a communication unit that receives uncompressed digital image signals from a digital camera via a communication line;
a compression unit that compresses the received digital image signals; and
a first storage unit in which the compressed image signals are stored.

29. An image storage apparatus according to claim 28, wherein:
the uncompressed digital image signals are raw data output from an image capturing unit of the digital camera.

30. An image storage apparatus according to claim 29, further comprising:
an interpolation unit that generates digital image signals corresponding to different colors by interpolating the received raw data.

31. An image storage apparatus according to claim 30, wherein:
the interpolation unit receives information needed to execute interpolation from the digital camera.

32. An image storage apparatus according to claim 28 further comprising:
a white balance adjustment unit.

33. An image storage apparatus according to claim 32, wherein color balance specification information needed to execute white balance adjustment is received from the digital camera.

34. An image storage apparatus according to claim 28 further comprising:
an edge emphasis unit.

35. An image storage apparatus according to claim 34, wherein specification information specifying a level of edge emphasis to be achieved is received from the digital camera.

36. An image storage apparatus according to claim 28, further comprising:
a subsampling unit that subsamples image data.

37. An image storage apparatus according to claim 36, wherein image size specification information needed to subsample the image is received from the digital camera.

38. An image storage apparatus according to claim 28, wherein compression rate specification information needed to compress the image is received from the digital camera.

39. An image storage apparatus according to claim28, wherein compressed image signals is deleted from the first storage unit based upon an instruction issued at the digital camera.

40. An image storage apparatus according to claim 28, wherein compressed image signals in the storage unit are outputted for an image print as specified at the digital camera.

41. An image storage apparatus according to claim 40, further comprising:
a second storage unit in which the uncompressed digital image signals from the digital camera are stored without undergoing compression in relation to the compressed image signals; and
the digital image signals in the second storage unit are output for an image print in an image size matching a specification issued at the digital camera.

42. An image storage apparatus comprising:
a storage unit in which uncompressed digital image data are stored; and
an output unit that outputs uncompressed digital image data in the storage unit for an image print in an image size matching a specification issued from the outside.

43. An image storage apparatus according to claim 42, wherein:
the output unit outputs data achieving the image size matching the specification for an image print after compressing the data at a compression rate matching the specification.

44. An image storage apparatus according to claim 42, wherein:
the uncompressed digital image data are raw data.

45. An image storage apparatus comprising:
a communication unit that receives raw data output by an image capturing unit of a digital camera via a communication line;
an interpolation unit that generates digital image signals corresponding to different colors by interpolating the received raw data; and
a storage unit in which the digital image signals resulting from the interpolation are stored.

46. An image storage apparatus comprising:
a communication unit that receives raw data output by an image capturing unit of a digital camera via a communication line;
an image subsampling unit that subsamples digital image signals generated based upon the received raw data; and
a storage unit in which post-subsampling digital image signals are stored.

47. An image storage apparatus comprising:
a storage unit in which digital image data with a large image size and digital image data with a small image size corresponding to a single image are stored;
an output unit that outputs the digital image data with the small image size in conformance to a specification issued from the outside; and
an output unit that outputs the digital image data with a large image size for an image print in conformance to a specification issued from the outside upon receiving the digital image data with the small image size output thereto.

48. An image storage apparatus comprising:
a communication unit that receives digital image signals with a large image size from a digital camera via a communication line;
an image conversion unit that generates digital image signals with a small image size corresponding to an image constituted with the received digital image signals by using the received digital signals;
a storage unit in which the digital image signals with the large image size and the digital image signals with the small image size are both stored in relation to each other; and
an output unit that outputs either the digital image data with the small image size or digital image data with the small image size by automatically identifying a contact from the outside.

49. A digital camera comprising:
an image capturing unit;
a temporary storage unit in which digital image signals provided by the image capturing unit are stored; and
a communication unit that wirelessly transmits the digital image signals at the temporary storage unit without compressing the digital image signals to a specific image apparatus.

50. A digital camera according to claim 49, wherein:
the communication unit transmits the digital image signals to the image storage apparatus via the Internet.

51. A digital camera according to claim 49, further comprising:
a shutter release unit, wherein:
the communication unit transmits the digital image signal to the image storage apparatus in response to an operation of the shutter release unit.

52. A digital camera according to claim 49, wherein:
the digital image signals transmitted from the digital camera to the image storage apparatus is raw data output by the image capturing unit.

53. A digital camera according to claim 52, wherein:
the communication unit transmits information needed to interpolate the raw data to the image storage apparatus.

54. A digital camera according to claim 49, further comprising:
an operating unit, wherein:
a color balance is set for a digital image through an operation of the operating unit; and
the color balance having been set is communicated to the image storage apparatus via the communication unit.

55. A digital camera according to claim 49, further comprising:
an operating unit, wherein:
a level of edge emphasis to be achieved in a digital image is set through an operation of the operation unit; and
the edge emphasis level having been set is communicated to the image storage apparatus via the communication unit.

56. A digital camera according to claim 49, further comprising:
an operating unit, wherein:
an image size for a digital image is set through an operation of the operating unit; and
the image size having been set is communicated to the image storage apparatus via the communication unit.

57. A digital camera according to claim 49, further comprising:
an operating unit, wherein:
a compression rate is set for a digital image through an operation of the operating unit; and
the compression rate having been set is communicated to the image storage apparatus via the communication unit.

58. A digital camera according to claim 49, further comprising:
an operating unit, wherein:
digital image signals having been processed at the image storage apparatus are received through an operation of the operating unit.

59. A digital camera according to claim 58, wherein:
the received digital image signals achieve a smaller image size than the digital image signals having been transmitted.

60. A digital camera according to claim 49, further comprising:
a subsampling unit that subsamples digital image signals identical to the digital image signals stored in the temporary storage unit; and
a post-subsampling data storage unit in which post-subsampling digital image signals are stored in relation to the digital signals stored in the temporary storage unit.

61. A digital camera system according to claim 60, further comprising:
a display unit at which digital image signals at the post-subsampling data storage unit are displayed.

62. A digital camera system according to claim 61, further comprising:
an operating unit, wherein:
a delete signal instructing that image signals corresponding to digital image signalsin the post-subsampling data storage unit which are brought up on display at the display unit are to be deleted is transmitted to the image storage apparatus through an operation of the operating unit.

63. A digital camera system according to claim 61, further comprising:
an operating unit, wherein:
an instruction signal instructing that image signals corresponding to the digital image signals in the post-subsampling data storage unit which are brought up on display at the display unit are to be output for printing is transmitted to the image storage apparatus through an operation of the operating unit.

64. A digital camera according to claim 61, further comprising:
an operating unit, wherein:
an instruction signal instructing that image signals corresponding to the digital image signals in the post-subsampling data storage unit which are brought up on display at the display unit are to be received is transmitted to the image storage apparatus through an operation of the operating unit.

65. A digital camera comprising:
an image capturing unit;
a communication unit that transmits digital image signals generated based upon image capturing signals from the image capturing unit to a specific image storage apparatus;
a subsampling unit that subsamples digital image signals identical to the digital image signals transmitted to the image storage apparatus;
a post-subsampling data storage unit in which post-subsampling digital image signals resulting from subsampling are stored in relation to the digital signals transmitted to the image storage apparatus;
an operating unit;
a delete unit that deletes the post-subsampling data in the post-subsampling data storage unit in response to an operation of the operating unit; and
a transmission unit that transmits a delete signal in response to which the corresponding digital image signals at the image storage apparatus is to be deleted are transmitted to the image storage apparatus via the communication unit through an operation of the operating unit.

66. A portable telephone integrated digital camera, comprising:
a telephone transceiver unit;
a communication unit that wirelessly transmits and receives transmission/reception signals;
an image capturing unit;
a temporary storage unit in which digital image signals provided by the image capturing unit are stored; and
a transmission unit that transmits the digital image signals in the temporary storage unit without compressing the digital image signals to an external image storage apparatus via a the communication unit.

67. A portable telephone integrated digital camera, comprising:
a telephone transceiver unit;
a communication unit that wirelessly transmits a signal originating from the telephone transceiver unit and receives an incoming signal at the telephone transceiver unit;
an image capturing unit;
a transmission unit that transmits digital image signals generated based upon the digital image signals provided by the image capturing unit to the outside via the communication unit; and
a forced activation unit that forcibly activates an image capturing operation at the image capturing unit and a transmission by the transmission unit.

68. A portable telephone integrated digital camera according to claim 67, wherein:
the forced activation unit is started up in response to an external signal received via the communication unit.

69. A portable telephone integrated digital camera according to claim 67, further comprising:
an operating unit that is not operated to start up an image capturing operation by the image capturing unit or a transmission by the transmission unit, wherein:
the forced activation unit is started up in response to an operation of the operating unit.

70. A portable telephone integrated digital camera according to claim 69, wherein:
the forced activation unit is switched from a non-functional state to a functional state in response to an external signal received via the communication unit.

71. A portable telephone integrated digital camera, comprising:
a telephone transceiver unit;
a communication unit that wirelessly transmits and receives transmission/reception signals;
an image capturing unit;
a transmission unit that transmits digital image signals generated based upon image-capturing signals provided by the image capturing unit to the outside via the communication unit;
a switching unit that selects either a talk mode for having a telephone conversation and a send mode for executing a transmission; and
a transmission halting unit that halts a transmission executed by the transmission unit if the switching unit switches to the talkmode during the transmission of the digital image signals.

72. A portable telephone integrated digital camera according to claim 71, further comprising:
a display unit, wherein:
if a telephone talk signal originating from outside arrives while transmitting a digital image, the send mode is sustained and the arrival of the telephone talk signal is indicated at the display unit.

73. A portable telephone integrated digital camera comprising:
a first body having an image capturing lens disposed thereat;
a second body having disposed thereat a vertical display unit at which an image captured through the image capturing lens and text characters can be displayed; and
a connecting portion that allows the first body and the second body to be folded into a first state in which the image capturing lens and the display unit are concealed inside and also allows the first body and the second body to be folded along opposite directions from each other into a second state in which the image capturing lens and the display unit are set back-to-back.

74. A portable telephone integrated digital camera according to claim 73, wherein:
the text character display at the display unit is rotated by 90° to achieve a horizontal display in the second state.

75. A digital camera back that can be mounted in place of a rear lid of a silver halide camera, comprising:
an image sensor that detects a subject image formed through a photographic lens of the silver halide camera;
a temporary storage unit in which digital image signals output by the image sensor are temporarily stored;
a wireless transmission control unit that implements control to wirelessly transmit the digital image signals in the temporary storage unit to a specific image storage apparatus without compressing the digital image signals; and
a signal exchange unit that exchanges digital signals with the silver halide camera.

76. A digital camera back according to claim 75, further comprising:
a wireless communication unit that transmits the digital signals to the specific image storage apparatus, wherein:
the digital image signals in the temporary storage unit are wirelessly transmitted without undergoing compression under control implemented by the wireless transmission control unit at the wireless communication unit.

77. A digital camera back according to claim 75, further comprising:
a transfer unit that transfers the digital signals to a portable telephone, wherein:
the digital image signals in the temporary storage unit are wirelessly transmitted to the specific image storage apparatus via the portable telephone, under control implemented by the wireless transmission control unit.

78. A digital camera back according to claim 77, wherein:
the transfer unit is a short-range radio communication device.

79. A digital camera back according to claim 77, wherein:
the transfer unit is an infrared communication device.

80. A digital camera back according to claim 77, wherein:
the transfer unit is a cable connected to the portable telephone.

81. A digital camera back according to claim 77, wherein:
the portable telephone connects with the specific image storage apparatus via the Internet.

82. A digital camera back according to claim 75, wherein:
the wireless transmission control unit responds to a shutter release signal from the silver halide camera which is communicated by the signal exchange unit.

83. A digital camera back according to claim 75, wherein:
the digital image signals that are wirelessly transmitted are raw data output by the image sensor.

84. A digital camera back according to claim 83, wherein:
the wireless transmission control unit transmits information needed to interpolate the raw data together with the raw data to the image storage apparatus.

85. A digital camera back according to claim 75, further comprising:
an operating unit, wherein:
color balance information is set for a digital image through an operation of the operating unit; and
the color balance information having been set is wirelessly transmitted to the image storage apparatus together with the digital image signals under control implemented by the wireless transmission control unit.

86. A digital camera back according to claim 75, further comprising:
an operating unit wherein:
edge emphasis level information is set through an operation of the operating unit; and
the edge emphasis level information having been set is wirelessly transmitted to the image storage apparatus together with the digital image signals under control implemented by the wireless transmission control unit.

87. A digital camera back according to claim 75, further comprising:
an operating unit wherein:
an image size is set for a digital image through an operation of the operating unit; and
information indicating the image size having been set is wirelessly transmitted to the image storage apparatus together with the digital image signals under control implemented by the wireless transmission control unit.

88. A digital camera back according to claim 75, further comprising:
an operating unit, wherein:
compression rate information is set for a digital image through an operation of the operating unit; and
the compression rate information having been set is wirelessly transmitted to the image storage apparatus together with the digital image signals under control implemented by the wireless transmission control unit.

89. A digital camera back according to claim 75, wherein:
information indicating a color temperature of a subject originating from the silver halide camera and communicated via the signal exchange unit is wirelessly transmitted to the image storage apparatus together with the digital image signals under control implemented by the wireless transmission control unit.

90. A digital camera back according to claim 75, wherein:
information needed to for universal image file creation is wirelessly transmitted the image storage apparatus together with the digital image signals under control implemented by the wireless transmission control unit.

91. A digital camera back according to claim 75, further comprising:
an operating unit, wherein:
digital image signals having been processed at the image storage apparatus are received through an operation of the operating unit.

92. A digital camera back according to claim 91, wherein:
the digital image signals that are received achieve a smaller image size than the digital image signals having been transmitted.

93. A digital camera back according to claim 75, further comprising:
a subsampling unit that subsamples digital image signals identical to the digital image signals stored in the temporary storage unit; and
a post-subsampling data storage unit in which post-subsampling digital image signals are stored in relation to the digital signals stored in the temporary storage unit.

94. A digital camera back according to claim 93, further comprising:
a display unit at which digital image signals in the post-subsampling data storage unit are displayed.

95. A digital camera back according to claim 94, further comprising:
an operating unit wherein:
the wireless transmission control unit implements control so as to transmit to the image storage apparatus a delete signal instructing that image signals indicated through an operation of the operating unit among the digital image signals in the post-subsampling the storage which are brought up on display at the display unit be deleted.

96. A digital camera back according to claim 94, further comprising:
an operating unit wherein:
the wireless transmission control unit implements control so as to transmit to the image storage apparatus an instruction signal instructing that image signals indicated through an operation of the operating unit among the digital image signals in the post-subsampling data storage unit which are brought up on display at the display unit be output for printing.

97. A digital camera back according to claim 94, further comprising:
an operating unit wherein:
the wireless transmission control unit implements control so as to transmit to the image storage apparatus a request signal requesting digital image signals indicated through an operation of the operating unit among the digital image signals in the post-subsampling data storage unit which are brought up on display at the display unit be output for printing

98. A digital camera back that can be mounted in place of a rear lid of a silver halide camera, comprising:
an image sensor that detects a subject image formed through a photographic lens of the silver halide camera;
a temporary storage unit in which raw data output by the image sensor are temporarily stored;
an output control unit that implements control to output raw data in the temporary storage unit and information needed to interpolate the raw data to a specific image storage apparatus; and
a signal exchange unit that exchanges digital signals with the silver halide camera.

99. A digital camera back that can be mounted in place of a rear lid of a silver halide camera, comprising:
an image sensor that detects a subject image formed through a photographic lens of the silver halide camera;
a temporary storage unit in which raw data output by the image sensor are temporarily stored;
an output control unit that implements control to output raw data in the temporary storage unit and file information needed for universal image file creation to a specific image storage apparatus; and
a signal exchange unit that exchanges digital signals with the silver halide camera.

100. An image storage apparatus comprising:
a communication unit that receives raw data output by an image capturing unit of a digital camera and file information needed for universal image file creation via a public communication line;
a universal image file creation unit that creates a universal image file based upon the raw data and the file information having been received; and
a storage unit in which the universal image file is stored.

101. A digital camera back that can be mounted in place of a rear lid of a silver halide camera, comprising:
an image sensor that detects a subject image formed through a photographic lens of the silver halide camera;
a temporary storage unit in which raw data output by the image sensor are temporarily stored;
a signal exchange unit that exchanges digital signals with the silver halide camera; and
an output control unit that implements control to output to a specific image storage apparatus raw data in the temporary storage unit and information related to a subject color temperature originating from the silver halide camera and communicated by the signal exchange unit.

102. An image storage apparatus comprising:
a communication unit that receives raw data output by an image capturing unit of a digital camera and information related to a color temperature of a subject via a public communication line;
an image creation unit that generates digital image signals having undergone a white balance adjustment based upon the raw data and the information related to the subject color temperature having been received; and
a storage unit in which the digital image signals are stored.

103. A digital camera back that can be mounted in place of a rear lid of a silver halide camera, comprising:
a signal exchange unit that exchanges digital signals with the silver halide camera;
an image sensor that detects a subject image formed through a photographic lens of the silver halide camera;
a transmission control unit that implements control to transmit digital image signals output by the image sensor to an image storage apparatus;
a subsampling unit that subsamples digital image signals identical to the digital image signals transmitted to the image storage apparatus;
a post-subsampling data storage unit in which post-subsampling digital image signals are stored in relation to the digital signals transmitted to the image storage apparatus; and
an operating unit operated to delete a post-subsampling data in the post-subsampling storage unit, wherein:
the wireless transmission control unit implements control to transmit to the image storage apparatus a delete signal instructing that corresponding image signals indicated through an operation of the operating unit be deleted.

104. A digital camera comprising:
an image capturing unit;
a temporary storage unit in which raw data output by the image capturing unit are temporarily stored; and
a wireless transmission control unit that implements control to wirelessly transmit to a specific image storage apparatus the raw data in the temporary storage unit and file information needed for universal image file creation.

105. A digital camera comprising:
an image capturing unit;
a temporary storage unit in which raw data output by the image capturing unit are temporarily stored;
a measurement unit that obtains through measurement information related to a subject color temperature; and
a wireless transmission control unit that implements control to wirelessly transmit to a specific image storage apparatus the raw data in the temporary storage unit and the information related to the subject color temperature.

106. A digital camera system comprising:
a digital camera having an image-capturing unit, a storage unit in which raw data provided by the image-capturing unit are stored and an output unit that outputs raw data from the storage unit; and
an image storage apparatus having an input unit to which the raw data are input, an interpolation unit that generates digital image signals by interpolating the input raw data, a compression unit that compresses the digital image signals provided by the interpolation unit and a storage unit in which the compressed image signals are stored.

107. A digital camera system according to claim 106, wherein:
the input unit of the image storage apparatus includes a digital signal communication unit which is connected to the output unit of the digital camera.

108. A digital camera system according to claim 106 or claim 107, wherein:
the image storage apparatus includes a plurality of interpolation units and an identification unit that identifies the digital camera and executes interpolation by engaging an interpolation unit matching the identified digital camera.

109. A digital camera system according to any of claims 106 through 108, wherein:
the image storage apparatus includes a plurality of interpolation units and executes interpolation by selecting a matching interpolation unit based upon information input from the digital camera.

110. A digital camera system according to any of claims 106 through 109, wherein:
the image storage apparatus includes a white balance adjustment unit.

111. A digital camera system according to any of claims 106 through 110, wherein:
the image storage apparatus includes an edge emphasis unit.

112. A digital camera system according to any of claims 106 through 111, wherein:
the image storage apparatus includes an image subsampling unit.

113. A digital camera system according to any of claims 106 through 112, wherein:
an area of the storage unit corresponding to the raw data output from the output unit is assigned as available storage area.

114. A digital camera system according to any of claims 106 through 113, wherein:
the image storage apparatus includes a second storage unit in which the digital image signals provided by the interpolation unit are stored without undergoing compression in relation to the compressed image signals.

115. An image storage apparatus comprising:
an input unit to which raw data provided by an image capturing unit of a digital camera are input;
an interpolation unit that generates digital image signals by interpolating the input raw data;
a compression unit that compresses the digital image signals provided by the interpolation unit; and
a storage unit that stores compressed image signals.

116. An image storage apparatus according to claim 115, wherein:
the input unit is a loading unit at which a storage medium having stored therein raw data is loaded.

117. An image storage apparatus according to claim 115 or claim 116, further comprising:
a display unit at which the digital image signals are displayed; and
an instruction unit that issues an instruction as to whether or not compressed image signals corresponding to the digital image signals on display are to be stored, wherein:
the storage unit stores compressed image signals for which the instruction is issued by the instruction unit.

118. An image storage apparatus according to any of claims 115 through 117, comprising:
a plurality of interpolation units; and
an identification unit that identifies the digital camera, wherein
interpolation is executed by engaging an interpolation unit matching the identified digital camera.

119. An image storage apparatus according to any of claims 115 through 118, comprising:
a plurality of interpolation units, wherein
interpolation is executed by selecting a matching interpolation unit based upon information input from the digital camera.

120. An image storage apparatus according to claim 118 or claim 119, wherein:
the storage unit stores the compressed image signals regardless of which of the plurality of interpolation units is engaged to execute the interpolation.

121. An image storage apparatus according to any of claims 115 through 120, further comprising:
a white balance adjustment unit.

122. An image storage apparatus according to any of claims 115 through 121 further comprising:
an edge emphasis unit.

123. An image storage apparatus according to any of claims 115 through 122, further comprising:
an image subsampling unit.

124. An image storage apparatus according to any of claims 115 through 123, further comprising:
a second storage unit in which the digital image signals provided by the interpolation unit are stored without undergoing compression in relation to the compressed image signals.

125. An image storage apparatus according to any of claims 115 through 124, wherein:
information needed to execute interpolation is input from the digital camera to the interpolation unit.

126. A program that enables a computer to achieve a function according to any of claims 115 through 125.

127. A digital camera comprising:
an image-capturing unit;
a storage unit in which raw data provided by the image-capturing unit are stored in a volume corresponding to a plurality of images; and
an output unit that outputs the raw data in the storage unit and information needed to interpolate the raw data to a specific image storage apparatus.

128. A digital camera comprising:
an image-capturing unit;
a storage unit in which raw data provided by the image-capturing unit are stored in a volume corresponding to a plurality of images; and
an output unit that outputs the raw data in the storage unit and information needed for universal image file creation to a specific image storage apparatus.

129. A digital camera according to claims 127 or 128, wherein:
an area of the storage unit corresponding to the raw data output from the output unit is assigned as available storage area.

130. A digital camera back that can be mounted in place of a rear lid of a silver halide camera, comprising:
an image sensor that detects a subject image formed through a photographic lens of the silver halide camera;
a storage unit in which raw data provided by the image sensor are stored in a volume corresponding to a plurality of images;
an output unit that outputs raw data to a specific image storage apparatus from the storage unit; and
a signal exchange unit that exchanges digital signals with the silver halide camera.

131. A digital camera back according to claim 130, wherein:
the output unit outputs information needed to interpolate the raw data together with the raw data to the outside.

132. A digital camera back according to claim 130 or claim 131, wherein:
the output unit outputs information related to a subject color temperature originating from the silver halide camera and communicated by the signal exchange unit together with the raw data to the outside.

133. A digital camera back according to any of claims 130 through 132, wherein:
information needed for universal image file creation is output together with the raw data to the outside.

134. A digital camera system comprising:
a digital camera having an image capturing unit, a storage unit in which raw data provided by the image capturing unit are stored and an output unit that outputs raw data from the storage unit; and
a program that enables a computer to which the raw data are input to achieve an interpolation function for generating digital image signals by interpolating the raw data, a compression function for compressing the digital image signals generated through the interpolation function and a storage control function for controlling storage of the compressed image signals obtained through the compression function.

135. A digital camera system comprising:
a digital camera having an image capturing unit, a storage unit in which raw data provided by the image capturing unit are stored and an output unit that outputs raw data from the storage unit; and
a storage medium having stored therein a computer program that achieves an interpolation function for generating digital image signals by interpolating the raw data, a compression function for compressing the digital image signals generated through the interpolation function and a storage control function for controlling storage of the compressed image signals obtained through the compression function.

136. A digital camera comprising:
an image capturing unit;
a loading unit at which a detachable storage medium is loaded; and
a storage control unit that implements control to store raw data provided by the image capturing unit into the storage medium via the loading unit.

137. A digital camera according to claim 136, wherein:
the storage control unit implements control to store information needed to interpolate the raw data together with the raw data into the storage medium.

138. A digital camera according to claim 136 or claim 137, wherein:
the storage control unit implements control to store information needed for universal image file creation together with the raw data into the storage medium.

139. A digital camera back that can be mounted in place of a rear lid of a silver halide camera, comprising:
an image sensor that detects a subject image formed through a photographic lens of the silver halide camera;
a loading unit at which a detachable storage medium is loaded;
a storage control unit that implements control to store raw data output from the image sensor into the storage medium via the loading unit; and
a signal exchange unit that exchanges digital signals with the silver halide camera.

140. A digital camera back according to claim 139, wherein:
the storage control unit implements control to store information needed to interpolate the raw data together with the raw data into the storage medium.

141. A digital camera back according to claim 139 or claim 140, wherein:
the storage control unit implements control to store information needed for universal image file creation together with the raw data into the storage medium.

142. A digital camera back according to any of claims 139 through 141, wherein:
the storage control unit implements control to store information related to a subject color temperature originating from the silver halide camera and communicated by the signal exchange unit together with the raw data into the storage medium.

143. A digital camera system comprising;
a digital camera having an image capturing unit, a loading unit at which a detachable storage medium is loaded and a storage control unit that implements control to store raw data provided by the image capturing unit into the storage medium via the loading unit; and
a program that enables a computer to which the raw data are input to achieve an interpolation function for generating digital image signals by interpolating the raw data.

144. A digital camera system comprising:
a digital camera having an image capturing unit, a loading unit at which a detachable storage medium is loaded and a storage control unit that implements control to store raw data provided by the image capturing unit into the storage medium via the loading unit; and
a storagemediumhaving stored therein a computer program that achieves an interpolation function for generating digital image signals by interpolating the raw data.

145. An image storage apparatus comprising:
a plurality of image input management units;
an image input execution unit that executes an image input by engaging a matching image input management unit based upon information input thereto; and
a storage unit that stores an input image regardless of which of the plurality of image input management units is engaged to execute the image input.

146. An image storage apparatus comprising:
an input unit to which raw data provided by an image capturing unit of a digital camera are input;
an interpolation unit that generates digital image signals by interpolating the input raw data;
a display unit at which the digital image signals are displayed;
an instruction unit that issues an instruction as to whether or not digital image signals on display are to be stored;
a compression unit that compresses the digital image signals provided by the interpolation unit for which the instruction has been issued by the instruction unit; and
a storage unit that stores the compressed image signals.

147. An image storage apparatus comprising:
an input unit to which an encrypted image is input;
a decryption unit that decrypts the input image by using a matching decryption algorithm based upon information input thereto; and
a storage unit that stores the decrypted image.

148. An image storage apparatus according to claim 147, wherein:
the decryption unit identifies a digital camera based upon a signal input thereto and decrypts the input image by using a decryption algorithm matching the identified digital camera.

149. A digital camera comprising:
an image-capturing unit;
an encryption unit that encrypts image data provided by the image capturing unit; and
an output unit that outputs the encrypted image data together with an identification signal to be used to identify the digital camera.

150. A digital camera comprising:
an image-capturing unit;
a loading unit at which a detachable storage medium is loaded;
a storage control unit that implements control to store first image data which are based upon an output from the image capturing unit into the detachable storage medium loaded at the loading unit;
an image display unit;
an internal storage unit in which second image data for display at the image display unit are stored based upon the output from the image capturing unit; and
a reproduction control unit that implements control to reproduce the second image data stored in the internal storage unit at the image display unit, wherein:
the internal storage unit holds second image data corresponding to first image data stored in a detachable storage medium which has been removed from the loading unit.

151. A digital camera according to claim 150, wherein:
the image capturing unit outputs image information with an information volume exceeding the display capability of the image display unit;
the first image data achieve an information volume exceeding the display capability of the image display unit; and
the second image data achieve an information volume corresponding to the display capability of the image display unit.

152. A digital camera according to claim 150 or claim 151, wherein:
thumbnail image data are stored in the detachable storage medium and the internal storage unit respectively in correspondence to the first image data and the second image data.

153. A digital camera according to any of claims 150 through 152, wherein:
the first image data are raw data output by the image capturing unit.

154. A digital camera comprising:
an image-capturing unit;
an output unit that outputs to the outside image data obtained based upon an output from the image-capturing unit;
an image display unit;
a display data creation unit that creates display data to be used for display at the image display unit in correspondence to all image data output to the outside;
a storage unit in which the display data are stored; and
a reproduction control unit that implements control to reproduce the display data stored in the storage unit at the image display unit, wherein:
the storage unit holds display data corresponding to all the image data output to the outside.

155. A digital camera according to claim 154, wherein:
the output unit outputs thumbnail image data in correspondence to the image data output to the outside; and
the storage unit stores thumbnail image data in correspondence to the display data.

156. A digital camera according to claim 154 or claim 155, further comprising:
a loading unit at which a detachable storage medium is loaded, wherein:
the output unit includes a storage control unit that implements control to store the image data into the detachable storage medium loaded at the loading unit; and
identification information to be used to identify the detachable storage medium into which the image data are stored, is stored in relation to the display data in the storage unit.

157. A digital camera comprising:
an image-capturing unit;
a loading unit at which a detachable storage medium is loaded;
a storage control unit that implements control to store image data which are based upon an output from the image capturing unit into the detachable storage medium loaded at the loading unit; and
an internal storage unit in which identification information to be used to identify the detachable storage medium having stored therein the image data is stored, wherein:
the identification information is continuously held after the detachable storage medium is unloaded from the loading unit.

158. A digital camera comprising:
an image-capturing unit;
a loading unit at which a detachable storage medium is loaded;
a storage control unit that implements control to store first image data which are based upon an output from the image capturing unit into the detachable storage medium loaded at the loading unit;
an image display unit;
an internal storage unit in which second image data for display at the image display unit are stored based upon the output from the image capturing unit; and
a reproduction control unit that implements control to reproduce the second image data stored in the internal storage unit at the image display unit, wherein:
information to be used to identify the detachable storage mediumhaving stored therein the first image data corresponding to the second image data is stored in relation to the second image data in the internal storage unit.

159. An image reproduction apparatus comprising:
a loading unit at which a detachable storage medium is loaded;
an image display unit;
a reproduction control unit that implements control to reproduce at the image display unit image data stored in a detachable storage medium loaded at the loading unit; and
an internal storage unit in which information as to the image data used for reproduction and identification information used to be to identify the detachable storage medium having stored therein the image data are stored in relation to each other, wherein:
the internal storage unit holds the information as to the image data used for reproduction and the identification information even after the detachable storage medium is removed from the loading unit.

160. A digital camera comprising:
an image reproduction apparatus according to claim 159.

161. A digital camera comprising:
an image-capturing unit;
an output unit that outputs to the outside image data obtained based upon an output from the image-capturing unit;
an image display unit;
a display data creation unit that creates display data to be displayed at the image display unit in correspondence to image data output to the outside;
a storage unit in which the display data are stored; and
a reproduction control unit that determines whether reproduction of the display data stored in the storage unit at the image display unit is to be permitted or prohibited.

162. A digital camera according to claim 161, wherein:
the storage unit stores condition information in correspondence to individual sets of display data; and
the reproduction control unit enables reproduction of display data matching specific condition information.

163. A digital camera according to claim 161 or claim 162, further comprising:
a loading unit at which a detachable storage medium is loaded, wherein:
the output unit includes a storage control unit that implements control to store the image data into a detachable storage medium loaded at the loading unit.

164. A digital camera according to any of claims 161 through 163, wherein:
the output unit includes a communication unit that transmits the image data to the outside through wireless communication.

165. A digital camera according to any of claims 161 through 164, wherein:
the output unit transmits the image data to the outside through wired communication.

166. A digital camera comprising:
an image-capturing unit;
a loading unit at which a detachable storage medium is loaded;
a storage control unit that implements control to store first image data which are based upon an output from the image capturing unit into a detachable storage medium loaded at the loading unit;
an image display unit;
an internal storage unit in which second image data for display at the image display unit are stored based upon the output from the image capturing unit; and
a reproduction control unit that permits the second image data to be reproduced at the image display unit when corresponding image data are present in a detachable storage medium loaded at the loading unit.

167. A digital camera according to claim 166, wherein:
the reproduction control unit permits reproduction of the second image data matching specific condition information even when the corresponding image data are not present in the detachable storage medium loaded at the loading unit.

168. A digital camera comprising:
an image-capturing unit;
an output unit that outputs to the outside raw data provided by the image-capturing unit;
an image display unit;
a display data creation unit that creates display data to be used for display at the image display unit based upon the raw data;
a storage unit in which the display data are stored; and
a reproduction control unit that implements control to reproduce the display data stored in the storage unit at the image display unit, wherein:
the storage unit holds display data corresponding to the raw data output to the outside.

169. A digital camera according to claim 168, further comprising:
a loading unit at which a detachable storage medium is loaded, wherein:
the output unit includes a storage control unit that implements control to store the raw data into a detachable storage medium loaded at the loading unit.

170. A digital camera according to claim 168 or claim 169, wherein:
the output unit includes a communication unit that transmits the raw data to the outside through wireless communication.

171. A digital camera according to claim 168 or claim 169, wherein:
the output unit transmits the raw data to the outside through wired communication.

172. A digital camera comprising:
an image capturing unit;
a loading unit at which a detachable storage medium is loaded;
a storage control unit that implements control to store raw data provided by the image capturing unit into a detachable storage medium loaded at the loading unit;
an image display unit;
an internal storage unit in which display data for display at the image display unit are stored based upon an output from the image capturing unit;
a reproduction control unit that implements control to reproduce the display data stored in the internal storage unit at the image display unit; and
a decision-making unit that makes a decision as to whether or not there are raw data corresponding to the reproduced display data.

173. A digital camera according to claim 172, wherein:
results of the decision made by the decision-making unit are displayed in relation to a reproduction of the display image.

174. An image reproduction apparatus comprising:
a loading unit at which a detachable storage medium is loaded;
an image display unit;
a display data creation unit that creates display data for display at the image display unit based upon raw data which are provided from an image capturing unit of a digital camera and are stored in the detachable storage medium loaded at the loading unit; and
a reproduction control unit that implements control to reproduce the display data at the image display unit.

175. An image reproduction apparatus according to claim 174, further comprising;
an internal storage unit in which the display data and identification information used to identify a detachable storage medium having stored therein corresponding raw data are stored in relation to each other.

176. A digital camera, comprising:
an image reproduction apparatus according to claim 174 or claim 175.

177. A program that achieves a function according to any of claims 150 through 176.

178. A digital camera comprising:
an image capturing unit;
a storage unit in which raw data provided by the image capturing unit are stored;
a holding unit in which a processing program to be used to process the raw data is held; and
an output unit that outputs the raw data from the storage unit and the processing program from the holding unit.

179. A digital camera according to claim 178, further comprising:
a recording unit that records a recipient to which the processing program has been output, wherein:
the output unit does not output the processing program to the recipients recorded at the recording unit.

180. A digital camera according to claim 178 or claim 179, further comprising:
a lossless compression unit that compresses the raw data with lossless, wherein:
the output unit outputs raw data having been compressed with lossless by the lossless compression unit.

181. A digital camera comprising:
an image capturing unit;
a loading unit at which a detachable storage medium is loaded;
a holding unit that holds a processing program to be used to process the raw data; and
a storage control unit that implements control to store the raw data from the image capturing unit and the processing program from the holding unit into the storage medium via the loading unit.

182. A digital camera according to claim 181, further comprising:
a decision-making unit that makes a decision as to whether or not the processing program has been stored into the storage medium, wherein:
the storage control unit implements control so that the processing program is not stored into a storage medium having already stored therein the processing program based upon the decision made by the decision-making unit.

183. A digital camera according to claim 181 or claim 182, further comprising:
a lossless compression unit that compresses the raw data with lossless, wherein:
the storage control unit implements control to store raw data having been compressed with lossless by the reversible compression unit into the storage medium.

184. A digital camera comprising:
an image capturing unit;
a storage unit in which raw data provided by the image capturing unit are stored; and
a file creation unit that creates a file containing both the raw data from the storage unit and a processing program to be used to process the raw data.

185. A digital camera according to claim 184, wherein:
the file creation unit creates the file so that the processing program is automatically executed when the file is opened.

186. A digital camera according to claim 184 or claim 185, further comprising:
an output unit that outputs the file.

187. A digital camera according to any of claims 184 through 186, further comprising:
a loading unit at which a detachable storage medium is loaded; and
a storage control unit that implements control to store the file into the storage medium via the loading unit.

188. A digital camera according to any of claims 178 through 187, wherein:
the processing program includes an interpolation program for generating digital image signals by interpolating the raw data.

189. A digital camera according to any of claims 178 through 188, wherein:
the processing program includes a decompression program for decompressing data having undergone lossless compression.

190. A digital camera according to any of claims 178 through 189, wherein:
the processing program includes a digital image file creation program.

191. A digital camera according to claim 190, wherein:
the digital image file creation program provides image data as digital data to a file creation program that creates a digital data file by attaching file information to the digital data and also provides management information related to an image originating from the digital camera as the file information to the file creation program.

192. A digital image file creation apparatus comprising:
an input unit to which image data and image management information are input from a digital camera;
a file creation unit that creates a digital data file by attaching file information to the digital data; and
a data providing unit that provides the image data input via the input unit to the file creation unit as digital data and provides the management information as file information to the file creation unit.

193. A digital image file creation apparatus according to claim 192, wherein:
the management information includes photographing date information indicating the date on which the image data were photographed;
the file information includes file creation date information; and
the data providing unit provides the photographing date information to the file creation unit as the file creation date information.

194. A digital image file creation apparatus according to claim 192 or claim 193, wherein:
the management information includes photographer information indicating a photographer who photographed the image data;
the file information includes file creator information; and
the data providing unit provides the photographer information to the file creation unit as the file creator information.

195. A digital image file creation apparatus according to any of claims 192 through 194, wherein:
the management information includes title information indicating a title of the image data
the file information includes file name information; and
the data providing unit provides the title information to the file creation unit as the file name information.

196. A digital image file creation apparatus according to any of claims 192 through 195, wherein:
the image data are raw data provided by an image capturing unit of the digital camera;
a processing program to be used to process the raw data is input from the digital camera to the input unit; and
the data providing unit processes the raw data by using the processing program and provides the processed raw data to the file creation unit.

197. A program that enables a computer to achieve a function according to any of claims 192 through 196.

198. A digital camera comprising:
an image-capturing unit;
an output unit that outputs to the outside image data obtained based upon an output from the image-capturing unit;
an image display unit;
a display data creation unit that creates display data for display at the image display unit in correspondence to image data output to the outside;
an operating unit; and
a processing unit that reflects an operation executed at the operating unit on the display data displayed at the display unit on corresponding image data output to the outside.

199. A digital camera according to claim 198, further comprising:
a storage unit in which the display data are stored even after the image data are output to the outside.

200. The digital camera according to claim 198 or claim 199, wherein:
the processing unit processes image data to be output to the outside in correspondence to an operation at the operating unit performed with regard to the display data displayed at the display unit.

201. A digital camera according to claim 198 or claim 199, wherein:
the processing unit outputs to the outside information needed to process the image data in correspondence to an operation of the operating unit performed with regard to the display data displayed at the display units in relation to the image data via the output unit.

202. A digital camera according to any of claims 198 through 201, wherein:
the operation at the operating unit is an edit operation on the image data.

203. A digital camera according to the any of claims 198 through 202, wherein:
through the operation at the operating unit, an instruction for recording the image data is issued.

204. A digital camera according to any of claims 198 through 203, wherein:
the image data output to the outside are raw data provided by the image capturing unit.

205. A digital camera according to any of claims 198 through 204, wherein:
the output unit is a loading unit at which a detachable storage medium is loaded; and
the image data are output to the outside as the image data are stored into the detachable storage medium loaded at the loading unit.

206. A digital camera according to any of claims 198 through 205, wherein:
the display data creation unit modifies the display data based upon an operation at the operating unit performed with regard to the display data displayed at the display unit.

207. A digital camera comprising:
an image-capturing unit;
an output unit that outputs to the outside image data obtained based upon an output from the image-capturing unit;
an instruction unit that issues an instruction with regard to image data to be output to the outside;
an image display unit; and
a display data creation unit that creates display data for display at the image display unit while preventing any degradation of the image quality attributable to the instruction issued through the instruction unit with regard to the image data output to the outside.

208. A digital camera according to claim 207, wherein:
the display data creation unit creates the display data by reducing the number of pixels constituting the image data.

209. A digital camera according to claim 208, wherein:
if the instruction issued by the instruction unit indicates a reduction in the number of pixels constituting the image data, the display data creation unit creates the display data from the image data by lowering an extent to which the number of pixels constituting the image data is reduced.

210. A digital camera according to claim 209, wherein:
the instruction issued by the instruction unit indicates that only a portion of an image area corresponding to the image data is to be used.

211. A digital camera according to claim 210, wherein:
the instruction indicating that a portion of the image area corresponding to the image data is to be used is issued by the instruction unit to achieve a simulated telephoto effect by cutting out a portion of the image and enlarging the portion.

212. A digital camera according to claim 210, wherein:
the instruction indicating that a portion of the image area corresponding to the image data is to be used is issued by the instruction unit to trim a portion of the image.

213. A digital camera according to claim 209, wherein:
the instruction issued by the instruction unit indicates that the image data are to be recorded outside with a smaller number of recording pixels.

214. A digital camera according to any of claims 207 through 213, wherein:
the image data output to the outside are raw data provided by the image capturing unit.

215. A digital camera according to any of claims 207 through 214, wherein:
the output unit is a loading unit at which a detachable storage medium is loaded; and
the image data are output to the outside as the image data are stored into the detachable storage medium loaded at the loading unit.

216. A digital image reproduction apparatus, comprising:
a storage unit in which image data are stored;
an image display unit;
a display data creation unit that creates display data for display at the image display unit in correspondence to the image data in the storage unit;
an operating unit; and
a processing unit that reflects an operation at the operating unit performed with regard to the display data displayed at the display unit in the data stored in the storage unit.

217. The digital image reproduction apparatus according to claim 216, wherein:
the processing unit processes the image data in the storage unit in correspondence to an operation at the operating unit performed with regard to the display data displayed at the display unit.

218. A digital image reproduction apparatus according to claim 216, wherein:
the processing unit stores into the storage unit information needed to process the image data in correspondence to an operation at the operating unit performed with regard to the display data displayed at the display unit in relation to the image data.

219. A digital image reproduction apparatus according to any of claims 216 through 218, wherein:
the operation at the operating unit is an edit operation on the image data.

220. A digital image reproduction apparatus according to any of claims 216 through 219, further comprising:
a loading unit, wherein:
the storage unit is a detachable storage medium loaded at the loading unit.

221. A digital image reproduction apparatus according to any of claims 216 through 220, wherein:
the display data creation unit modifies the display data in conformance to an operation at the operating unit performed with regard to the display data displayed at the display unit.

222. A digital image reproduction apparatus comprising:
a storage unit in which image data are stored;
an instruction unit that issues an instruction with regard to image data in the storage unit;
an image display unit; and
a display data creation unit that creates display data for display at the image display unit based upon the image data while preventing any degradation of image quality attributable to the instruction issued through the instruction unit.

223. A digital image reproduction apparatus according to claim 222, wherein:
the display data creation unit creates the display data by reducing the number of pixels constituting the image data.

224. A digital image reproduction apparatus according to claim 223, wherein:
if the instruction issued by the instruction unit indicates a reduction in the number of pixels constituting the image data, the display data creation unit creates the display data from the image data by lowering an extent to which the number of pixels constituting the image data is reduced.

225. A digital image reproduction apparatus according to claim 224, wherein:
the instruction issuedby the instruction unit indicates that only a portion of an entire image area corresponding to the image data is to be used.

226. A digital image reproduction apparatus according to claim 224, wherein:
the instruction issued by the instruction unit indicates that the image data are to be recorded with a smaller number of recording pixels.

227. A digital image reproduction apparatus according to any of claims 222 through 226, further comprising:
a loading unit, wherein:
the storage unit is a detachable storage medium loaded at the loading unit.

228. A program that achieves a function according to any of claims 198 through 227.
